(19) Europäisches Patentamt / European Patent Office / Office européen des brevets

(11) **EP 1 972 801 B1**

(12) **EUROPEAN PATENT SPECIFICATION**

(45) Date of publication and mention
of the grant of the patent:
**16.03.2016 Bulletin 2016/11**

(21) Application number: **07706685.0**

(22) Date of filing: **12.01.2007**

(51) Int Cl.:
**F16C 33/38** *(2006.01)*

(86) International application number:
**PCT/JP2007/050343**

(87) International publication number:
**WO 2007/080980 (19.07.2007 Gazette 2007/29)**

(54) **BALL BEARING FOR SPINDLE PIVOT SECTION OF MACHINE TOOL, AND SPINDLE PIVOT DEVICE OF MACHINE TOOL, USING THE SAME**

BALLLAGER FÜR DEN SPINDELDREHABSCHNITT EINES MASCHINENWERKZEUGS, UND SPINDELDREHVORRICHTUNG FÜR EIN MASCHINENWERKZEUG DAMIT

PALIER A BILLES POUR SECTION DE PIVOTEMENT DE BROCHE DE MACHINE-OUTIL, ET DISPOSITIF DE PIVOTEMENT DE BROCHE DE MACHINE-OUTIL ASSOCIE

(84) Designated Contracting States:
**DE**

(30) Priority: **13.01.2006 JP 2006006378**
**26.04.2006 JP 2006122344**
**04.08.2006 JP 2006213485**
**13.09.2006 JP 2006247490**
**14.12.2006 JP 2006337342**
**15.12.2006 JP 2006338552**

(43) Date of publication of application:
**24.09.2008 Bulletin 2008/39**

(73) Proprietor: **NSK Ltd.**
**Tokyo 141-8560 (JP)**

(72) Inventors:
• **KATSUNO, Yoshiaki**
  **Fujisawa-shi, Kanagawa 251-8501 (JP)**
• **AOKI, Mitsuho**
  **Fujisawa-shi, Kanagawa 251-8501 (JP)**

(74) Representative: **Klingseisen, Franz**
**Klingseisen, Rings & Partner**
**Patentanwälte**
**Postfach 10 15 61**
**80089 München (DE)**

(56) References cited:
JP-A- 09 177 792     JP-A- 2001 193 744
JP-A- 2002 039 171   JP-A- 2004 092 687
JP-A- 2004 190 763   JP-A- 2005 239 258
JP-U- 06 032 744

**Description**

The present invention relates to a ball bearing for the spindle turning device of a machine tools, including milling machines, lathes, grinding machines and lapping machines for milling, lathing, grinding and lapping.

JP 2005239258 A discloses a cap attaching jig and a ball beating used for the jig wherein the ball bearing has a doss-section portion (B/H) of the shaft-orientations cross-section width of a face B of the ball bearing and radial cross-section height H being < (B/H) 0,60. The problem to be solved is to reduce fluctuations in twisting torque by restraining changes in a magnet interval caused by a gap between bearings.

In the case of a spindle turning device which drives the turning of the spindle in a machine tool such as a milling machine, a lathe or a grinding machine, the bearing to be incorporated into the rotation support unit of this spindle turning device is usually required to have the following functional features to achieve improvements in the working accuracy (in respect of circularity deviation, cylindricity deviation or dimensional accuracy of internal and external diameters, for instance), grade of the working faces (in respect of the gloss and cut texture of the working faces for instance) and the roughness of the working faces of the work materials.

(1) High accuracy (high rotational accuracy)
(2) High stiffness
(3) Low torque and low heat generation

In particular, machine tools having numerical control functions (so-called NC machine tools) constitute a great majority today, and even composite NC machine tools each consisting of an NC lathe augmented with the functions of a machining center has emerged in addition to NC machine tools, each capable of meeting various machining requires by itself, including NC lathes, NC milling machines and machining centers. Multifunctional machine tool such as machining centers and composite NC machine tools involve a greater variety of mechanical constituent elements than monofunctional machine tools and, moreover, a single machine occupies a greater floor area and a greater vertical space. For this reason, their constituent elements including bearings are required not only to have the functional features stated in (1) through (3) above but also to achieve further reductions in installation space.

For such multifunctional machine tools, multifunctionalization by turning the spindle to which a tool is to be fitted is contemplated, and bearings of the following types are currently used in the spindle turning device of such machine tool.

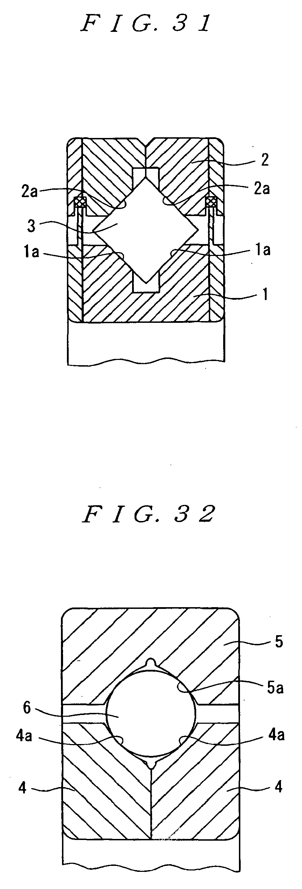

(1) Cross roller bearing (see Figure 31)

A cross roller bearing, having a configuration in which a large number of rollers 3 are rollably arranged between an inner ring 1 and an outer ring 2 as shown in Figure 31, can bear a radial load, axial loads and moment loads in both directions with a single bearing, and also permits space saving.

However, since the rolling element of a cross roller bearing are rollers and the rolling contact faces of the rollers 3 are in line contact with raceway grooves 1a and 2a, a large torque is apt to arise, and this torque often is uneven as a slight deformation that occurs when the bearing is incorporated onto a shaft or into a housing would destabilize the contact state of the line contact portions. Further, whereas preloading is often applied to a bearing used in the spindle turning device of a machine tool to enhance accuracy and stiffness, the torque unevenness due to deformation is even greater in such cases.

(2) Four-point contact ball bearing (see Figure 32)

A four-point contact ball bearing, having a configuration in which a large number of balls 6 are rollably arranged between an inner ring 4 and an outer ring 5 as shown in Figure 32, can bear a radial load, axial loads and moment loads in both directions with a single bearing, and also permits space saving.

As the rolling element of a four-point contact ball bearing are balls, when it is subjected to a purely axial load or when the axial load is dominant over the radial load, the torque is smaller than in a cross roller bearing of the same size; yet, when the radial load is dominant over the axial load or when it is subjected to a purely radial load, the balls 6 are apt to spin-slide in raceway grooves 4a and 5a as they are in contact with the raceway grooves 4a and 5a at four points, again a large torque is apt to occur. Moreover, as is the case with a cross roller bearing, preloading is often applied to this kind of bearing where it is used in the spindle turning device of a machine tool to enhance accuracy and stiffness; in this case, as the balls 6 are in contact with the inner and outer ring raceway grooves 4a, 5a at four points all the time, torque is further increased.

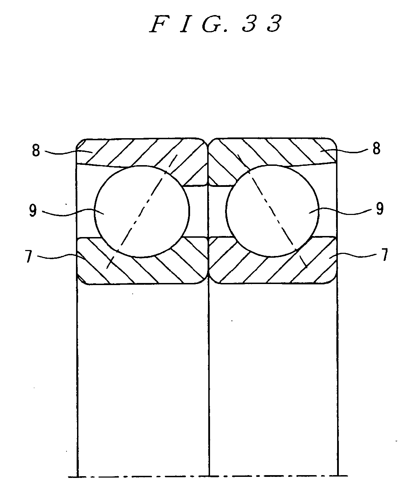

(3) Double row duplex ball bearing (see Figure 33)

A double row duplex ball bearing has a configuration combining two rows of angular contact ball bearings or the like in each of which a plurality of balls 9 are rollably arranged between raceway grooves of an inner ring 7 and an outer ring 8 as shown in Figure 33. A double row duplex ball bearing, though it permits a reduction in torque because its balls 9 are in contact with the raceway grooves of the inner ring 7 and the outer ring 8 at two points, requires twice as large a space in the axial direction as a single row bearing, and accordingly inferior to the cross roller bearing and the four-point contact ball bearing in its contribution to compactness.

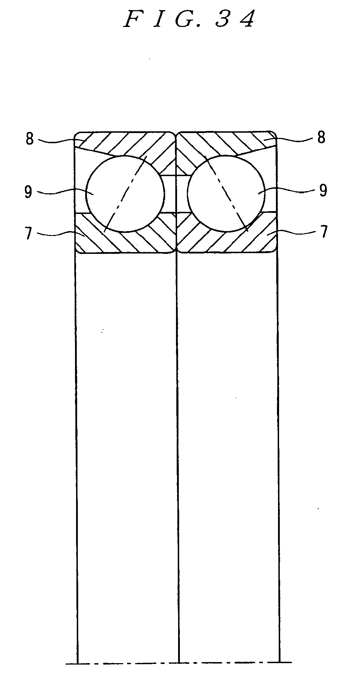

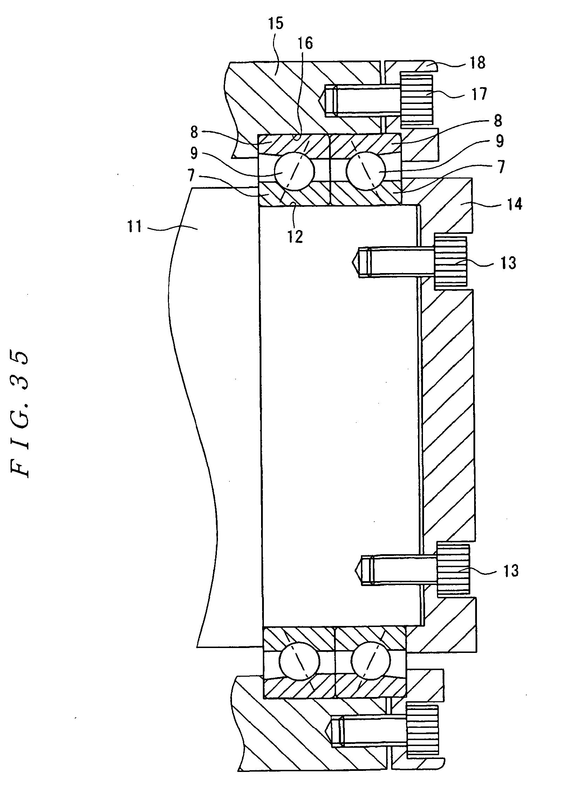

Further, some double row duplex ball bearings have configurations in which ultra-thin wall deep-groove ball bearings or angular contact ball bearings (see Figure 34) are combined with a view to space saving. Where a housing is to rotatably support a rotation shaft by using a double row duplex rolling bearing combining such ultra-thin wall ball bearings, usually the inner ring 7 of the double row duplex rolling bearing is snapped on to a step portion 12 formed at an end of a shaft 11 as shown in Figure 35, the inner ring 7 of the double row duplex rolling bearing is fixed to the rotation shaft 11 by suppressing the free end of this inner ring 7 with an inner ring fastening plate 14 fastened to an end of the shaft 11 with a bolt 13, and the outer ring 8 of the double row duplex rolling bearing is fixed to a housing 15 by snapping on the outer ring 8 of the double row bearing to a step ,portion 16 formed at an end of the housing 15 covering the rotation shaft 11 and suppressing the free end of this outer ring with an outer ring fastening ring 18 fastened to an end of the housing 15 with a bolt 17.

For this reason, ultra-thin wall deep-groove ball bearings or angular contact ball bearings shown in Figure 34 are used as double row duplex ball bearings to intervene between the rotation shaft 11 and the housing 15, there is a space saving advantage, but, because the rings walls of the inner ring 7 and the outer ring 8 are very thin to make the inner ring 7 and the outer ring 8 poor in stiffness and to make adequate working accuracy difficult to achieve (especially in respect of deviation from circular form); moreover, since the inner ring 7 and the outer ring 8 are snapped on to the rotation shaft 11 and the housing 15 and fixed to the rotation shaft 11 and the housing 15 by suppressing them with the inner ring fastening plate 14 and the outer ring bearing cap 18 as stated above, they are susceptible to deformation by the inner ring bearing cap 14 and the outer ring bearing cap 18 when the double row duplex rolling bearings are fitted, namely when they are snapped onto the rotation shaft 11 and the housing 15 or suppressed by the inner ring bearing cap 14 and the outer ring bearing cap 18, entailing more trouble in securing adequate assembly accuracy. Or in some cases, the raceway grooves of the inner ring 7 and the outer ring 8 may be distorted by deformation at the assembly process, deviated loads may work on contact portions between the balls 9 and the raceway grooves or smooth rolling of the balls 9 may be obstructed, resulting in a damage even in only a short period of operation.

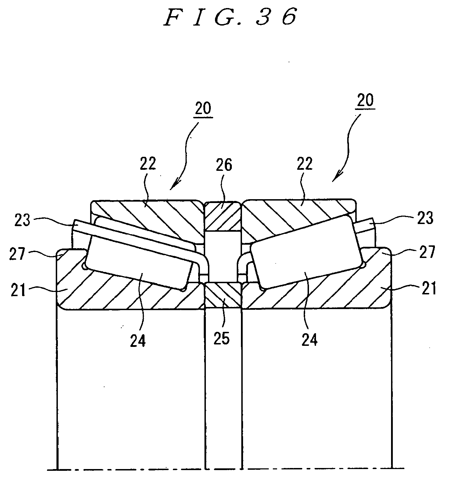

(4) Double row duplex conical roller bearing (see Figure 36)

A double row duplex conical roller bearing has a configuration in which two rows of conical roller bearings 20 in which a plurality of conical rollers 24 are rotatably arranged between an inner ring 21 and an outer ring 22 via a cage 23 are combined via an inner ring spacer 25 and an outer ring spacer 26 as shown in Figure 36. As the rolling elements of a conical roller bearing are rollers as in a cross roller bearing, the rolling contact faces of the rollers 24 with the raceway grooves are in line contact and the ends of the rollers 24 and the flange portion 27 of the inner ring 21 are in sliding contact, the torque increases and, moreover, twice as large a space in the axial direction is required as a single row bearing. Further, whereas preloading is often applied to a bearing used in the spindle turning device of a machine tool to enhance accuracy and stiffness, the torque is even greater in such cases.

Conventional spindle turning device of machine tool include, for instance, a spindle head disclosed in National Publication of International Patent Application 2004-520944 (hereinafter referred to as Patent Document 1) which is provided with a first half head which turns around a perpendicular first axis relative to the mechanical structure, a second half head which turns around a second axis relative to the first half head at a right angle to which is coupled to the first half head on an sloped plane inclined at 35° to a horizontal plane via a guide bearing to support a tool spindle, and a direct motor which individually turns the first half head and the second half head, wherein the tool spindle is capable of turning between two axes by turning the second half head from a state in which its center axis is perpendicular to a state in which the center axis of the tool spindle forms an angle of elevation to its horizontal plane.

Examples of turntable include a rotation indexing device which, as described in JP10-29125A (hereinafter referred to as Patent Document 2), has a table snapped via a distributor into a supporting shaft erected at the center of a base, wherein this table is rotatably supported on the base via a cross roller bearing and is driven for rotation by a worm gears or a direct motor to carry out rotation indexing.

Disclosure of the Invention

Thus, by using the configuration described in Patent Document 1 or Patent Document 2 cited above, it is made possible to produce a machining center for five-axis machining enabling the top face besides the four sides to be machined in various ways (capable of machining in one step any opposing faces other than the table installation face holding the work materials) or a composite machine combining the functions of an NC lathe and a machining center, and machine tools of this kind are increasing, but whichever of these configurations may be used, the performance of the support bearing which supports rotation exerts the greatest influence on the characteristics of the turning mechanism including rotation accuracy and stiffness.

In order to achieve either of these configurations, further space saving is required because the space occupied by constituent portions around the turning mechanism inevitably increases. Moreover, in order to save energy by minimizing the power required for rocking the whole spindle, it is also necessary to reduce the weight and inertia by making the turning mechanism more compact.

However, where a cross roller bearing, four-point contact ball bearing, double row duplex ball bearing, double row duplex conical roller bearing or the like is applied as the support bearing, troubles arise as stated above, and there is an unsolved problem that a ball bearing of the spindle turning device compatible with the current trend in favor of composite machine tools cannot be composed while maintaining or improving the functions of (1) through (3) stated above.

The present invention, attempted in view of the unsolved problems of these conventional cases, is intended to provide a ball bearing of the spindle turning device compatible with the current trend in favor of composite machine tools and a spindle turning device of a machine tool using the same while maintaining or improving the functions of (1) through (3) stated above.

In order to achieve the object stated above, a ball bearing for use in the spindle turning device of a machine tool, according to claim 1, the bearing being a single row ball bearing which is used in the spindle turning device of a machine tool wherin a large number of balls are rotatably arranged between the raceway groove of an outer ring and the raceway groove of an inner ring is characterized in that the sectional size ratio (B/H) between an axially cut sectional width B and a radially cut sectional height H is (B/H) < 0.63.

A ball bearing for use in the spindle turning device of a machine tool is characterized in that a seal accommodating groove is formed in at least one end face between the outer ring and the inner ring; annular seals are arranged in the seal accommodating grooves; a cage for positioning the large number of balls in the circumferential direction is arranged; in the cage a circular ring portion is formed on each side in the axial direction of a pocket for holding the number of balls; the circular ring portion has as the guide face thereof one of the outer circumferential face of the inner ring and the inner circumferential face of the outer ring; and, in a position opposite the intersection edge between the guide face and the seal accommodating grooves, a concave groove for averting contact with the intersection edge is formed in the circumferential direction.

Further, a spindle turning device of a machine tool is characterized in that it is provided with the ball bearing for use in the spindle turning device of a machine tool according to claim 1 on the spindle turning device for turning the spindle.

Further, a ball bearing for use in the spindle turning device of a machine tool, the bearing being a double row ball bearing wherein a large number of balls are rotatably arranged between the raceway groove of an outer ring and the raceway groove of an inner ring, is characterized in that the sectional size ratio (B2/H2) between an axially cut sectional width B2 and a radially cut sectional height H2 is (B2/H2) < 1.2.

Further, a spindle turning device of machine tool is provided with the ball bearing for use in the spindle turning device on the spindle turning device for turning the spindle.

In a single row ball bearing 100 according to claim 1 of the invention, a number of balls 103 are rotatably arranged between a raceway groove 101a of an outer ring 101 and a raceway groove 102a of an inner ring 102, and the sectional size ratio (B/H) between an axially cut sectional width B and a radially cut sectional height H (= (outer ring outer diameter D - inner ring inner diameter d)/2) is set to be (B/H) < 0.63.

The reason why the sectional size ratio (B/H) is set to (B/H) < 0.63 according to claim 1 of the invention here is as follows.

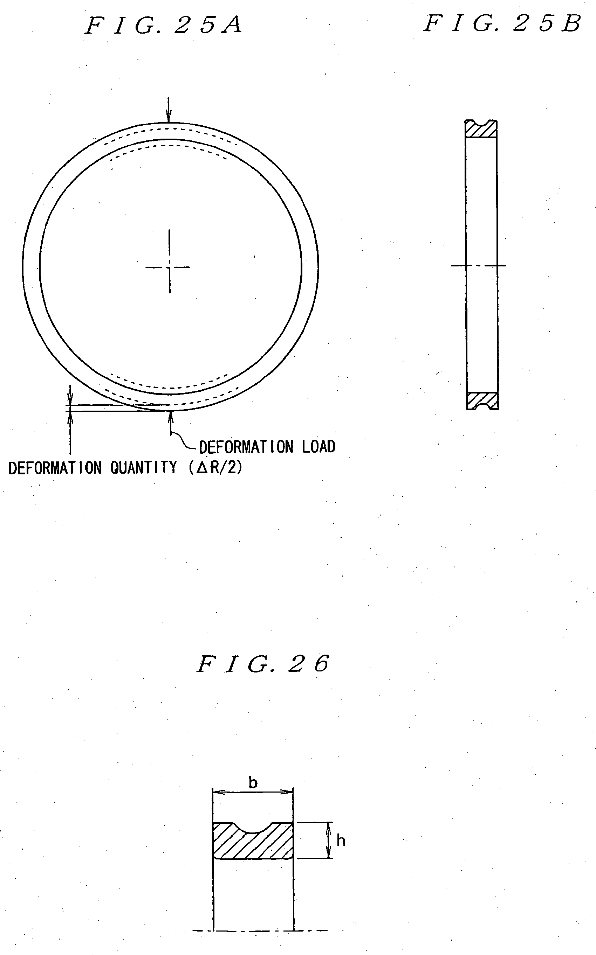

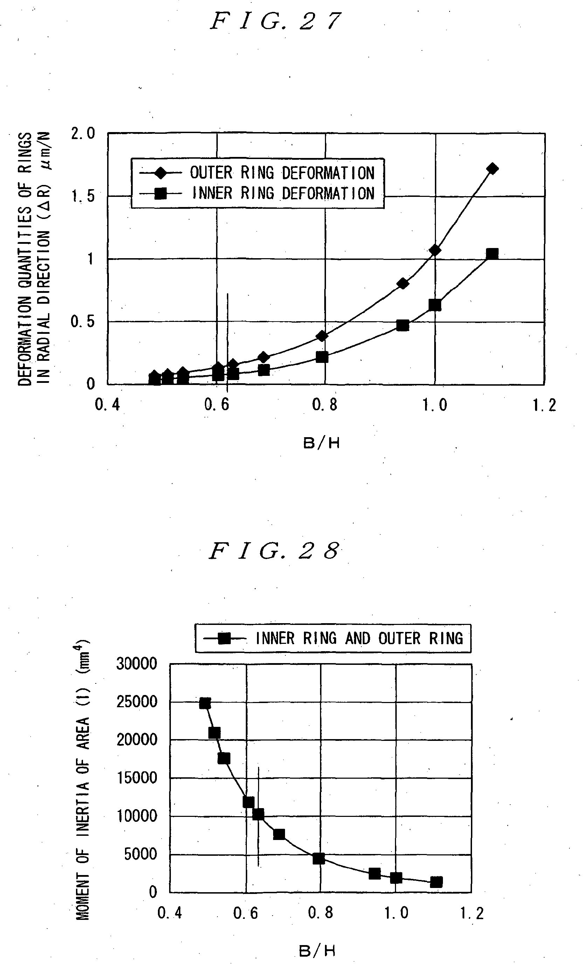

Thus, Figure 27 and Figure 28 show the results of comparison of the deformation characteristics in the radial direction of the inner ring and the outer ring when the inner diameter of the bearing is varied (namely when the value of (B/H) is varied) without changing the outer diameter of the bearing and the bearing width with reference to an ultra-thin wall deep-groove ball bearing used as a standard item (the inner diameter of the bearing: $\phi$203.2 mm, outer diameter of the bearing: $\phi$254 mm, bearing width: 25.4 mm, aforementioned sectional size ratio (B/H) = 1) (see Figures 25A amd 25B where the inner ring is shown) and moment of inertia of area I in the radial direction (see Figure 26): I = $bh^3/12$).

These Figure 27 and Figure 28 reveal a significant variation in the gradient of the stiffness increase rate where (B/H) is less than 0.63. Thus, the increase of the moment of inertia of area I becomes significant, and the decreases of the deformation quantities of the inner and outer rings in the radial direction become saturated.

Therefore, the invention enables deformation of the bearing by the forming loads of lathing or grinding at the time of inner and outer ring fabrication which poses problems with conventional ultra-thin wall bearings to be prevented, and the accuracy of bearings in such aspects as circularity and eccentric thickness to be enhanced.

When assembled into a shaft or a housing (especially when assembled into a shaft or a housing by clearance fitting), the deformation of the inner and outer rings when bearing fixed with an inner ring bearing cap or an outer ring bearing cap (particularly the deterioration of its circularity) can be restrained, and increased heat generated, wear, seizure and other troubles in addition torque defects and deterioration in rotation accuracy invited by the deformation can be prevented.

In other words, the invention is unlike ultra-thin wall ball bearings in conventional use, both space saving and accuracy enhancement can be achieved at the same time.

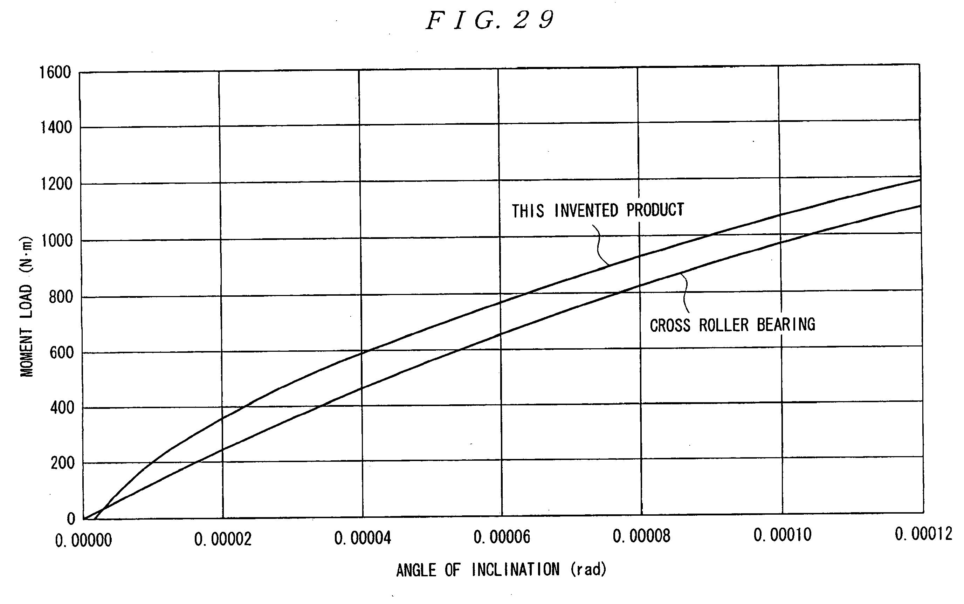

Figure 29 shows comparative data of the angles of relative inclination of the inner and outer rings regarding this invented product of a duplex ball bearing of two row back-to-back arrangement of a single row type and a cross roller bearing when a moment load is applied to each bearing. Here, the main dimensions of the measured bearings are:

    Invented product

        Inner ring inner diameter: $\phi$170
        Outer ring outer diameter: $\phi$215
        Unit width: 13.5 mm
        Pitch diameter of rolling elements: $\phi$192.5
        Contact angle: 35°
        (B/H = 0.60)

    Cross roller bearing

        Inner ring inner diameter: $\phi$130
        Outer ring outer diameter: $\phi$230
        Assembled width: 30 mm
        Pitch diameter of rolling elements: $\phi$189.7

As is evident from this Figure 29, regarding both this invented product and the cross roller bearing the pitch diameters of whose rolling elements are substantially equal, it was confirmed from the comparative data of moment stiffness that the invented product maintained an approximately 1.3 times greater moment stiffness than the cross roller bearing.

In addition to the experiment described above, after the invented product and the cross roller bearing were assembled into shafts and housings, they were turned by (belt-driven) motors at low speed; while the invented product turned smoothly without rotation unevenness, rotation unevenness due to torque fluctuations was actually observed of the cross roller bearing.

On the other hand, for standard ball bearings whose dimension series prescribed by the International Organization for Standardization (ISO) are 18 (e.g. 6820), 19 (e.g. 6924), 10 (e.g. 6028), 02 (e.g. 7224A) and 03 (e.g. 7322A), in the bearing inner diameter range of $\phi$5 mm to $\phi$500 mm, the sectional size ratio (B/H) is set to between 0.63 and 1.17.

Therefore, by setting the sectional size ratio (B/H) to about 1/2 times the maximum of 1.17 for these ball bearings, namely to less than 0.63, two rows of ball bearings according to claim 1 can be combined in combination for ball bearings even narrower than the narrowest conventional standard single row ball bearing and within a space in the axial direction for the conventional standard single row ball bearing.

If, for instance, the sectional size ratio (B/H) of a conventional ball bearing is (B/H) = 0.9, the sectional size ratio (B/H) of the bearing according to the invention can be set to (B/H) = 0.45. In this example, the bearing sectional size ratios (B/H) of the two rows of ball bearings to be combined need not be the same; the ratio may be 0.50 for one and 0.40 for the other, for instance.

Incidentally, though it is difficult for a single row ball bearing to bear preloading or a moment load by itself, by combining two or more rows the bearings are enabled to bear a radial load, axial load and moment load.

Moreover, as each ball is in contact with the raceway groove of the inner or outer ring at two points all the time, this bearing can restrain the increase of torque due to large spins of balls as a four-point contact ball bearing does and, as it is less in rolling resistance than a cross roller bearing or a double row duplex conical roller bearing, can achieve a reduction in torque.

Furthermore, as the width is about half that of the conventional standard single row ball bearing, the ball diameter is about half that of the conventional ball bearing, and conversely the number of balls per row increases to make this bearing more rigid than the conventional ball bearing. Also, when it is used as the spindle turning device of a machine tool, as the condition of rotation is rocking, even if the reduced ball diameter brings down the load capacity of the bearing, the rolling fatigue life time would pose no practical problem.

In a single row ball bearing according to claim 2 of the invention, a seal accommodating groove is formed in at least one end face between the outer ring and the inner ring; as annular seals are arranged in these seal accommodating grooves and when a cage for positioning the large number of balls in the circumferential direction and, in a circular ring portion having as its guide face one of the outer circumferential face of the inner ring and the inner circumferential face of the outer ring formed on the two sides in the axial direction of a pocket for holding the number of balls in the cage, a concave groove is formed in the circumferential direction in a position opposite the intersection edge between the guide face and the seal accommodating grooves so that, even if the bearing has only a narrow width, the concave groove averts the edge contact between the circular ring portion of the cage and intersection edge, thereby avoiding the wear of the circular ring portion due to the edge contact to be securely prevented.

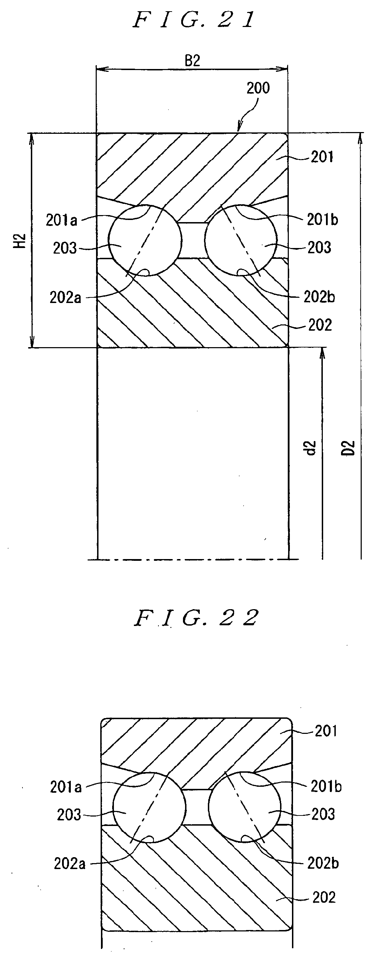

In a double row ball bearing 200 according to claim 3 of the invention, with reference to Figure 21 for instance, a large number of balls 203 are rotatably arranged between double row raceway grooves 201a and 201b of an outer ring 201 and double row raceway grooves 202a and 202b an inner ring 202, and the sectional size ratio (B2/H2) between an axially cut sectional width B2 and a radially cut sectional height H2 (= (outer ring outer diameter D2 - inner ring inner diameter d2)/2) is set to be (B2/H2) < 1.2.

By setting the sectional size ratio (B2/H2) in the double row ball bearing as stated above, as in a case where two single row narrow width ball bearings according to claim 1 are combined, it is made possible to arrange the double row ball bearing according to claim 3 in the axial width space of the conventional standard single row ball bearing, and further to bear a preload or to be subjected to an additional moment load. Other actions and effects are the same as where two single row narrow width ball bearings according to claim 1 are combined.

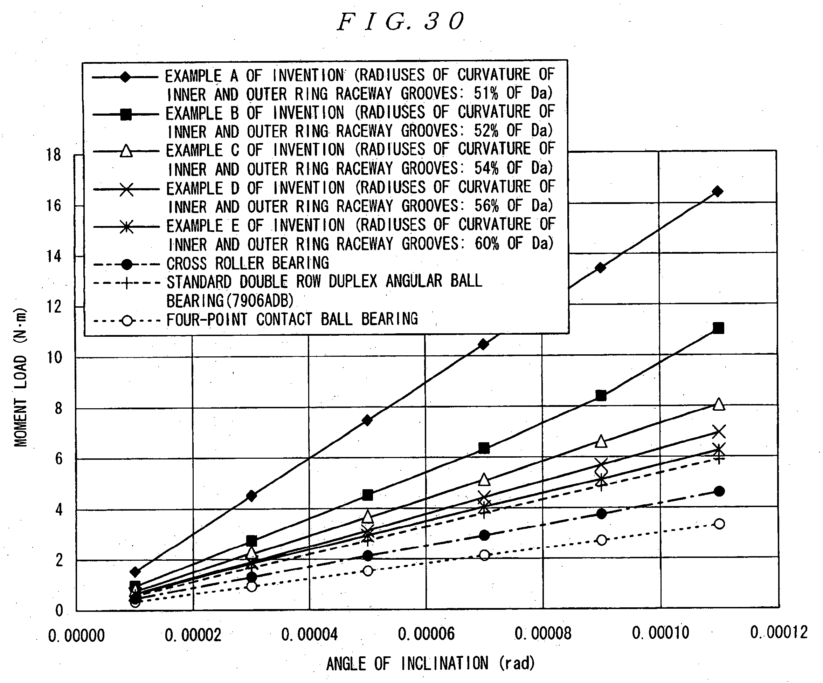

Figure 30 compares the calculated moment stiffness counts of different bearings. If the size is the same (the calculated cases have equal inner and outer diameters, corresponding to the bearing identification sign of 7906A (30° in contact angle): $\phi$30 mm inner ring inner diameter and $\phi$47 mm in outer ring outer diameter), in every one of examples A through E of the invention in which two single row narrow width angular contact ball bearings according to claim 1 (30° in contact angle: a calculated case of all ball bearings) are combined and the radiuses of curvature of the raceway grooves the inner and outer rings are varied, the moment stiffness is greater than in cross roller bearings, standard double row duplex angular contact ball bearings and four-point contact ball bearings. For instance in example B of the invention, a moment stiffness level that is 2.4 times that in cross roller bearings, 1.9 times that in standard double row duplex angular contact ball bearings and 3.3 times that in four-point contact ball bearings can be maintained.

Incidentally, the moment stiffness(figure 30) is calculated as the designed preload gap of each for a standard value for practical use to be -0.010 mm for examples A through E.of the invention, the standard double row duplex angular ball bearing and the four-point contact ball bearing, and -0.001 mm for the cross roller bearing (if a preload gap smaller than -0.001 mm is set for the cross roller bearing, the torque may become too great, prohibitively for practical use).

To add, while the appropriate ball diameter for the narrow width ball bearings according to the invention varies with the presence or absence of seals and some other items, an extreme reduction in ball diameter to increase stiffness would increase the facial pressure between the balls and the contact portions of the raceway grooves of the inner and outer rings to invite a drop in resistance to indentation; therefore, a range of approximately 30% to 90% of the bearing width (B) or (B2/2) is desirable.

Further, whereas the contact angle of the bearing is selected according to the required type of stiffness (e.g. moment stiffness) and the required torque where the invention is applied to an angular ball bearing, it is desirable to be in a range of approximately 10 to 60°.

The contact angle between the combined single row bearings or between the combined rows in the case of a double row bearing may as well be varied as required according to the direction and magnitude of the load.

Furthermore, it is desirable for the radiuses of curvature of the raceway grooves of the inner and outer rings to be 51 to 60% of Da (Da: ball diameter), preferably 52 to 56% of Da and more preferably 52 to 54% Da according to the required type of stiffness or torque characteristics. The radiuses of curvature of the raceway grooves of the inner and outer rings need not be the same, but may be different between the single row bearings or between the rows of the double row bearing that are combined.

According to the invention, in a ball bearing for spindle turning device of a machine tool, by setting the sectional size ratio (B/H) between the axially cut sectional width B and the radially cut sectional height H is set to be (B/H) < 0.63 where it is a single row ball bearing or the sectional size ratio (B2/H2) between the axially cut sectional width B2 and the radially cut sectional height H2 (B2/H2) < 1.2 where it is a double row ball bearing, not only can a radial load, a moment load and axial loads in both directions be borne, but also can higher accuracy (higher rotational accuracy), greater stiffness and reductions in torque and heat generation be achieved, and a further effect of space saving can be realized. In addition, by configuring a spindle turning device by applying the ball bearing for spindle turning device providing these effects to the spindle turning unitdevice, the spindle turning device itself can also achieve space saving.

Brief Description of the Drawings

Figure 1 is a profile of a spindle turning device of machine tool having the essential part thereof as its section according to the present invention in its first embodiment (corresponding to claim 1 or 2);

Figure 2 is a profile of a modification of a spindle turning device of machine tool having the essential part thereof as its section according to the invention in its first embodiment (corresponding to claim 1 or 3);

Figure 3 is a sectional view of a single row angular contact ball bearing representing a ball bearing of a spindle turning device according to the invention in its first embodiment;

Figure 4 is a sectional view of the essential part of a state in which two rows of the single row ball bearings of Figure 3 are combined;

Figure 5 is a sectional view of the essential part of a state in which two rows of the single row ball bearings which is another form of the first embodiment the invention are combined;

Figure 6 is a sectional view of the essential part of a state in which two rows, one being the single row ball bearing of Figure 3 and the other being a single row ball bearing in another embodiment, are combined;

Figure 7 is a sectional view of the essential part of a state in which two rows of single row ball bearings in another form of the first embodiment of the invention are combined;

Figure 8 is a sectional view illustrating the essential part of the single row ball bearing which is another form of the first embodiment of the invention;

Figure 9 is a sectional view of the essential part of a state in which three rows of the single row ball bearings of Figure 3 are combined;

Figure 10 is a sectional view of the essential part of a state in which four rows of the single row ball bearings of Figure 3 are combined;

Figure 11 is a sectional view of the essential part of a state in which two rows of the single row ball bearings of Figure 3 combined face-to-face;

Figure 12 is a sectional view of the essential part of a state in which two rows of the single row ball bearings in another form of the first embodiment of the invention are combined;

Figure 13 is a sectional view of a cage in the radial direction;

Figure 14 is a partial perspective view of the cage seen from inside in the radial direction;

Figure 15 is a view in the direction of arrow B in Figure 13;

Figure 16A shows a view in the direction of arrow A in Figure 13 and Figure 16B, a modified form of Figure 16A.

Figure 17 is a sectional view illustrating the essential part of a single row ball bearing for a spindle turning device of machine tool as a modification of the first embodiment of the invention (corresponding to claim 2);

Figure 18 is a sectional view illustrating the essential part of a single row ball bearing for a spindle turning device of machine tool;

Figure 19 is a sectional view illustrating the essential part of a modification of the single row ball bearing for a spindle turning device of machine tool;

Figure 20 is a sectional view illustrating the essential part of a single row ball bearing for a spindle turning device of machine tool as another modification of the first embodiment of the invention;

Figure 21 is a sectional view illustrating the essential part of a double row ball bearing for a spindle turning device of machine tool according to the invention in its second embodiment of the invention(corresponding to claim 3);

Figure 22 is a sectional view illustrating the essential part of a double row ball bearing in another form of the second embodiment of the invention;

Figure 23 is a sectional view illustrating the essential part of the double row ball bearing in another form of the second embodiment of the invention;

Figure 24 is a sectional view illustrating the essential part of the double row ball bearing in another form of the second embodiment of the invention;

Figures 25A and 25B are diagrams illustrating the quantity of deformation of an inner ring in the radial direction;

Figure 26 is a diagram illustrating the method of calculating the moment of inertia of area of the inner ring;

Figure 27 is a graph showing the relationship between the sectional size ratio (B/H) and the quantities of deformation of the inner and outer rings in the radial direction;

Figure 28 is a graph showing the relationship between the sectional size ratio (B/H) and the moment of inertia of area I;

Figure 29 is a graph comparatively showing the moment stiffness values of the invented product and of the cross roller bearing;

Figure 30 is a graph comparatively showing the calculated moment stiffness values of various bearings;

Figure 31 is a sectional view of the essential part of a cross roller bearing;

Figure 32 is a sectional view of the essential part of a four-point contact ball bearing;

Figure 33 is a sectional view of the essential part of a conventional double row duplex angular contact ball bearing;

Figure 34 is a sectional view of the essential part of a conventional ultra-thin wall double row duplex angular contact ball bearing;

Figure 35 is a sectional view of the conventional ultra-thin wall double row duplex angular contact ball bearing in a state of being fitted to the shaft;

Figure 36 is a sectional view of the essential part of a conventional double row duplex conical roller bearing;

Figures 37A and 37B are drawings illustrating a conventional angular ball bearing;

Figure 38 is a sectional view illustrating the essential part of a single row angular ball bearing which is one example of a first form of a third embodiment of the invention;

Figure 39 is a sectional view of the essential part of a state in which two rows of the single row angular ball bearings of Figure 38 are combined;

Figure 40 is a graph showing the relationship between the sectional size ratio (B/H) and the quantities of deformation of the inner and outer rings in the radial direction;

Figure 41 is a graph showing the relationship between the sectional size ratio (B/H) and the moment of inertia of area I;

Figures 42A and 42B are diagrams illustrating the quantity of deformation of an inner ring in the radial direction;

Figure 43 is a diagram illustrating the method of calculating the moment of inertia of area of the inner ring;

Figure 44 is a graph showing the relationship between the sectional size ratio (B/H) and the quantities of deformation of the inner and outer rings in the radial direction;

Figure 45 is a graph showing the relationship between the sectional size ratio (B/H) and the moment of inertia of area I;

Figure 46 is a graph comparatively showing the calculated moment stiffness values of various bearings;

Figure 47 is a sectional view for illustrating the essential part of a single row angular ball bearing which is the first form of the third embodiment of the invention;

Figure 48 is a sectional view for illustrating the essential part of the single row angular contact ball bearing which is the first form of the third embodiment of the invention;

Figure 49 is a sectional view for illustrating the essential part of the single row angular contact ball bearing which is a modified example of the first form of the third embodiment of the invention;

Figure 50 is a sectional view for illustrating the essential part of the single row angular contact ball bearing which is another modified example of the first form of the third embodiment of the invention;

Figure 51 is a sectional view of the essential part of a state in which two rows of single row angular contact ball bearings in another example of the first form of the third embodiment of the invention are combined;

Figure 52 is a sectional view of a cage in the radial direction;

Figure 53 is a partial perspective view of the cage seen from inside in the radial direction;

Figure 54 is a sectional view for illustrating the essential part of a double row angular contact ball bearing which is one example of a second form of a third embodiment of the invention;

Figure 55 is a sectional view of a conventional deep-groove ball bearing;

Figure 56 is a perspective view of the cage in Figure 55;

Figure 57 is a sectional view along line B-B in Figure 55;

Figure 58 is a sectional view along line A-A in Figure 55;

Figure 59 is a sectional view of a conventional angular ball bearing;

Figure 60 is a profile of the cage in Figure 59;

Figure 61 is a sectional view for illustrating the essential part of a combined ball bearing using a back-to-back combination, which is a first form of a fourth embodiment of the invention;

Figure 62 is a graph showing the relationship between the sectional size ratio (B/H) and the quantities of deformation of the inner and outer rings in the radial direction;

Figure 63 is a graph showing the relationship between the sectional size ratio (B/H) and the moment of inertia of area I;

Figures 64A and 64B are diagrams illustrating the quantity of deformation of an inner ring in the radial direction;

Figure 65 is a diagram illustrating the method of calculating the moment of inertia of area of the inner ring;

Figure 66 is a graph showing the relationship between the sectional size ratio (B/H) and the quantities of deformation of the inner and outer rings in the radial direction;

Figure 67 is a graph showing the relationship between the sectional size ratio (B/H) and the moment of inertia of area I;

Figure 68 is a graph comparatively showing the calculated moment stiffness values of various bearings;

Figure 69 is a sectional view of a cage in the radial direction;

Figure 70 is a partial perspective view of the cage seen from inside in the radial direction;

Figure 71 is an arrowed view seen in the direction of arrow Y in Figure 69;

Figure 72 is a sectional view along line Z-Z in Figure 69;

Figure 73 is a drawing illustrating the action that takes place when the cage moves in the axial direction;

Figure 74A is an arrowed view seen in the direction of arrow X in Figure 69 and Figuire 74B, an arrowed view of a modified form of Figure 74A;

Figure 75 is a sectional view of the essential part of Figure 61 in a state in which grease is sealed in;

Figure 76 is a sectional view of the essential part of combined bearings combined face-to-face;

Figure 77 is a sectional view of the essential part of another example of annular seal; and

Figure 78 is a sectional view for illustrating the essential part of a double row angular contact ball bearing which is a fifth form of the fourth embodiment of the invention.

Best Mode for Carrying Out the Invention

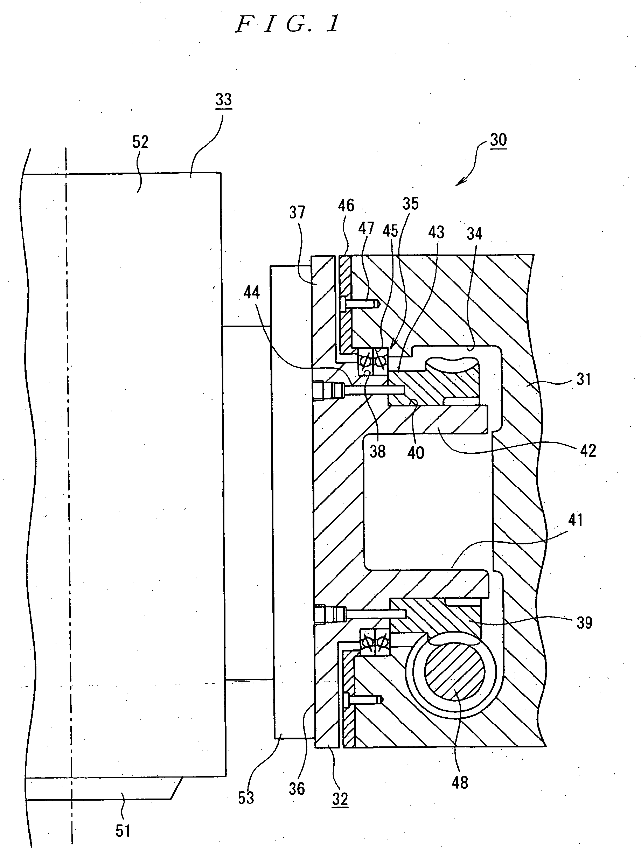

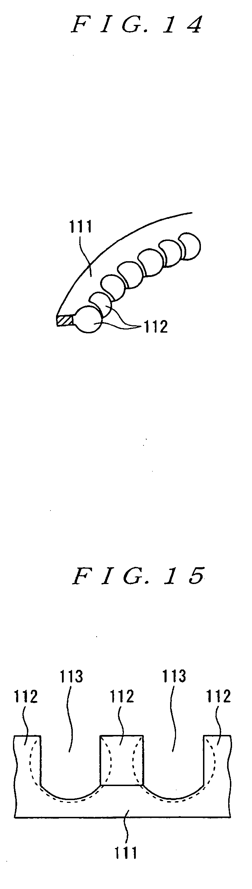

Forms of a first mode for carrying out the invention will be described below with reference to Figure 1 through Figure 24.

Figure 1 is a profile of a spindle turning device of machine tool having the essential part thereof as its section according to the invention in its first embodiment (corresponding to claim 1 or 3) when applied to, for instance, to a machining center for five-axis machining.

In the drawings, reference numeral 30 designates a spindle turning device of machine tool, which is provided with a base 31 fixed to the fixed part of a machining center, a turning pedestal 32 rotatably supported by this base 31, and a spindle unit 33 fitted to this turning pedestal 32.

The base 31 has an accommodating concave 34, recessed rightward from the center of the left end face, for accommodating the turning pedestal 32, and the turning pedestal 32 is rotatably supported in this accommodating concave 34 via a ball bearing for spindle turning device 35 according to the invention.

The turning pedestal 32 here has a disk portion 37 on which a flat fitting face 36 at the left end thereof opposite the left end face of the base 31 is formed, and a protruding portion 42 protruding from the right end of this disk portion 37, on which a step portion 38 for holding the inner ring of the ball bearing for spindle turning device 35 and a step portion 40 for holding a worm wheel 39 snapped onto it are formed and in which a concave 41 for reducing the weight is formed leftward from the right end of the central portion.

And by fastening with a bolt 44 an inner ring bearing cap 43 formed integrally with the worm wheel 39 in a state in which the inner ring of the ball bearing for spindle turning device 35 is engaged with the step portion 38, the inner ring of the ball bearing for spindle turning device 35 is fixed to the step portion 38.

On the other hand, the outer ring of the ball bearing for spindle turning device 35 is snapped onto a step portion 45 formed in the accommodating concave 34 of the base 31, and is fixed to the base 31 by, for instance, fastening an outer ring bearing cap 46 arranged toward the left end face of the base 31 with a bolt 47 inserted via a through hole (not shown) formed in the disk portion 37 of the turning pedestal 32.

Also, a worm 48 linked to a rotational driving power source, such as a motor, is engaged with the worm wheel 39 and, by rotationally driving this worm 48, the turning pedestal 32 can be caused to slightly turn (rock) the spindle unit 33 by about $\pm 100°$ in the back-and-forth direction when the tool fitting face of the spindle unit 33, to be described afterwards, is at 0° perpendicularly downward for instance.

Further, the spindle unit 33 has a spindle 52 having a built-in rotational driving power source for turning a tool, with a tool fitting face 51 to which a jigging tool (not shown) such as an end mill or a drill is to be fitted directed downward, and a fitting plate portion 53 bolted onto the fitting face 36 of the disk portion 37 of the turning pedestal 32 integrally formed on the side face of this spindle 52.

Next, the operation of this first embodiment will be described.

Now in a state in which, for instance, the spindle unit 33 has positioned the tool fitting face 51 at 0° perpendicularly downward as shown in Figure 1, a jigging tool such as an end mill or a drill is fitted to the tool fitting face 51 of the spindle 52, and cutting operation as an upright machining center can be accomplished by moving the jigging tool and the work relative to each other in a state in which it is rotationally driven at high speed by the built-in rotational driving power source.

After this cutting is completed, by turning the worm 48 forward, for instance, with a rotational driving power source not shown thereby to turn the turning pedestal 32 forward by +90°, the spindle unit 33 is turned forward by +90° to achieve a state in which the jigging tool faces forward, and cutting operation as a lateral machining center can be achieved by moving the jigging tool and the work relative to each other in this state.

Similarly, by moving the jigging tool and the work relative to each other after the worm 48 is rotationally driven backward with the rotational driving power source to turn the turning pedestal, for instance, the turning pedestal 32 and the spindle unit 33 backward by -90°, cutting operation as a lateral machining center can be achieved.

By applying the ball bearing for spindle turning device 35 according to the invention to the spindle turning device of the spindle turning device 30 in this way, as will be described afterwards, the ball bearing for spindle turning device 35 is enabled not only to bear a radial load, axial loads and moment loads in both directions, but also to achieve higher accuracy (higher rotational accuracy), greater stiffness and reductions in torque and heat generation, and to realize a further effect of space saving with the result that the spindle turning device 30 itself can also achieve space saving.

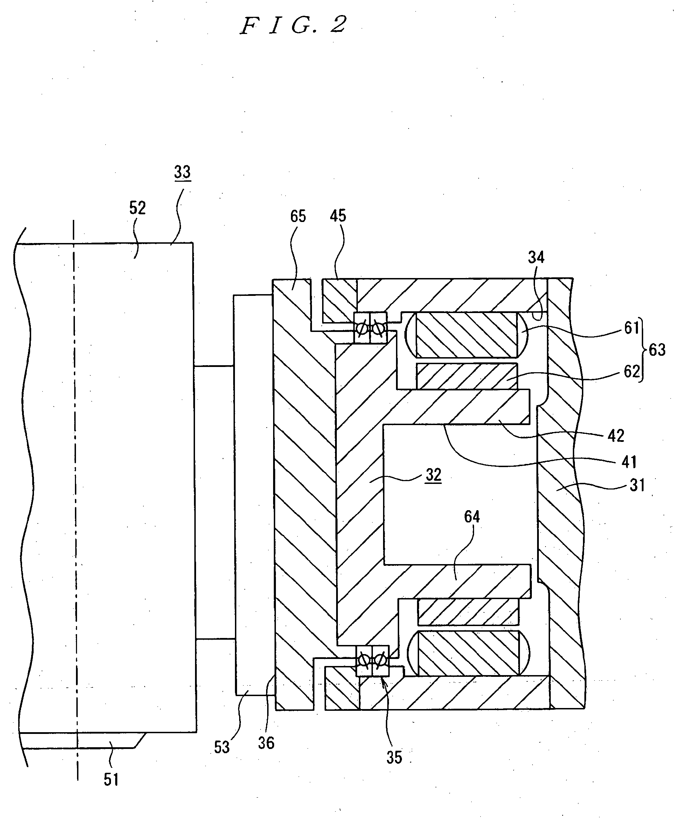

Incidentally, though a case in which the turning pedestal 32 is rotationally driven with worm gears was described above regarding the first embodiment, this is not the only possible case, but rotational driving can also be achieved with a bevel gear mechanism or some other gear mechanism, or even the worm wheel 39 and the worm 48 can be dispensed with as shown in Figure 2 to subject the pivoting pedestal 32 to direct rotational driving by a direct motor 63 comprising a stator 61 arranged on the inner circumferential face of the accommodating concave 34 of the base 31 and a rotor 62 arranged on the outer circumferential face of the protruding portion 42 of the pivoting pedestal 32 opposing the same.

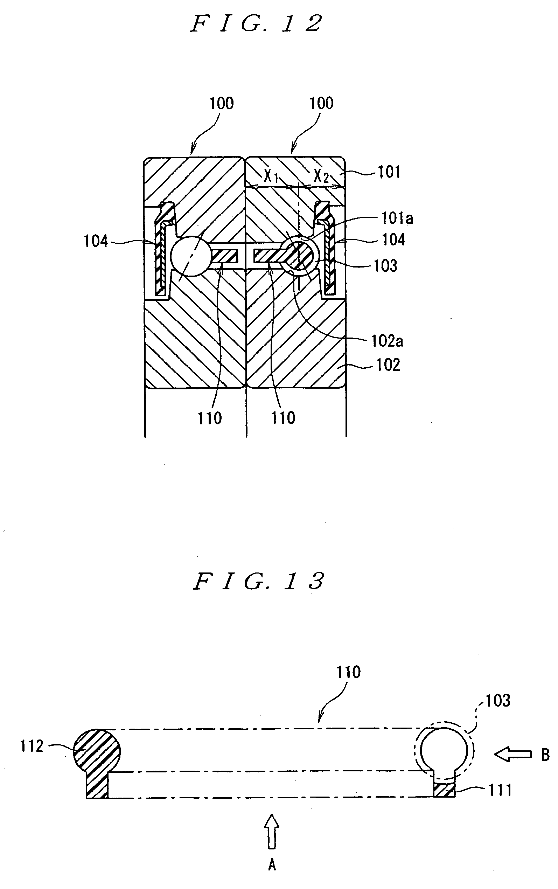

In the case of this Figure 2, it is preferable to use a ball bearing with a one-side seal and a cage to be described afterwards as the ball bearing for spindle turning device 35 and shown in Figure 12. Further, the turning pedestal 32 is formed of a base 64 holding the ball bearing for spindle turning device 35 and the rotor 62 and a fitting plate portion 65 which is bolted onto this base 64 and also serves as the inner ring bearing cap of the ball bearing for spindle turning device 35.

Here, the configuration of the direct motor 63 is not limited to the outer rotor type shown in Figure 2, but may as well be an inner rotor type in which the rotor is arranged on the inner circumferential face of the concave 41 of the protruding portion 42 and the stator is arranged within this rotor.

Also, a case in which the turning pedestal 32 is rotatably supported within the accommodating concave 34 formed in the base 31 was described with reference to the first embodiment, but this is not the only possible arrangement, but the turning pedestal 32 may as well be rotatably supported outside the base 31 via the ball bearing for spindle turning device 35 according to the invention.

Further, though the foregoing description of the first embodiment referred to a case of applying the invention to a machining center, this is not the only application, but the invention can also be applied to any composite type machine tool provided with a spindle turning device for turning the spindle to add the functions of a machining center to a lathe, milling machine, grinding machine, lapping machine or the like.

Nor is the spindle turning device 30 limited to the configuration described above, but any configuration in which the spindle body 33 is supported via a ball bearing for spindle turning device can be used.

Next, a specific example of the ball bearing for spindle turning device 35 according to the invention applied in the spindle turning device of the spindle turning device 30 will be described. The ball bearing for spindle turning device 35 is required (a) to rotate the spindle unit 33 installed on the turning pedestal 32 of the spindle turning device 30 with high accuracy (accuracy against run-out), (b) to smoothly rock the spindle unit 33 with low torque, and (c) to reduce the displacement of the whole spindle body against the load during machining a work (high stiffness). Also, the ball bearing for spindle turning device 35 is subject to a radial load, axial load and/or moment load dependent on the machining conditions occurring either alone or in combination in addition to the moment load due to the weight of spindle-related parts or the inertial load arising at the time of accelerating or decelerating the turning.

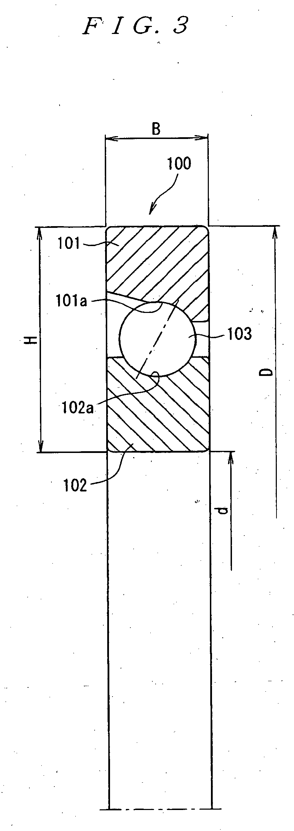

The ball bearing for spindle turning device in the first embodiment of the invention (corresponding claim 1) is shown in Figure 3. The ball bearing for spindle turning device (single row ball bearing) 100 shown therein is a single row full complement ball angular contact ball bearing 100 in which the number of balls 103 are rotatably arranged between the raceway groove 101a of an outer ring 101 and the raceway groove 102a of an inner ring 102, the sectional size ratio (B/H) between an axially cut sectional width B and a radially cut sectional height H (= (outer ring outer diameter D - inner ring inner diameter d)/2) is set to be (B/H) < 0.63. The reason for this setting is dispensed with here because it was described in detail with reference to Figure 29 in the section on the means to solve the problems noted above.

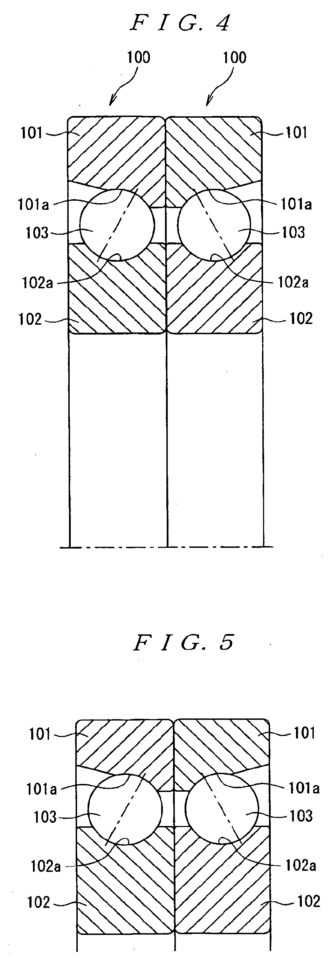

Regarding this embodiment, a case of replacing a double row angular contact ball bearing of 7940A (30° in contact angle) with two rows duplex angular contact ball bearings 100 being combined back to back as shown in Figure 4 will be considered here.

As the angular ball bearing of 7940A measures $\phi$200 mm in the inner diameter of the inner ring d, $\phi$280 mm in the outer diameter of the outer ring D and 38 mm in the sectional width in the axial direction (width of a single bearing) B, the sectional size ratio (B/H) is 0.95. Therefore, the angular contact ball bearing 100 in this embodiment has a sectional size ratio (B/H) = 0.475 (with the inner ring inner diameter and the outer ring outer diameter kept intact, the sectional width in the axial direction (width of a single bearing) B is supposed to be 19 mm). This make it possible not only to bear a radial load, axial loads and moment loads in both directions, but also to achieve higher accuracy (higher rotational accuracy), greater stiffness and reductions in torque and heat generation, and to realize a further effect of 1/2 space saving in the axial direction size.

Of course, it is acceptable to set, as required, the sectional size ratio (B/H) of the angular contact ball bearing 100 to less than 0.475 or above 0.475 (provided that (B/H) < 0.63). Incidentally, the contact angle of the angular contact ball bearing 100 is supposed to be 30° for instance.

Whereas the pitch circle diameter of the balls 103 is supposed to be as represented by (1) among the following equations in this embodiment, when it is desired to increase the number of balls per row of bearing to further raise the moment stiffness, equation (2) may be used to shift the pitch circle diameter of the balls 103 toward the outer ring to achieve the structure shown in Figure 5 or, conversely, equation (3) may be used as required to shift the pitch circle diameter of the balls 103 toward the inner ring 102 (not shown).

```
        Pitch circle diameter of balls = (Inner ring inner

   diameter + outer ring outer diameter)/2            ... (1)
```

$$\text{Pitch circle diameter of balls} > (\text{Inner ring inner}$$

$$\text{diameter} + \text{outer ring outer diameter})/2 \quad\quad \ldots (2)$$

$$\text{Pitch circle diameter of balls} < (\text{Inner ring inner}$$

$$\text{diameter} + \text{outer ring outer diameter})/2 \quad\quad \ldots (3)$$

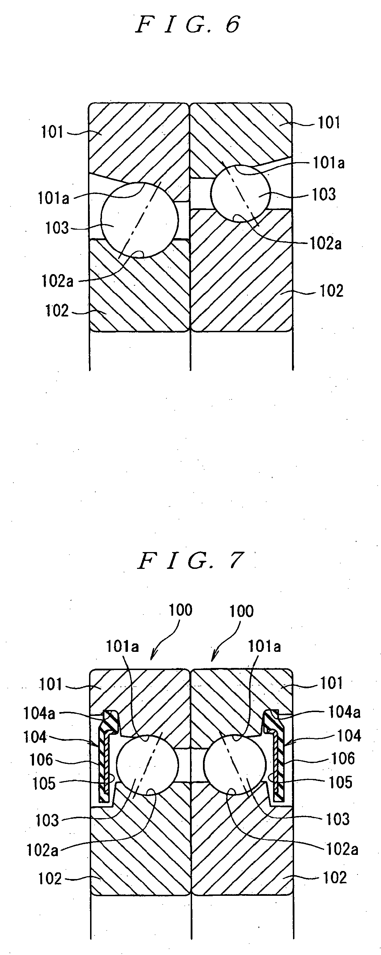

Also, as required, the pitch circle diameter may be differentiated between the right and left ball bearings to be combined or the diameter of the balls 103 may be differentiated between the right and left ball bearings to be combined shown in Figure 6. The sectional size ratio (B/H) of the two ball bearings to be combined need not be the same, but that of the bearing smaller in ball diameter may be (B/H) = 0.35 and that of the bearing larger in ball diameter may be (B/H) = 0.60 for instance. Further, the pitch of the balls 103 in the axial direction need not centered in the axial direction, but the pitch of the balls 103 in the axial direction may shifted in the axial direction depending on the presence or absence of seal or cage or to secure an adequate distance between the moment working points among other purposes.

Figure 7 shows two rows duplex the angular contact ball bearings 100 each fitted with an annular seal 104 at one end in the axial direction being combined back to back.

After two rows duplex the angular contact ball bearings 100 each fitted with the annular seal 104 at one end in the axial direction are combined and fitted to a machine or the like (combined with the seal-fitted face oriented outward), they can prevent foreign matter or dust from invading from outside and sealed grease from leaking out while the bearing is in use. The annular seal 104 in this embodiment is supposed to be a non-contact (not in contact with the inner ring 102) rubber seal (e.g. nitrile rubber, acryl rubber or fluorine rubber) 106 of a metal core bar 105-reinforced type, which is press-inserted into the seal storage groove 104a of the outer ring 101, and the annular seal 104 is fitted only on the side reverse to the combining end face with a view to space saving.

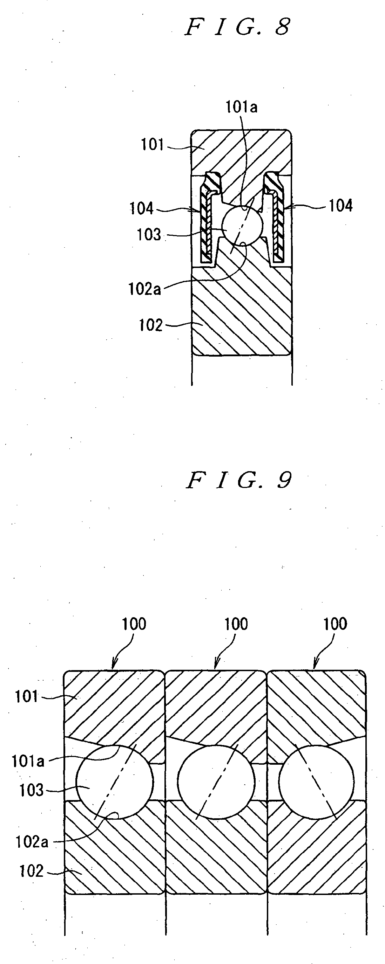

Figure 8 shows the angular contact ball bearing 100 fitted with the annular seal 104 at each of the two ends in the axial direction.

After the angular contact ball bearing 100 fitted with the annular seal 104 at each of the two ends in the axial direction is fitted to a machine or the like, it can prevent foreign matter or dust from invading from outside while the bearing is in use and, when the bearing is being handled or being assembled onto the shaft or into the housing, it can prevent foreign matter or dust from invading from outside and sealed grease from leaking out while the bearing is in use. Regarding the combination, in order to increase moment stiffness with two rows, it is desirable to use back-to-back combination which allows an adequate distance to be secured between the moment working points (where the contact angle is wider toward the bottom as shown in Figure 4 and elsewhere).

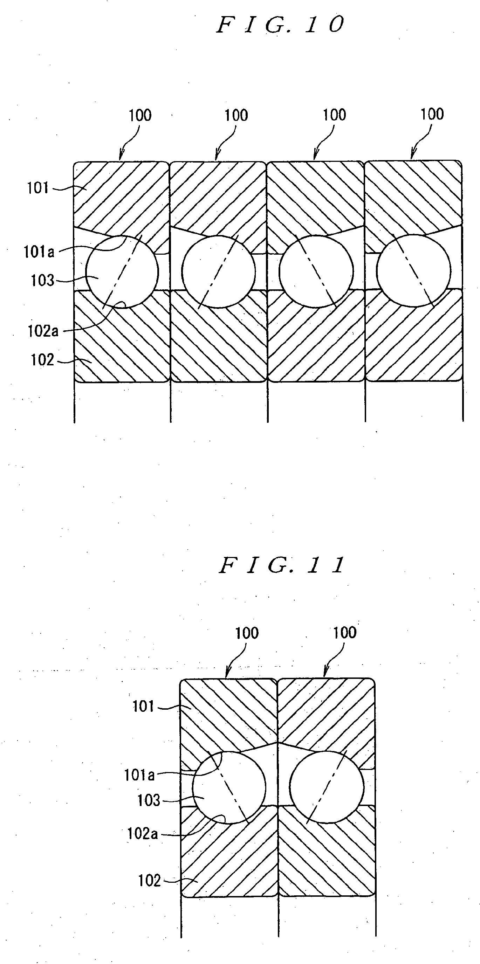

If even greater stiffness is required, three or more rows may be combined as shown in Figure 9 and Figure 10, or if it is desired to reduce moment stiffness for one reason or another (for instance where misalignment cannot be avoided when the bearing is to be incorporated, and accordingly it is desired to minimize the internal load in the bearing), face-to-face or some other combination may be arranged as shown in Figure 11 (where the contact angle is wider toward the top).

Or, though two or more rows duplex bearings have to be combined in order to add a moment load or axial loads on both, a single row bearing may be used if the load conditions and direction allow such use.

Further, though an angular contact ball bearing is used in this embodiment, a deep-groove ball bearing or some other ball bearing may be used as well. The annular seal need not be a non-contact type one as shown in Figure 7 and Figure 8, but a contact metal core bar-reinforced type rubber seal (the rubber may be, for instance, nitrile rubber, acryl rubber or fluorine rubber) may be used, or a metal shield plate to be caulked into the seal groove of the outer ring 101 may be used. Also, the annular seal may be press-inserted into the seal groove on the inner ring 102 side, or fitted by caulking (a structure either in contact or not in contact with the outer ring).

The material of the inner ring 102, the outer ring 101 and the balls 103 is supposed to be bearing steel (e.g. SUJ2 or SUJ3) under standard conditions of use, but an anticorrosive material, such as a stainless steel material (e.g. martensite type stainless steel such as SUS440C, austenite type stainless steel such as SUS304 or precipitation hardening stainless steel such as SUS630), a titanium alloy or a ceramic material (e.g. $S_{i3}N_4$, SiC, $Al_2O_3$ or $ZrO_2$), may as well be used depending on the environment of use.

There is no particular limitation regarding the lubricating method either, and mineral oil grease or synthetic (e.g. lithium- or urea-based) grease or oil can be used in a usual environment of use, and fluorine-based grease or fluorine-based oil, or a solid lubricant such as fluorine resin or $MoS_2$ can be used in a high temperature environment or the like.

Figure 12 shows a two row back-to-back combination of the angular contact ball bearings 100, of which each is fitted with the annular seal 104 at one end in the axial direction (the combined side end face and the other side end) and is provided with a cage 110 which rotatably holds the balls 103.

The cage 110 used may be, for instance, a flexible snap cage having a circular ring portion 111, pillar portions 112 protruding in the axial direction in a plurality of positions at substantially equal intervals in the circumferential direction at one end of the circular ring portion 111 and pocket portions 113 formed between the pillar portions 112 to hold the balls 103 to be rotatable in the circumferential direction as shown in Figure 13 through Figure 16A for instance. The material of the cage 110 is supposed to be a synthetic resin such as polyamide, polyacetal or polyphenylene sulfide, and a material consisting of a synthetic resin to which a reinforcing material such as glass fibers or carbons fibers are added is used as required.

In this embodiment, the pitch in the circumferential direction between adjoining balls 103 is narrowed to the practicable minimum and the number of balls is increased to the practicable maximum to enhance the load capacity and stiffness of the bearings. Further, the pitch of the balls 103 in the axial direction is shifted as close as practicable to the other side of the combined side end face (Figure 12: $X_1 > X_2$) to bring the circular ring portion 111 of the cage 110 toward the combined side end face of the bearings so that a long enough distance between the moment working points to raise moment stiffness can be secured.

Even in the case of full complement ball bearings, the pitch of balls in the axial direction may be shifted either rightward or leftward in the axial direction (toward the combined side end face of the bearings or the other side) instead of keeping it at the center as required, for instance depending on the presence or absence of an annular seal.

A bearing with a cage proves more effective in suppressing the torque and heat generation under conditions where fluctuations in the speed of revolution due to variations in the contact angles of balls are susceptible to the occurrence, such as where the rotation is continuous in one direction or a heavy moment load is at work, for purposes which are more susceptible to contact between balls or ball clogging where full complement ball bearings are used.

Further in this embodiment, if a resistance to slide is provided by making the entrances to the pocket portions 113 somewhat smaller than the ball diameter, the balls 103 can be prevented from coming off when they are incorporated into the inner ring 102 and the outer ring 101, and the assembling of the bearing can be facilitated.

The shape of the cage is not limited to that in this embodiment, but any appropriate one other than that of the separator type cage arranged between the balls 103 may also be used. Its material is not limited to synthetic resin, but may as well be metal.

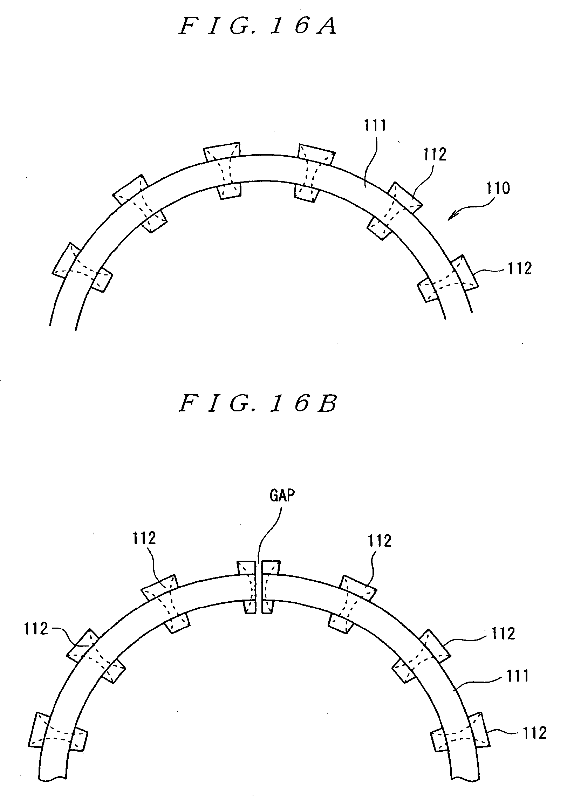

What is shown in Figure 16B is a snap cage similar in basic structure to that shown in Figure 16A, but it is a structure in which at least one portion of the circular ring portion 111 between pocket portions 113 adjoining in the circumferential direction is cut off in advance to provide prescribed gaps between the cut sections.

By using such a structure, even if the pitch diameter of rolling bodies and the pitch circle diameter of the cage are caused to deviate from each other by a difference in thermal expansion coefficient between the cage and the inner and outer rings or fluctuations in the dimensional accuracy of the cage or in circularity (especially in a embodiment wherein the bearing size is large), the combination of flexibility in the radial direction owing to the cantilever shape and elastic deformation in the circumferential direction due to gaps in between the cut sections (flexibility in the circumferential direction) buffers the thrusting force between the balls 103 and the pocket portions 113 to protect the cage from damage and wear and at the same time can reduce torque unevenness and heat generation due to the resistance to sliding contact between the balls 103 and the inner faces of the pocket portions 113.

Also, as the ball bearing for spindle turning device according to the invention is smaller in the diameter of the balls it uses for a structural reason, the thickness of the circular ring portion 111 of the cage in the radial direction cannot be so great (as the cage should be so positioned as to leave appropriate gaps in the space between the inner ring outer diameter and the outer ring inner diameter as can be understood from Figure 12, and this space between the inner ring outer diameter and the outer ring inner diameter is in proportion to the ball diameter and accordingly narrow), and the narrow width structure makes the gaps in the axial direction also narrow, obliging the thickness in the axial direction to be also thin. For this reason, the circular ring portion of the cage is far smaller than that in a standard size bearing, making it difficult to keep an appropriate level of dimensional accuracy for circularity and the like; therefore, the cage structure in which the circular ring portion 111 is configured as shown in Figure 16B is particularly effective in the aforementioned respects of protecting the cage from damage and wear and reducing torque unevenness and heat generation.

Moreover, the intended application is turning, which involves no continuous working of centrifugal force on the cage. Therefore, where the invention is applied to these uses, even if the cage structure shown in Figure 16B is used, no adverse effect due to centrifugal force will arise. Incidentally, the circular ring portion 111 may be cut in two or more positions in the circumferential direction as required. In this case, it is desirable for the cut positions to be equally spaced in the circumferential direction wherever practicable. Further, where these ball bearings are applied to the spindle turning device for a machine tool, preloading is usually applied to increase stiffness, they may as well be used with gaps depending on the conditions or where they are applied to some other uses.

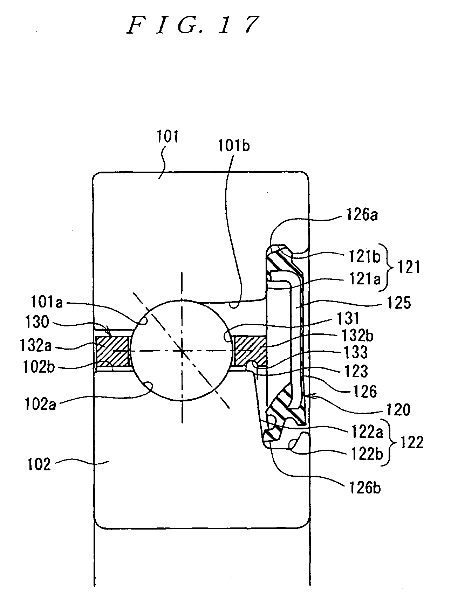

Now, the modification of the first embodiment referred to above (corresponding to claim 2) will be described with reference to Figure 17.

In this modification, an annular seal 120 is disposed on one side of the single row ball bearing 100 which is composed of a single row of full complement angular ball bearing shown in Figure 1, and a cage 130 for positioning the large number of balls 103 in the circumferential direction is arranged.

Thus, as shown in Figure 17, seal storage grooves 121 and 122 for accommodating the annular seal 120 are arranged on the end face on one side, for instance the right side, of the outer ring 101 and the inner ring 102.

The annular seal 120 is formed of a reinforced type rubber seal (of nitrile rubber, acryl rubber or fluorine rubber for instance) 126, reinforced with an inverted L-shaped a metal core bar 125. A fitting portion 126a which is to be snapped onto the outer ring 101 is formed on the outer circumferential portion, and a lip portion 126b to come into contact with the inner ring 102 is formed on the inner circumferential portion, of the rubber seal 126.

The seal accommodating groove 121 of the outer ring 101 has a configuration comprising a relatively shallow step portion 121a toward the right end of an inclined inner circumferential face 101b linking with the raceway groove 101a of the outer ring 101 and, formed in the circumferential direction at the bottom of this step portion 121a, a shallow fitting concave 121b into which a fitting portion 126a of an annular seal 120 is to be press-inserted. The seal accommodating groove 122 of the inner ring 102 has a configuration comprising a relatively deep step portion 122a toward the right end of the right side of the raceway groove 102a in a cylindrical outer circumferential face 102b linking to both right and left ends of the raceway groove 102a in the inner ring and, formed in the circumferential direction at the bottom of this step portion 122a, a shallow accommodating concave 122b with which a lip portion 126b formed on the inner circumferential face of the annular seal 120 comes into contact.

Further, the cage 130 has a pair of circular ring portions 132a and 132b extending in the axial direction with a pocket portion 131 for accommodating the balls 103 in-between, and these circular ring portions 132a and 132b are fitted with the cylindrical outer circumferential face 102b of the inner ring 102 as the guide face.

The circular ring portion 132b toward the annular seal 120 has, on the inner circumferential face opposing an intersection edge portion 123 formed at the intersection between the cylindrical outer circumferential face 102b of the inner ring 102 and the seal accommodating groove 122, a concave groove 133 having a semicircular section for averting contact with the intersection edge portion 123 formed in the circumferential direction.

This cage 130 is fabricated of a metal material produced by cutting, such as a copper alloy, a synthetic resin material such as polyamide, polyacetal or polyphenylene sulfide (PPS) or polyether ether ketone (PEEK), or a material consisting of a synthetic resin to which a reinforcing material such as glass fibers or carbons fibers are added. Where the cage 130 is to be formed of a resin material, whichever of cut molding and injection molding can be applied.

As the concave groove 133 is formed in this way in the circumferential direction in the inner circumferential face opposing the intersection edge portion 123 formed toward the right end of the guide face of the cage 130, this intersection edge portion 123 can be securely prevented from coming into contact with the inner circumferential face of the cage 130, and the wear of the cage 130 can be securely prevented while ensuring a intensity by expanding the width of the circular ring portion 132b of the annular seal 120 and thereby enlarging the sectional area.

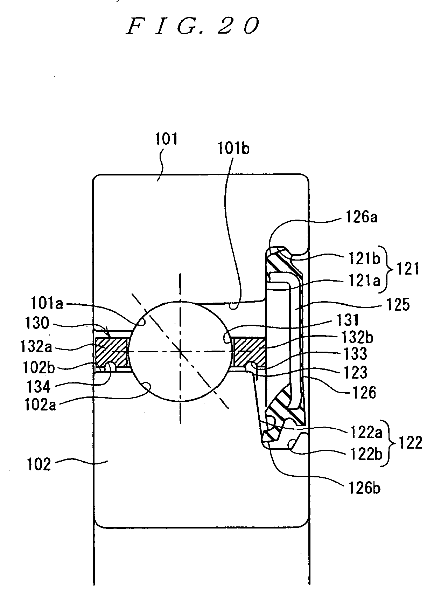

The concave groove 133 disposed in part of the guide face can serve as a reservoir for holding grease when grease is used for lubrication, and since it is positioned near the guide face moreover, it has an effect of appropriately supplying lubricating oil to the guide face, resulting in a favorable lubricating characteristic ensuring wear resistance over a long period. This effect is more significant than when concave grooves 133 and 134 are formed in both circular ring portions 132a and 132b as will be described afterwards with reference to Figure 20.

Usually, where the annular seal 120 is arranged on at least one side of the ball bearing 100, the inner radial face of the outer ring 101 or the outer radial face the inner ring 102 is used as the guide face of the cage 130; The formation of the intersection edge portion 123 in the position where this guide face and the seal accommodating groove 122 come into contact with each other, edge contact between this intersection edge portion 123 and the circular ring portion 132b of the cage 130 invites the wear of the cage 130.

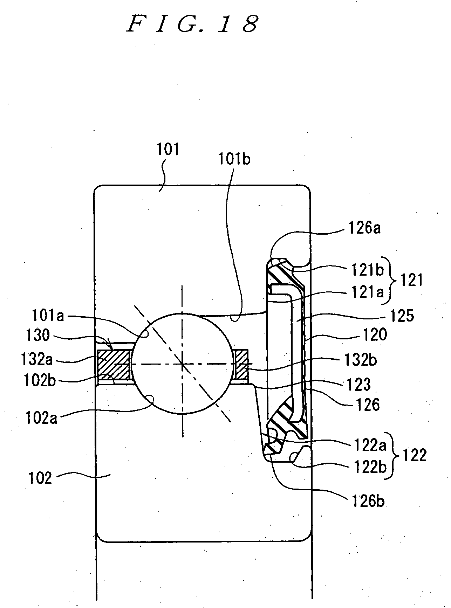

To prevent this wear of the cage 130, the conventionally conceived way is, where inner ring guidance is used, the length of the circular ring portion 132b in the axial direction toward the intersection edge portion 123 of the cage 130, namely the width, is reduced as shown in Figure 18 to prevent the circular ring portion 132b and the intersection edge portion 123 from coming into contact with each other.

However, in the case of a narrow width ball bearing 100 as in this embodiment, there is a problem that the width of the circular ring portion 132b is extremely thinned to make it impossible to secure a intensity.

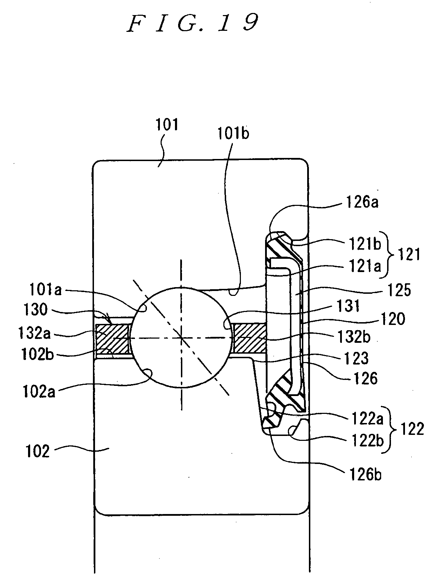

For this purpose, a intensity has to be secured by increasing the width of the circular ring portion 132b as shown in Figure 19, and in this case the inner circumferential face of the circular ring portion 132b and the intersection edge portion 123 oppose each other as stated above; therefore, if the cage 130 inclines toward the guide side rolling bearing ring while the ball bearing 100 is turning, the inner circumferential face of the circular ring portion 132b will run into edge contact with the intersection edge portion 123, inviting wear of the cage 130.

In particular, the seal accommodating grooves 121 and 122 often are heat-treated faces having gone through cutting, the surface roughness is high and, moreover, the intersecting line portions in contact with the cage 130 are susceptible to the formation of burrs and accordingly to the generation of wear.

Further, as the ball bearing 100 according to the invention has structurally an extremely small ball diameter relative to the pitch circle diameter of the bearing, the section of the circular ring portion 132b of the cage 130 is correspondingly small, resulting in a correspondingly lower level of the intensity of the cage 130 in the radial direction (the intensity of the circular ring portion 132b in the radial direction). In addition, the uses of the ball bearing 100 according to the invention involve, on account of its conditions of use, a high likelihood of being subjected to a large moment load when the bearing is turning, which is apt to incline the bearing. For this reason, variations in the contact angles of the balls 103 invite fluctuations in the speed of revolution of the balls 103 and the deformation of the cage 130 is increased by the thrusting force between the balls 103 and the pocket portiont 131, making the edge contact easier to occur and boosting the facial pressure of the contact portions to accelerate the wear.

However, in this embodiment as stated above, the concave groove 133 is formed in a part where contact with the intersection edge portion 123 on the boundary between the seal accommodating groove 122 and the cylindrical outer circumferential face 102b which serves as the guide face is possible while increasing the sectional area by expanding the width of the circular ring portion 132b on the annular seal 120 side of the cage 130 as shown in Figure 17, even if the cage 130 is inclined, a sufficient space can be secured between the intersection edge portion 123 and the concave groove 133, and accordingly contact between the concave groove 133 and the intersection edge portion 123 can be securely prevented, thereby securely preventing the cage 130 from being worn.

Although the modification described above is a case in which the annular seal 120 is arranged to the right of the ball bearing 100, this is not the only possible configuration, but the annular seal 120 may as well be arranged to the left of the ball bearing 100 or one annular seal 120 each on both sides of the same.

Also in the foregoing description of the modification, the concave groove 133 formed in the circular ring portion 132b is supposed to have a semicircular section, but this is not the only usable sectional shape, and any sectional shape that can avert contact with the intersection edge portion 123, such as rectangular, triangular or oval, can be used.

Further in the modification as described above, the annular seal 120 comes into contact with the seal accommodating groove 122 of the inner ring, but this is not the only possible arrangement, and a non-contact rubber seal type (with a metal core bar) not coming into contact with the seal accommodating groove 122 of the inner ring shown in Figure 7 or a metal seal which is caulked in the outer ring seal groove may as well be applied.

Also, though a case in which the outer circumferential face of the inner ring 102 is used as the guide face of the cage 130 was described regarding the foregoing modification, this is not the only possible arrangement, but the inner circumferential face of the outer ring 101 may as well be used as the guide face.

Further in the modification as described above, a case in which the concave groove 133 is formed in the circular ring portion 132b on the annular seal 120 side out of the circular ring portions 132a and 132b of the cage 130, but this is not the only possible configuration, and the circular ring portion 132a, on the other side of the annular seal 120, may also be provided with the concave groove 134 in a plane-symmetric position with a perpendicular plane passing the concave groove 133 of the circular ring portion 132b and the center of the balls 103 in-between as shown in Figure 20. Where the concave grooves are formed in the right and left circular ring portions 132a and 132b in this way, the position in which the concave grooves of the cage 130 are formed need not be checked at the time of assembling, but they can be asembled in any desired direction, resulting in greater ease of assembling work.

Next, a double row ball bearing for the spindle turning device of machine tool which is one form of the invention in its second embodiment (corresponding to claim 3) will be described with reference to Figure 21.

In this double row full complement angular contact ball bearing 200, a large number of balls 203 are rotatably arranged between the double row raceway grooves 201a and 201b of the outer ring 201 and the double row raceway grooves 202a and 202b of the inner ring 202, and the sectional size ratio (B2/H2) between then axially cut sectional width B2 and the radially cut sectional height H2 (= (outer ring outer diameter D2 - inner ring inner diameter d2)/2) is set to be (B2/H2) < 1.2, and the pitch circle diameter is set at the center of the radially cut sectional height. The reason for this arrangement was described with reference to Figure 30 in the section on the means to solve the problems noted above, and accordingly its description is dispensed with here.

Here regarding this embodiment, a case of replacing a double row ball bearing 200 with two rows of angular contact ball bearings of 7940A (30° in contact angle) will be considered here.

As 7940A measures $\phi$200 mm in the inner diameter of the inner ring d, $\phi$280 mm in the outer diameter of the outer ring D and 38 mm in the sectional width in the axial direction (width of a single bearing) B, the sectional size ratio (B/H) is 0.95. Therefore, the angular contact ball bearing 200 in the embodiment has a sectional size ratio (B2/H2) = 0.95 (with the inner ring inner diameter and the outer ring outer diameter kept intact, the sectional width in the axial direction (width of a single bearing) B2 is supposed to be 38 mm). This makes it possible not only to bear a radial load, axial loads and moment load in both directions, but also to achieve higher accuracy (higher rotational accuracy), greater stiffness and reductions in torque and heat generation, and to realize a further effect of 1/2 space saving in the axial direction size.

Of course, it is acceptable to set, as required, the sectional size ratio (B2/H2) of the angular contact ball bearing 200 to less than 0.95 or above 0.95 (provided that (B2/H2) < 1.2). Incidentally, the contact angle of the angular contact ball bearing 200 is supposed to be 30° for instance.

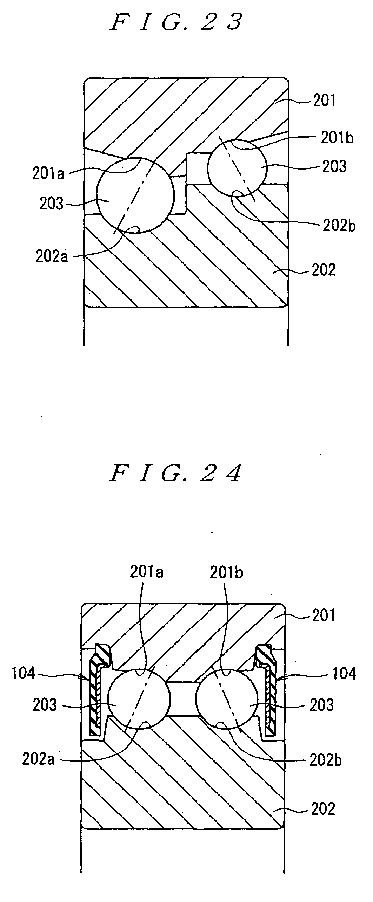

Incidentally, Figure 22 shows a case in which the pitch circle diameter is shifted toward the outer diameter in the double row full complement angular contact ball bearing 200 to enhance moment stiffness; Figure 23, a case in which the ball diameter and the pitch circle diameter are varied for each row in the double row full complement angular contact ball bearing 200; and Figure 24, a case in which the pitch circle diameter is shifted toward the outer diameter in the double row full complement angular ball bearing 200 fitted with the annular seal 104 at each end in the axial direction to enhance moment stiffness.

In every case, the structure and the presence or absence of annular seal, cage and the like and examples of structural application are similar to these aspects of the single row ball bearing in the first embodiment described above. Further, as in the first embodiment, whichever of the preloading or gaps can be used.

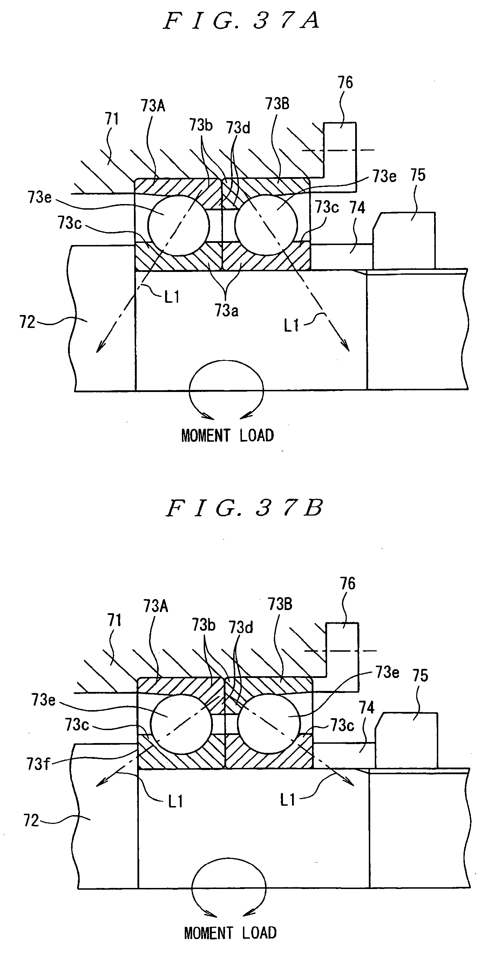

Next, regarding a spindle turning device of machine tool, which is one example of a third embodiment of the invention, and ball bearings for use in other machine tools, industrial machinery, robots, medical equipment, semiconductor/liquid crystal manufacturing equipment, and optical and optoelectronic equipment will be described with particular regard to angular ball bearings subject to a radial load, axial loads in both direction and especially large moment load. Generally, a angular contact ball bearing not having the seal such as a deep-groove ball bearing. Therefore, as shown in Figures 37A and 37B for instance, when two rows of single row angular contact ball bearings 73A and 73B are provided in parallel between a housing 71 and a shaft 72, an inner ring 73a is fixed with an inner ring bearing cap 74 formed of a spacer and a bearing nut 75 and an outer ring 73b is fixed with an outer ring bearing cap 76, the extension line L1 of a contact point representing the contact angle of angular contact ball bearings 73A and 73B in the normal direction pass the groove shoulders 73c and 73d of the inner ring 73a and the outer ring 73b, and further pass the shaft 72 or the inner ring bearing cap 74 and the housing 71 or the outer ring bearing cap 76.

When an external load is applied to the angular contact ball bearings 73A and 73B, so-called rolling element loads arising on the contact portions between the grooves in the inner ring 73a and the outer ring 73b and rolling elements 73e consisting of balls intervening between the inner ring 73a and the outer ring 73b are generated, as arrowed in Figures 37A and 37B, in the normal direction of the contact portion representing the contact angle from the rolling elements 73e toward the groove contact portions of the inner ring 73a and the outer ring 73b. Especially when the proportion of the moment load is high, the rolling element loads of some of the rolling elements 73e (mainly in the 180° opposing positions) become extremely heavy.

In a angular contact ball bearing not having the seal shown in Figures 37A and 37B, where the contact angle is around 30° as shown in Figure 37A, the directions of the rolling element loads pass the groove shoulder 73c of the inner ring 73a for both of the angular contact ball bearings 73A and 73B and further pass the bearing fitting portion of the shaft 72; where the contact angle is around 60° as shown in Figure 37B, the directions of the rolling element loads pass the groove shoulder 73c of the inner ring 73a a step portion 73f which serves as the inner ring bearing cap of the shaft 72 in the angular contact ball bearing 73A; and in the angular contact ball bearing 73B pass the groove shoulder 73c of the inner ring 73a and then pass the inner ring bearing cap 74 to reach the bearing fitting portion of the shaft 72.

Since the inner ring 73a and the outer ring 73b are backed up in the angular ball bearings 73A and 73B having no seals by the shaft 72, the housing 71, the inner ring bearing cap 74 and the outer ring bearing cap 76 in contact with them in this way, and accordingly the rolling element loads are not borne alone by the groove shoulders 73c and 73d of the inner ring 73a and the outer ring 73b, the groove shoulders 73c and 73d can support the rolling element loads without being deformed.

For this reason, as described in JP2006-105385A (hereinafter referred to as Patent Document 3), in a single row ball bearing in which a large number of balls are rotatably arranged between the raceway grooves of the outer ring and the raceway grooves of the inner ring, even in a narrow width angular contact ball bearing of which the sectional size ratio (B/H) between an axially cut sectional width B and a radially cut sectional height H is (B/H) < 0.63, where no seal is provided, the rolling body loads are not borne alone by the groove shoulders of the inner ring and the outer ring, and the groove shoulders can support the rolling element loads without being deformed.

However, in the narrow width angular contact ball bearing disclosed in Patent Document 3, as it is an angular contact ball bearing with a seal, if the contact angle is enlarged, the extension line in the normal direction in the ball contact potions will pass the groove portion accommodating the seal as shown in Figure 10 of the document, causing only the groove shoulder of the inner ring not backed up to bear the rolling element loads; this invites elastic deformation of the groove shoulder in addition to elastic deformation of balls, and the groove contact portions of the inner ring and the outer ring and a consequent drop in stiffness. This means an unsolved problem that, where the rolling element loads are heavy, the groove shoulders may be ruptured or cracked.

Therefore, the third embodiment of the invention has been attempted in view of the unsolved problem of the related art, and its object is to provide an angular ball bearing which, when grooves to accommodate a seal are formed, can avert at least the supporting of the rolling element loads by the groove shoulder of only one of the inner ring and the outer ring.

In order to achieve the object stated above, in a first form of this third embodiment of the invention, a narrow width single row angular contact ball bearing is characterized in that it is provided with at least one of an inner ring in which a concave step portion smaller in diameter than the inner ring groove shoulder is formed in at least a part in the circumferential direction and an outer ring in which a concave step portion greater in diameter than the outer ring groove shoulder is formed in at least a part in the circumferential direction, and a large number of balls are rotatably arranged between the raceway grooves of the outer ring and the raceway grooves of the inner ring, wherein the contact angle is so set as to prevent the extension line in the normal direction in the contact portions of the balls and the outer ring and the inner ring from interfering with the concave step portion.

In a second form of the third embodiment of the invention, a narrow width double row angular contact ball bearing is characterized in that it is provided with at least one of an inner ring in which a concave step portion smaller in diameter than the inner ring groove shoulder is formed in at least a part in the circumferential direction and an outer ring in which a concave step portion greater in diameter than the outer ring groove shoulder is formed in at least a part in the circumferential direction, and a large number of balls are rotatably arranged between the raceway grooves of the outer ring and the raceway grooves of the inner ring, wherein the contact angle is so set as to prevent the extension line in the normal direction in the contact portions of the balls and the outer ring and the inner ring from interfering with the concave step portion.

Further, a third form of the third embodiment is characterized in that, in the first or second form described above, the concave step portion is formed of a groove for inserting an annular seal and an opposing seal labyrinth portion.

In addition, a fourth form of the third embodiment is characterized in that, in any of the first through third form, an annular seal is inserted in the concave step portion of one of the inner ring and outer ring, and the annular seal is in contact or not in contact with the concave step portion of whichever of the inner ring and outer ring matching the one into which the annular seal is to be inserted.

Where the narrow width angular ball bearing is of a size fitting none of standard angular ball bearings (78xx, 79xx, 70xx, 72xx, 73xx series and so forth), namely where it is at least a single row angular contact ball bearing, it is a narrow width single row angular contact ball bearing of which the sectional size ratio (B/H) between the axially cut sectional width B and the radially cut sectional height H is (B/H) < 0.63; or where it is a double row angular ball bearing, it is a narrow width double row angular ball bearing of which the sectional size ratio (B2/H2) between the axially cut sectional width B2 and the radially cut sectional height H2 is (B2/H2) < 1.2.

For the contact angle of the angular ball bearing, though it varies with the groove shoulder heights of the inner ring and outer ring, the ratio between ball diameter and the bearing width and the shape or size of the seal groove, it is generally not more than 60°, desirably not more than 50° and still more desirably not more than 40°, but less than 20° is unpreferable because it would bring down the permissible axial load and the permissible moment load.

In the third embodiment, as the contact angle is so set as to prevent the extension line in the normal direction in the ball contact portions of the balls and the outer ring and the inner ring from interfering with the concave step portion for the narrow width single row angular contact ball bearing and the double row angular contact ball bearing, it is possible to achieve the effect of securely preventing the groove shoulder of only one of the inner ring to bear the rolling element loads and the outer ring and enabling a narrow width angular contact ball bearing having a seal to support the rolling element loads without being deformed.

The first form of the third embodiment will be described in detail below with reference to drawings.

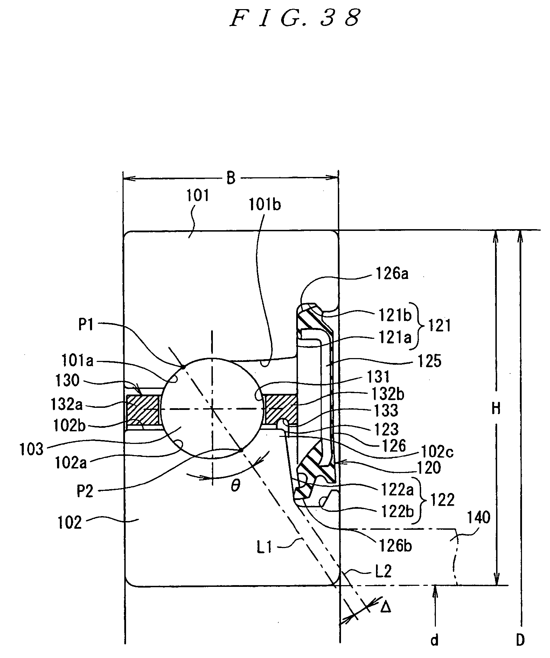

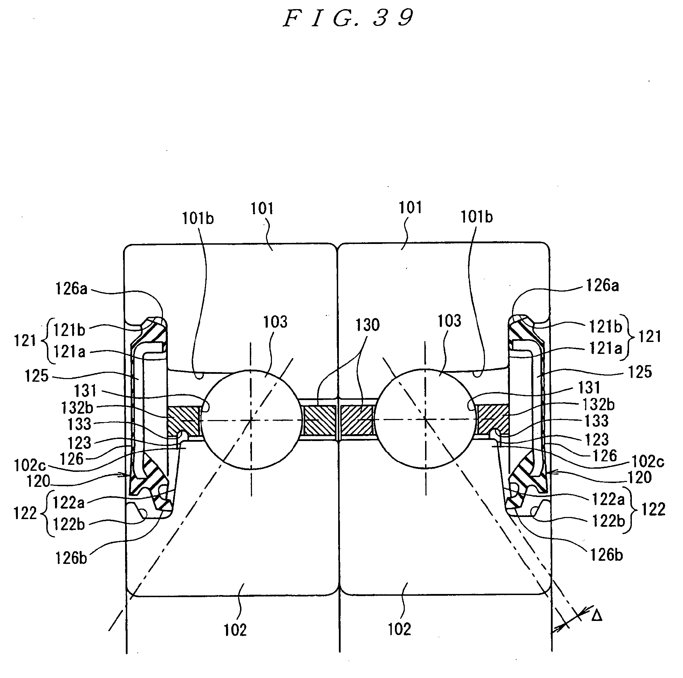

Figure 38 is a sectional view illustrating the essential part of a single row ball bearing which is one example of the first form of the third embodiment, and Figure 39 is a sectional view of the essential part of a state in which two rows of the single row ball bearings of Figure 38 are combined.

The single row ball bearing 100, which is one example of the first form of the third embodiment, as shown in Figure 38, a single row angular contact ball bearing 100 in which the large number of balls 103 are rotatably arranged between the raceway groove 101a of the outer ring 101 and the raceway groove 102a of the inner ring 102, wherein the sectional size ratio (B/H) between the axially cut sectional width B and the radially cut sectional height H (= (outer ring outer diameter D-inner ring inner diameter d)/2) is (B/H) < 0.63.

In the description of this embodiment here, a case in which two rows of the angular contact ball bearings 100 are combined back to back as shown in Figure 39 and replace a double row duplex angular contact ball bearing of 7208A (30° in contact angle) will be taken up.

As the angular contact ball bearings of 7208A measure φ40 mm in inner ring inner diameter, φ80 mm in outer ring outer diameter and 18 mm in the axially cut sectional width (width of single bearing) B, the sectional size ratio (B/H) = 0.9. Therefore, in the angular contact ball bearing 100 in this embodiment, the sectional size ratio (B/H) = 0.45 (the inner ring inner diameter and the outer ring outer diameter being kept as they are, and the axially cut sectional width (width of single bearing) is set to be 9 mm). This makes it possible not only to bear a radial load, axial loads and moment load in both directions, but also to achieve 1/2 space saving in the axial direction size, a reduction in torque and a further increase in stiffness.

Of course, it is acceptable to set, as required, the sectional size ratio (B/H) of the angular contact ball bearing 100 to less than 0.45 or above 0.45 (provided that (B/H) < 0.63).

The reason why B/H < 0.63 is set is as follows.

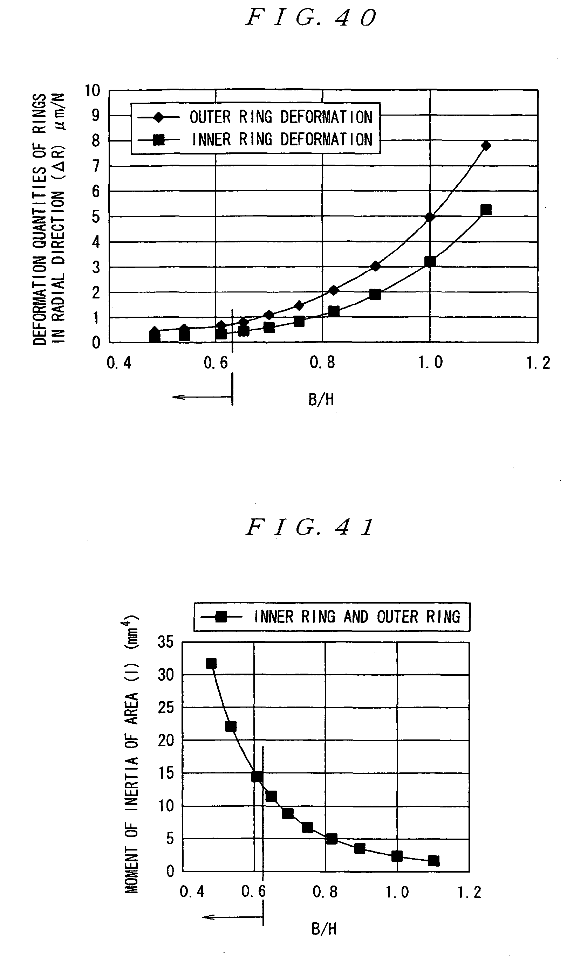

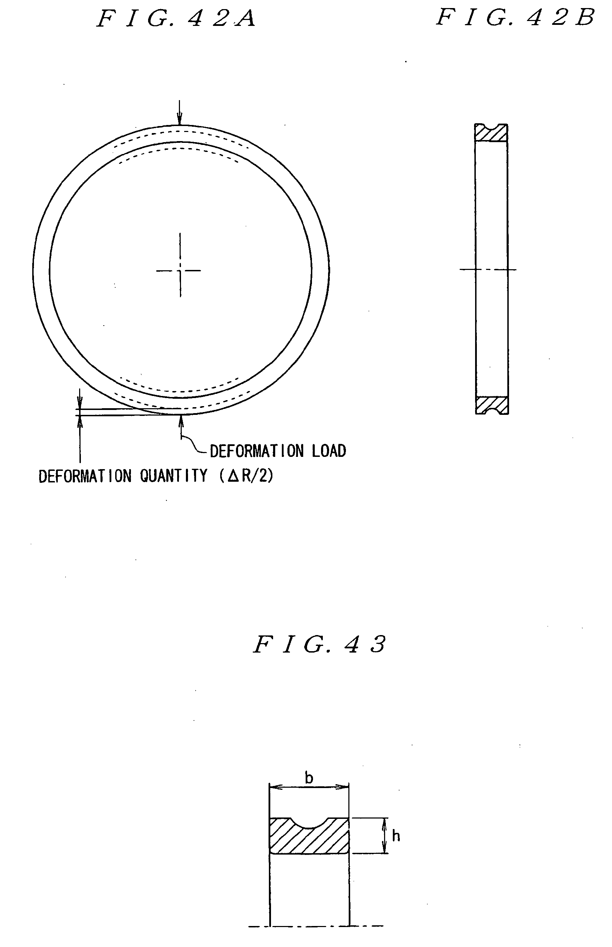

Figure 40 and Figure 41 show the results of comparison of the deformation characteristics in the radial direction of the inner ring and the outer ring when the inner diameter of the bearing is varied (namely when the value of (B/H) is varied) without changing the outer diameter of the bearing and the bearing width with reference to an ultra-thin wall ball bearing used as a standard item (the inner diameter of the bearing: $\phi$38.1 mm, outer diameter of the bearing: $\phi$47.625 mm, bearing width: 4.762 mm, aforementioned sectional size ratio (B/H) = 1) (see Figures 42A and 42B where the inner ring is shown) and the moment of inertia of area I of the section in the radial direction (see Figure 43: I = bh³/12).

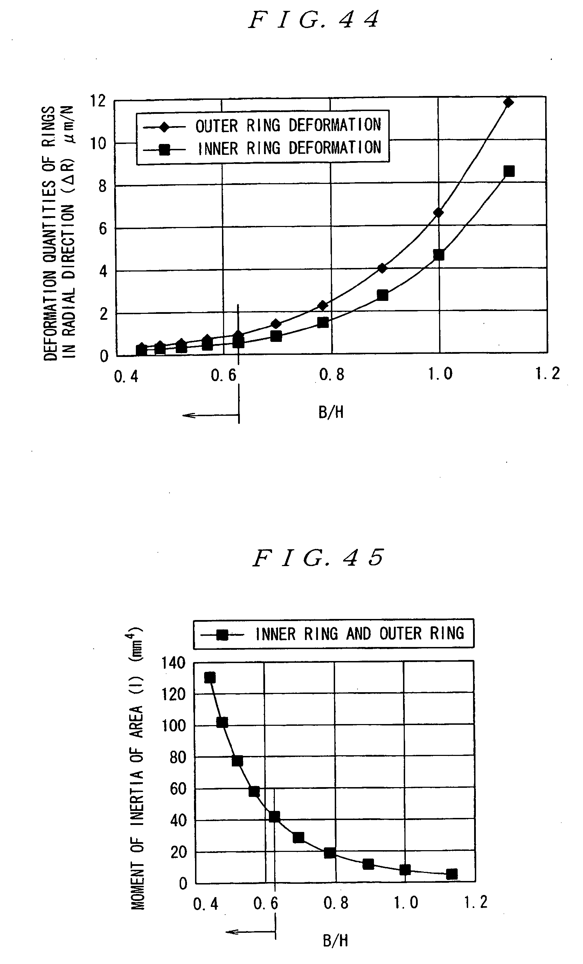

Figure 44 and Figure 45 also show the results of comparison of the deformation characteristics in the radial direction of the inner ring and the outer ring when the inner diameter of the bearing is varied (namely when the value of (B/H) is varied) without changing the outer diameter of the bearing and the bearing width with reference to an ultra-thin wall ball bearing used as a standard item (the inner diameter of the bearing: $\phi$63.5 mm, outer diameter of the bearing: $\phi$76.2 mm, bearing width: 6.35 mm, aforementioned sectional size ratio (B/H) = 1) and the moment of inertia of area I of the section in the radial direction.

Here is revealed a significant variation in the gradient of the stiffness increase rate where (B/H) is less than 0.63. Thus, the increase of the moment of inertia of area I becomes significant, and the decreases of the deformation quantities of the inner and outer rings in the radial direction become saturated.

Therefore, this embodiment enables deformation of the bearing by the forming loads of lathing or grinding at the time of inner and outer ring fabrication which poses problems with conventional ultra-thin wall bearings to be prevented, and the accuracy of bearings in such aspects as circularity and eccentric thickness to be enhanced.

Also, when assembled into a shaft or a housing (especially when assembled into a shaft or a housing by clearance fitting), the deformation of the inner and outer rings when the bearing is fixed with an inner ring keeper or an outer ring bearing cap (particularly the deterioration of its circularity) can be restrained, and increased heat generated, wear, seizure and other troubles in addition to torque defects and deterioration in rotation accuracy invited by the deformation can be prevented.

Incidentally, a single row ball bearing by itself is difficult to bear preloading or application of a moment load, but combination of two or more such bearings enables them to support a radial load, axial load and moment load.

Moreover, as each ball is in contact with the raceway groove of the inner or outer ring at two points all the time, this bearing can restrain the increase of torque due to large spins of balls as a four-point contact ball bearing does and, as it is less in rolling resistance than a cross roller bearing, can achieve a reduction in torque.

Furthermore, as the width is about half that of the conventional standard single row ball bearing, the ball diameter is about half that of the conventional ball bearing, and conversely the number of balls per row increases to make this bearing more rigid than the conventional ball bearing. Also, when it is used as the arm joint of a turning robot or the like, as the condition of rotation is predominantly rocking at low speed, even if the reduced ball diameter brings down the load capacity of the bearing, the rolling fatigue life time would pose no practical problem.

When used in other industrial machinery, machine tools, robots, medical equipment, semiconductor/liquid crystal manufacturing equipment, and optical and optoelectronic equipment, the rolling fatigue life time would hardly pose any practical problem because these are applications in which the number of revolutions is low and only rocking is involved.

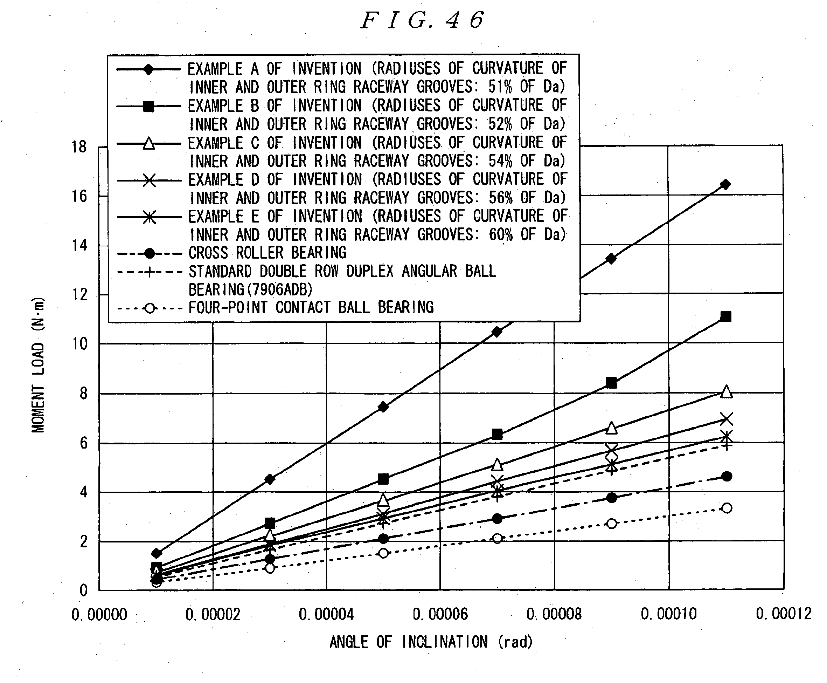

Figure 46 compares the calculated moment stiffness counts of different bearings. If the size is the same (the calculated cases have equal inner and outer diameters, corresponding to the bearing identification sign of 7906A (30° in contact angle): $\phi$30 mm inner ring inner diameter and $\phi$47 mm in outer ring outer diameter), in every one of examples A through E of the invention in which two single row narrow width angular contact ball bearings according to claim 1 (30° in contact angle: a calculated case of bearings) are combined and the radiuses of curvature of the raceway grooves of the inner and outer rings (Da is a ball diameter) are varied, the moment stiffness is greater than in cross roller bearings, standard double row duplex angular contact ball bearings and four-point contact ball bearings. For instance in example B of the invention, a moment stiffness level that is 2.4 times that in cross roller bearings, 1.9 times that in conventional standard double row duplex angular contact ball bearings and 3.3 times that in four-point contact ball bearings can be maintained.

Incidentally, the designed preload gap of each is calculated as a standard value for practical use to be - 0.010 mm for examples A through E of the invention, the standard double row duplex angular ball bearing and the four-point contact ball bearing, and -0.001 mm for the cross roller bearing.

To add, while the appropriate ball diameter for the narrow width ball bearings according to this embodiment varies with the presence or absence of seals and some other items, an extreme reduction in ball diameter to increase stiffness would increase the facial pressure between the balls and the contact portions of the raceway grooves of the inner and outer rings to invite a drop in resistance to indentation; therefore, a range of approximately 30% to 90% of the bearing width (B) or (B2/2) is desirable.

In this embodiment, the annular seal 120 is disposed on one side of the single row ball bearing 100, and the cage 130 for positioning the large number of balls 103 in the circumferential direction is arranged.

Thus, as shown in Figure 38, the seal accommodating grooves 121 and 122 for accommodating the annular seal 120 are arranged on the end face on one side, for instance the right side, of the outer ring 101 and the inner ring 102.

The annular seal 120 is formed of the reinforced type rubber seal (of nitrile rubber, acryl rubber or fluorine rubber for instance) 126, reinforced with the inverted L-shaped metal core bar 125. The fitting portion 126a which is to be fitted onto the outer ring 101 is formed on the outer circumferential portion, and the lip portion 126b to come into contact with the inner ring 102 is formed on the inner circumferential portion, of the rubber seal 126.

The seal accommodating groove 121 of the outer ring 101 has a configuration comprising the relatively shallow step portion 121a toward the right end of the inclined inner circumferential face 101b linking with the raceway groove 101a of the outer ring 101 and, formed in the circumferential direction at the bottom of this step portion 121a, the shallow fitting concave 121b into which the fitting portion 126a of the annular seal 120 is to be press-inserted.

The seal accommodating groove 122 of the inner ring 102 has a configuration comprising the relatively deep step portion 122a toward the right end of the groove shoulder 102c of the right side of the raceway groove 102a in the cylindrical outer circumferential face 102b linking to both right and left ends of the raceway groove 102a in the inner ring and, formed in the circumferential direction at the bottom of this step portion 122a, the shallow accommodating concave 122b with which the lip portion 126b formed on the inner circumferential face of the annular seal 120 comes into contact.

Further, the cage 130 has the pair of circular ring portions 132a and 132b extending in the axial direction with the pocket portion 131 for accommodating the balls 103 in-between, and these circular ring portions 132a and 132b are fitted with the cylindrical outer circumferential face 102b of the inner ring 102 as the guide face.

The circular ring portion 132b toward the annular seal 120 has, on the inner circumferential face opposing the intersection edge portion 123 formed at the intersection between the cylindrical outer circumferential face 102b of the inner ring 102 and the seal accommodating groove 122, the concave groove 133 having a semicircular section for averting contact with the intersection edge portion 123 formed in the circumferential direction.

This cage 130 is fabricated of a metal material produced by cutting, such as a copper alloy, a synthetic resin material such as polyamide, polyacetal or polyphenylene sulfide (PPS) or polyether ether ketone (PEEK), or a material consisting of a synthetic resin to which a reinforcing material such as glass fibers or carbons fibers are added. Where the cage 130 is to be formed of a resin material, whichever of cut molding and injection molding can be applied.

As the concave groove 133 is formed in this way in the circumferential direction in the inner circumferential face opposing the intersection edge portion 123 formed toward the right end of the guide face of the cage 130, this intersection edge portion 123 can be securely prevented from coming into contact with the inner circumferential face of the cage 130, and the wear of the cage 130 can be securely prevented while ensuring a intensity by expanding the width of the circular ring portion 132b of the annular seal 120 and thereby enlarging the sectional area.

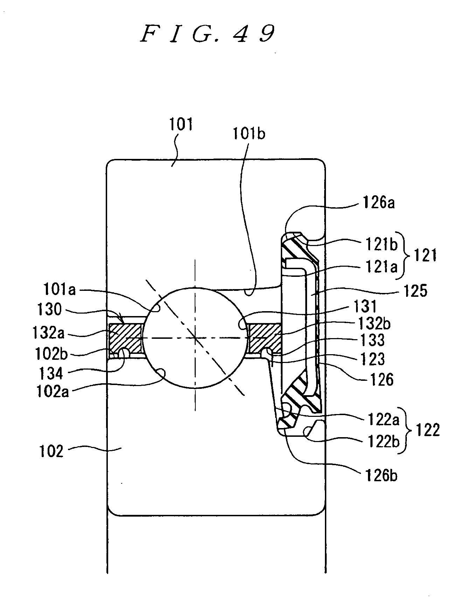

. The concave groove 133 disposed in part of the guide face can serve as a reservoir for holding grease when grease is used for lubrication, and since it is positioned near the guide face moreover, it has an effect of appropriately supplying lubricating oil to the guide face, resulting in a favorable lubricating characteristic ensuring wear resistance over a long period. This effect is more significant than when the concave grooves 133 and 134 are formed in both circular ring portions 132a and 132b as will be described afterwards with reference to Figure 49.

Usually, where the annular seal 120 is arranged on at least one side of the ball bearing 100, the inner radial face of the outer ring 101 or the outer radial face the inner ring 102 is used as the guide face of the cage 130; the formation of the intersection edge portion 123 in the position where this guide face and the seal accommodating groove 122 come into contact with each other, edge contact between this intersection edge portion 123 and the circular ring portion 132b of the cage 130 invites the wear of the cage 130.

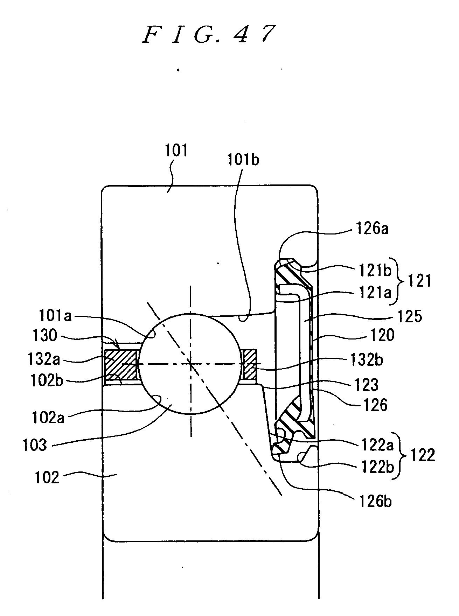

To prevent this wear of the cage 130, the conventionally conceived way is, where inner ring guidance is used, the length of the circular ring portion 132b in the axial direction toward the intersection edge portion 123 of the cage 130, namely the width, is reduced as shown in Figure 47 to prevent the circular ring portion 132b and the intersection edge portion 123 from coming into contact with each other.

However, in the case of a narrow width ball bearing 100 as in this embodiment, there is a problem that the width of the circular ring portion 132b is extremely thinned to make it impossible to secure a intensity.

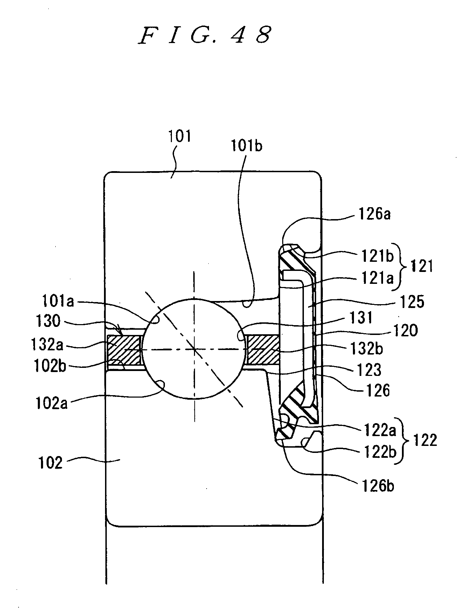

For this purpose, a intensity has to be secured by increasing the width of the circular ring portion 132b as shown in Figure 48, and in this case the inner circumferential face of the circular ring portion 132b and the intersection edge portion 123 oppose each other as stated above; therefore, if the cage 130 inclines toward the guide side rolling bearing ring while the ball bearing 100 is turning, the inner circumferential face of the circular ring portion 132b will run into edge contact with the intersection edge portion 123, inviting the wear of the cage 130.

In particular, the seal accommodating grooves 121 and 122 often are heat-treated faces having gone through cutting, the surface roughness is high and, moreover, the intersecting line portions in contact with the cage 130 are susceptible to the formation of burrs and accordingly to the generation of wear.

Further, as the ball bearing 100 according to the invention has structurally an extremely small ball diameter relative to the pitch circle diameter of the bearing, the section of the circular ring portion 132b of the cage 130 is correspondingly small, resulting in a correspondingly lower level of the intensity of the cage 130 in the radial direction (the intensity of the circular ring portion 132b in the radial direction). In addition, the uses of the ball bearing 100 according to the invention involve, on account of its conditions of use, a high likelihood of being subjected to a large moment load when the bearing is turning, which is apt to incline the bearing. For this reason, variations in the contact angles of the balls 103 invite fluctuations in the speed of revolution of the balls 103 and the deformation of the cage 130 is increased by the thrusting force between the balls 103 and the pocket portion 131, making the edge contact easier to occur and boosting the facial pressure of the contact portions to accelerate the wear.

However, in this embodiment as stated above, the concave groove 133 is formed in a part where contact with the intersection edge portion 123 on the boundary between the seal accommodating groove 122 and the cylindrical outer circumferential face 102b which serves as the guide face is possible while increasing the sectional area by expanding the width of the circular ring portion 132b on the annular seal 120 side of the cage 130 as shown in Figure 38, even if the cage 130 is inclined, a sufficient space can be secured between the intersection edge portion 123 and the concave groove 133, and accordingly contact between the concave groove 133 and the intersection edge portion 123 can be securely prevented, thereby securely preventing the cage 130 from being worn. Further in this embodiment, the contact angle θ is set to 30° to ensure that the extension line L1 in the normal direction in a contact portion P1 in contact with the raceway groove 101a of the outer ring 101 of the balls 103 and a contact portion P2 in contact with the raceway groove 102a of the inner ring 102 does not interfere with the accommodating concave 122b. As a result the distance Δ from a parallel line L2 which is parallel to the extension line L1 and in contact with the accommodating concave 122b is supposed to be Δ > 0. The contact angle θ here, though it varies with the heights of the groove shoulders of the inner ring and outer ring, the ratio between the ball diameter and the bearing width and the shape and size of the accommodating concave 122b for the seal, it is generally not more than 60°, desirably not more than 50° and still more desirably not more than 40°, but less than 20° is unpreferable because it would bring down the permissible axial load and the permissible moment load.

By setting the contact angle 0 in this way, the extension line L1 of the contact portions P1 and P2 in the normal direction, which constitutes the direction of applying the rolling element load, is caused to pass a position apart by a distance Δ (> 0) from the accommodating concave 122b for accommodating the annular seal 120, and the groove shoulder of the inner ring can be securely prevented from bearing the rolling element load by itself, enabling the inner ring 102 backed up by an inner ring bearing cap 140, indicated by a chain line in Figure 38, and a shaft (not shown) fit-inserted into the inner ring 102 to bear the rolling element load, making it possible to bear the rolling element load while preventing a groove shoulder 102c from being deformed to invite a stiffness drop. Therefore, even when a heavy moment load is applied to a narrow width angular contact ball bearing, the service life of the bearing can be elongated without allowing the groove shoulder 102c to be ruptured or cracked. Although the annular seal 120 is arranged to the right of the ball bearing 100 in the foregoing description of the embodiment, this is not the only possible configuration, but the annular seal 120 may as well be arranged to the left of the ball bearing 100 or one annular seal 120 each on both sides of the same.

Also in the foregoing description of the modification, the concave groove 133 formed in the circular ring portion 132b is supposed to have a semicircular section, but this is not the only usable sectional shape, and any sectional shape that can avert contact with the intersection edge portion 123, such as rectangular, triangular or oval, can be used.

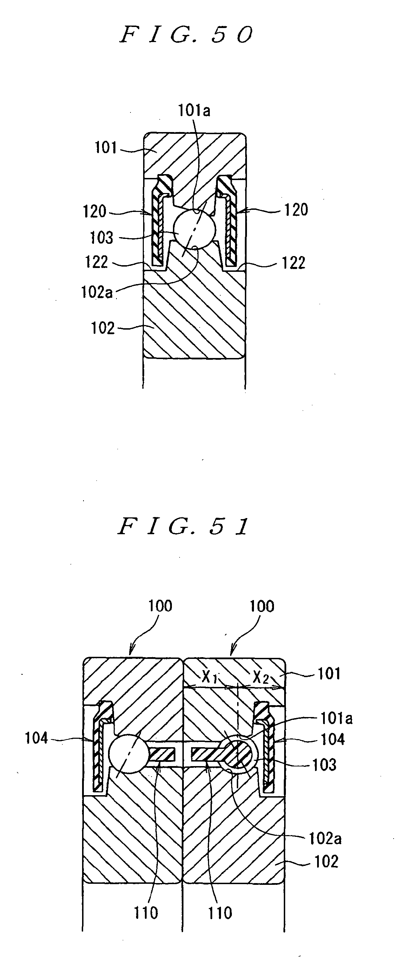

Further in the modification as described above, the annular seal 120 comes into contact with the seal accommodating groove 122 of the inner ring, but this is not the only possible arrangement, and a non-contact rubber seal type (with a metal core bar) not coming into contact with the seal accommodating groove 122 of the inner ring shown in Figure 50 or a metal seal which is caulked in the outer ring seal groove may as well be applied.

Also, though a case in which the outer circumferential face of the inner ring 102 is used as the guide face of the cage 130 was described regarding the foregoing embodiment, this is not the only possible arrangement, but the inner circumferential face of the outer ring 101 may as well be used as the guide face.

Further in the embodiment as described above, a case in which the concave groove 133 is formed in the circular ring portion 132b on the annular seal 120 side out of the circular ring portions 132a and 132b of the cage 130 was described, but this is not the only possible configuration, and the circular ring portion 132a, on the other side of the annular seal 120, may also be provided with the concave groove 134 in a plane-symmetric position with a perpendicular plane passing the concave groove 133 of the circular ring portion 132b and the center of the balls 103 in-between as shown in Figure 49. Where the concave grooves are formed in the right and left circular ring portions 132a and 132b in this way, the position in which the concave grooves of the cage 130 are formed need not be checked at the time of assembly, but they can be assembled in any desired direction, resulting in greater ease of fitting work.

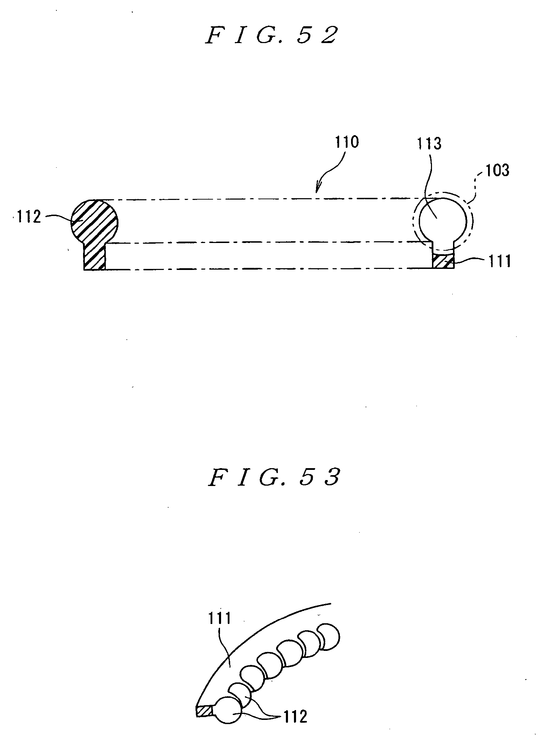

The cage used may be, apart from this embodiment, a cage of a flexible cantilever ring structure which does not use as guide faces the outer circumferential face of the inner ring and the inner circumferential face of the outer ring, namely a ball guiding snap cage 110 not in contact with the inner ring and the outer ring, having the circular ring portion 111, the pillar portions 112 protruding in the axial direction in a plurality of positions at substantially equal intervals in the circumferential direction at one end of this circular ring portion 111 and the pocket portions 113 formed between the pillar portions 112 to hold the balls 103 to be rotatable in the circumferential direction as shown in Figure 52 and Figure 53, when the annular seal 104 is fitted to one end in the axial direction (the end on the other side than the combined side end face) and two rows of the angular contact ball bearings 100 provided with the cage 110 rotatably holding the balls 103 are combined back to back, as shown in Figure 51. When two rows of such single row ball bearings are combined, if the pitch of the balls 103 in the axial direction is shifted as close as practicable to the other side of the combined side end face as shown in Figure 51 ($X_1 > X_2$), a structure in which the axis direction wall thickness of the ring portion of the cage is thickened can be achieved, a long enough distance between the moment working points to raise moment stiffness can be secured. Full complement angular ball bearings having no cage can be applied as well.

In this embodiment, the pitch circle diameter of the balls 103 is as represented by equation (4) below, but when it is desired to increase the number of balls per row of bearing to further raise the moment stiffness, equation (5) may be used to achieve a structure in which the pitch circle diameter of the balls 103 is shifted toward the outer ring or, conversely, equation (6) may be used as required to shift the pitch circle diameter of the balls 103 toward the inner ring 102 (not shown).

$$\text{Pitch circle diameter of balls} = (\text{Inner ring inner diameter} + \text{outer ring outer diameter})/2 \qquad \ldots (4)$$

$$\text{Pitch circle diameter of balls} > (\text{Inner ring inner diameter} + \text{outer ring outer diameter})/2 \qquad \ldots (5)$$

$$\text{Pitch circle diameter of balls} < (\text{Inner ring inner diameter} + \text{outer ring outer diameter})/2 \qquad \ldots (6)$$

Also, as required, the pitch circle diameter may be differentiated between the right and left ball bearings to be combined or the diameter of the balls 103 may be differentiated between the right and left ball bearings to be combined. The sectional size ratio (B/H) of the two ball bearings to be combined need not be the same, but that of the bearing smaller in ball diameter may be (B/H) = 0.28 and that of the bearing larger in ball diameter may be (B/H) = 0.62 for instance. Further, the pitch of the balls 103 in the axial direction need not centered in the axial direction, but the pitch of the balls 103 in the axial direction may be shifted in the axial direction depending on the presence or absence of seal or cage or to secure an adequate distance between the moment working points among other purposes.

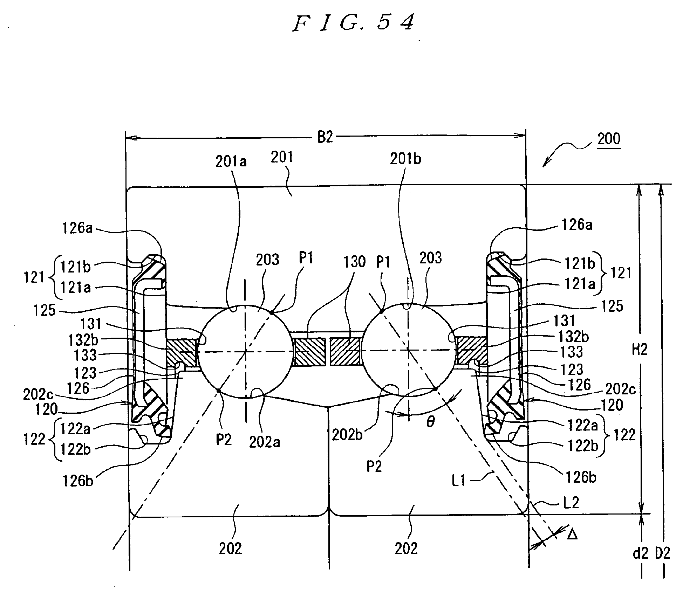

Next, a double row angular contact ball bearing which is the second form of the third embodiment will be described with reference to Figure 54.

In this double row angular contact ball bearing 200, a large number of balls 203 are rotatably arranged between the double row raceway grooves 201a and 201b of the outer ring 201 and the double row raceway grooves 202a and 202b of the inner ring 202, the sectional size ratio (B2/H2) between the axially cut sectional width B2 and the radially cut sectional height H2 (= (outer ring outer diameter D2 - inner ring inner diameter d2/2)) is (B2/H2) < 1.2, and the pitch diameter of balls is set at the center of the sectional height in the radial direction.

On the right and left sides of the outer ring 201 and the inner ring 202, the seal accommodating grooves 121 and 122 similar to those in the first form of the third embodiment are formed, and the annular seal 120 is accommodated in these seal accommodating grooves 121 and 122 symmetrically between right and left.

Here is considered regarding this embodiment by way of example a case in which the double row ball bearing 200 is replaced by a double row angular ball bearing of 7208A (30° in contact angle).

The sectional size ratio (B/H) of 7208A is 0.9 because the inner ring inner diameter is $\phi$40 mm, the outer ring outer diameter is $\phi$80 mm and the axially cut sectional width (width of single bearing): B is 18 mm. Therefore in the angular contact ball bearing 200 in this embodiment, the sectional size ratio (B2/H2) = 0.90 (with the inner ring inner diameter and the outer ring outer diameter kept intact, the sectional width in the axial direction (width of a single bearing): B2 is set to be 18 mm). This makes it possible not only to bear a radial load, axial loads and moment load in both directions, but also to achieve 1/2 space saving in the axial direction size, a reduction in torque and a further increase in stiffness.

Of course, it is acceptable to set, as required, the sectional size ratio (B2/H2) less than 0.90 or above 0.90 (provided that (B2/H2) < 1.2).

The contact angle of the angular contact ball bearing 200 is set to 30°, for example, as in the first form of the third embodiment described above, and the extension line L1 in the normal direction of the contact portions P1 and P2 of the balls 203 with the raceway grooves 201a, 201b and 202a, 202b, respectively, of the outer ring 201 and the inner ring 202 is so set as to pass a position away from the accommodating concave 122b by a prescribed distance Δ (> 0).

In the second form of this third embodiment, too, as the contact angle θ is so set as not to let the extension line L1 in the normal direction of the contact portions P1 and P2 interfere with the accommodating concave 122b of the seal accommodating groove 122, when a heavy rolling element load is applied, the groove shoulder can be securely prevented from bearing this rolling element load by itself, enabling the inner ring 202 backed up by an inner ring bearing cap and a shaft (not shown) fit-inserted into the inner ring to bear the rolling element load, making it possible to restrain deformation of the groove shoulder and securely prevent its rupture or cracking to elongate the service life of the narrow width double row angular contact bearing.

To add, in the second form of this third embodiment as well, the pitch circle diameter of balls may be shifted toward the outer diameter in the double row angular contact bearing 200 or the ball diameter or the pitch circle diameter in each row may be varied in the double row angular contact ball bearing 200 to enhance moment stiffness.

A double row full complement angular contact ball bearing having no cage can also be used.

In every case, the structure and the presence or absence of annular seal, cage and the like and examples of structural application are similar to these aspects of the single row ball bearing in the first form of the third embodiment described above. Further, as in the first form of the third embodiment, whichever of the preloading or gaps can be used.

With respect to the first form of the third embodiment, though a case in which the fitting concave 121b and the accommodating concave 122b which are linked to the groove shoulder 102c of the inner ring 102 and accommodate the annular seal 120 are formed has been described, this is not the only possible configuration, but the invention can also be applied to a case in which, as shown in Figure 38, an accommodating concave linked to the groove shoulders of the outer ring 101 and the inner ring 102 in a shape reversed between right and left along a perpendicular line passing the center of the balls 103 and accommodating the annular seal 120 is formed. An annular seal 120 may as well be provided on each of the right and left sides here.

Regarding the first and second forms of the third embodiment, though a case in which the fitting concave 121b and the accommodating concave 122b for accommodating the annular seal 120 are disposed all around in the circumferential direction was described, the configuration is not limited to this, but the invention can also be applied to a case in which a concave step portion is formed in part of the circumferential direction. Further, the purpose of the concave step portion is not limited to accommodation of the annular seal 120, but a concave step portion applicable to any desired use can be applied as well.

Next, as an example in the fourth embodiment of the invention, duplex ball bearings and double row ball bearings for use in the spindle turning device of machine tools, turntables, industrial machinery, the joints or turning mechanisms of robots, medical equipment, semiconductor/liquid crystal manufacturing equipment, and optical and optoelectronic equipment, ball bearings intended for uses in which, in particular, a radial load, axial loads in both directions and especially heavy moment load are at work will be described.

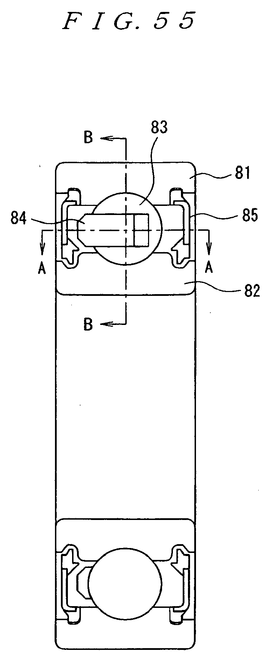

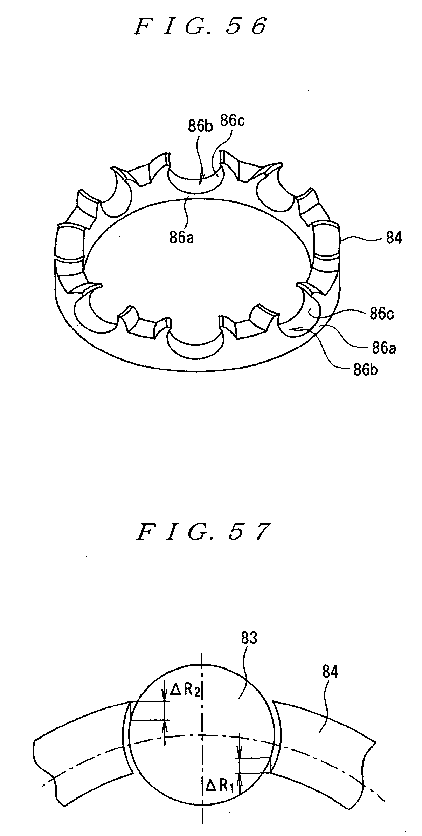

Usually, in a ball bearing, for instance a deep-groove ball bearing, as shown in Figure 55, balls 83 are rotatably held between the raceway faces of an inner ring 82 and an outer ring 81, and a seal 85 is fitted on the end face in the axial direction between the inner ring 82 and the outer ring 81 with a view to holding sealed grease, preventing its outward leaks and intercepting the invasion of foreign matter from outside into the bearing. As a ball guiding cage 84 for holding the balls 83, a ball guiding synthetic resin snap cage (cantilever ring structure) in which a prescribed number of pocket portions 86b are formed in a ring portion 86a is used as a standard item as shown in Figure 56.

In this ball guiding cage 84, as shown in Figure 56, a pocket inner face 86c for holding the balls 83 is formed in a spherical shape having a slightly larger curvature than that of the balls 83, and the quantity of the movement of the cage 84 in the radial direction is positioned by either a gap $\Delta R_1$ between the balls 83 and the inner diameter side end face of the pocket or a gap $\Delta R_2$ between the balls 83 and the outer diameter side end face of the pocket, whichever is smaller, as shown in Figure 57.

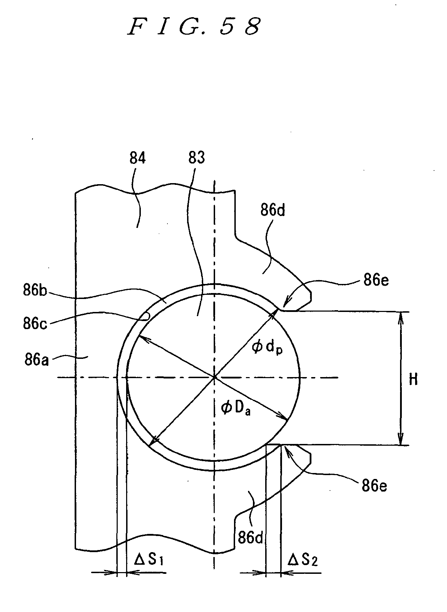

The quantity of movement of the cage 84 in the axial direction is determined in one way by a gap $\Delta S_1$ between the ring side pocket inner face 86c and the balls 83 and in the other way by a gap $\Delta S_2$ between ball engaging portions 86e, formed at the tip of a pocket pillar portion 86d, and the balls 83 as shown in Figure 58.

Whereas the cage 84 is usually fabricated by injection molding, the configuration for separating the cage from the mold is intended for separation in the axial direction (so-called axial draw type). As the relationship between the inner diameter $\phi d_p$ of the pocket face and a distance among a pair of ball engaging portions 86e, namely the throat size H is $\phi d_p > H$, the ball engaging portions 86e are deformed when a mold member for forming the pocket (spherical member) passes. The separation inevitably takes a form of forced drawing.

Therefore, the ball engaging portions 86e should keep sufficient flexibility to be broken or cracked when they are separated or not to leave a major plastic deformation which would pose a functional problem.

Also, as the ball engaging portions 86e have a relationship of $\phi D_a > H$ between the ball diameter $\phi D_a$ relative to the throat outer diameter H between the opposing ball engaging portions 86e, when incorporating the cage 84 into the bearing, namely when inserting the balls 83 into the pocket portions 86b to pass through among the ball engaging portions 86e, the ball engaging portions 86e should be protected from being broken or cracking, and the cage 84 is so structured as not to come off the balls 83 in the axial direction after its incorporation.

Although the cage 84 is not very likely to come off the balls 83 under usual conditions of rotation, under conditions of severe vibration during the rotation of the bearing or in applications in which the ball engaging portions 86e of the cage 84 are subjected to uneven load on account of the inclination of the inner ring 82 and the outer ring 81 caused by a moment load or any other factor, it becomes more likely to come off, and according a intensity to keep the cage 84 from coming off in the axial direction should be maintained.

Should the balls 83 come off in the axial direction at least in one of the pocket portions 86b, balls adjoining each other in the circumferential direction would come into contact with one another, and the sliding contact among the balls would give rise to heat generation or wear, leading to seizure or breaking of balls in some cases. Uneven contact of parts having come off might invite such troubles as damage to or cracking of the cage 84.

In the uses described above, in order to satisfy the mutually contradictory requirements of the two components, a number of problems should be solved before the final specifications and design are established, such as the choice of a suitable resin material for the cage, that of the contents of strengthening materials such as glass fibers, and that of the optimal throat diameter H for the ball engaging portions 86e.

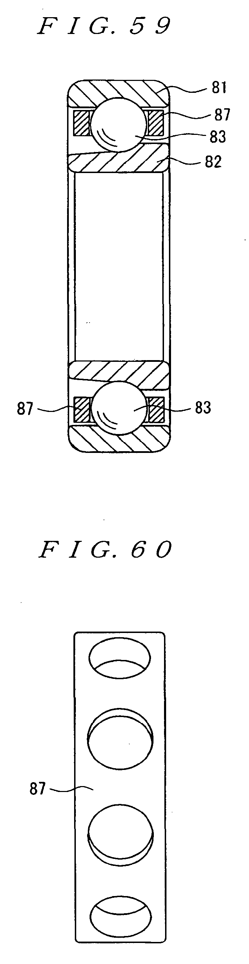

On the other hand, an angular contact ball bearing often uses a so-called machined cage 87 of two-side ring structure as shown in Figure 59 and Figure 60, but a ball guiding snap cage of a cantilever ring structure is proposed as a way to narrow the width of the ball bearing in the axial direction as exemplified by a narrow width ball bearing recently disclosed in JP2004-333588A (hereinafter referred to as Patent Document 4).

However, in the narrow width angular contact ball bearing disclosed in Patent Document 4, the ball diameter is inevitably reduced by reason of narrowing the width of the bearing in the axial direction in pursuit of space saving in the axial direction; as the sectional wall thickness of the cage is thin, the circular intensity of the ring portion is weakened to make the cage more susceptible to deformation, leaving unsolved the problem note above that the cage easily comes off in the axial direction.

Especially in the uses described above, operation often takes place under a heavy moment load at work, and unevenness of balls in load invites differences among the balls in revolution speed, with the consequence that the cage is subjected to deviated loads, deformed and caused by the load on the ball engaging portions to come off in the axial direction. If the strength of the cage is extremely increased, the engaging portions may become broken, cracked or suffer plastic deformation when it is separated from the mold or by the deformation load at the time of passing the ball engaging portions in incorporating the cage.

An object of a fourth embodiment of the invention, attempted in view of these problems, is to provide a ball bearing not allowing the cage to come off in the axial direction when a snap cage is used with an eye to space saving in the axial direction and capable of achieving stable rotational performance without inviting wear or damage of balls or breaking the cage.

In order to achieve the object stated above, a duplex ball bearing in a first form of the fourth embodiment of the invention is a combined ball bearing having a double row configuration of narrow width ball bearings, wherein each narrow width ball bearing has a ring portion on one side and a crown-shaped ball guiding cage having a required number of pocket portions for holding balls formed on the other side of the ring portion with the ring portion located on the combination face side, characterized in that the pocket portions have ball engaging portions, formed at the tip on the other side than the ring portion, for preventing the balls from coming off and, for the distance in the axial direction between the center of curvature of the pocket portions and the tips of the ball engaging portions, the value resulting from the addition of a gap in the axial direction between the pocket faces of the pocket portions and the balls to a gap in the axial direction between the ends of ring portions in two opposing cages in a state in which the centers of curvature of the pocket portions and the centers of curvature of the balls are made identical is set to be small.

A duplex ball bearing in a second form of the fourth embodiment of the invention is characterized in that, is the first form of the embodiment, the ball guiding cage is molded of a synthetic resin material.

Further, a duplex ball bearing in a third form of the fourth embodiment of the invention is characterized in that, in the first or second form of the embodiment, each of the narrow width ball bearing has annular seals arranged on the end faces of the inner and outer rings in the axial direction on the other side than the ring portion side of the ball guiding cage with the balls in-between.

Also, a combined ball bearing in a fourth form of the fourth embodiment of the invention is characterized in that, in the third embodiment, the annular seals are in contact with at least one of the outer ring and the inner ring of the narrow width ball bearing.

Further, a double row ball bearing in a fifth form of the fourth embodiment of the invention is a double row ball bearing having a double row configuration of narrow width ball bearings, wherein each row has a ring portion on one side and a ball guiding snap cage having a required number of pocket portions for holding balls formed on the other side of the ring portion with the ring portion side thereof being opposed to the inside in the axial direction of the bearing, characterized in that the pocket portions have ball engaging portions, formed at the tip on the other side than the ring portion, for preventing the balls from coming off and, for the distance in the axial direction between the center of curvature of the pocket portions and the tips of the ball engaging portions, the value resulting from the addition of a gap in the axial direction between the pocket faces of the pocket portions and the balls to a gap in the axial direction between the ends of ring portions in two opposing cages in a state in which the centers of curvature of the pocket portions and the centers of curvature of the balls are made identical is set to be small.

Further, a double row ball bearing in a sixth form of the fourth embodiment of the invention is characterized in that, in the fifth form of the embodiment, the ball guiding cage is molded of a synthetic resin material.

Further, a double row ball bearing in a seventh form of the fourth embodiment of the invention is characterized in that, in the fifth or sixth form of the embodiment, the double row ball bearing has annular seals arranged on the end faces of the inner and outer rings in the axial direction on the other side than the ring portion side of the ball guiding cage with the balls in-between.

Further, a double row ball bearing in an eighth form of the fourth embodiment of the invention is characterized in that, in the seventh form of the embodiment, the annular seals are in contact with at least one of the outer ring and the inner ring of the narrow width ball bearing.

According to the fourth embodiment of the invention, in a duplex bearing combining two rows of narrow width ball bearings or a narrow width double row ball bearing, as the value resulting from the addition of a gap in the axial direction between the pocket faces of the pocket portions and the balls to a gap in the axial direction between the ends of ring portions in two opposing cages in a state in which the centers of curvature of the pocket portions and the centers of curvature of the balls are made identical is set to be small for the distance in the axial direction between the center of curvature of the pocket portions and the tips of the ball engaging portions, when the cages are moved in the axial direction by the inclination or the like of the inner and outer rings by a moment load, contact with the end faces of the cages of the other one of the combined bearings prevents the larger diameter portions of the balls from shifting beyond the ball engaging portions, resulting in the effect of enabling the balls and the cage to be securely prevented from coming off each other.

The forms of the fourth embodiment of the invention will be described below with reference to drawings.

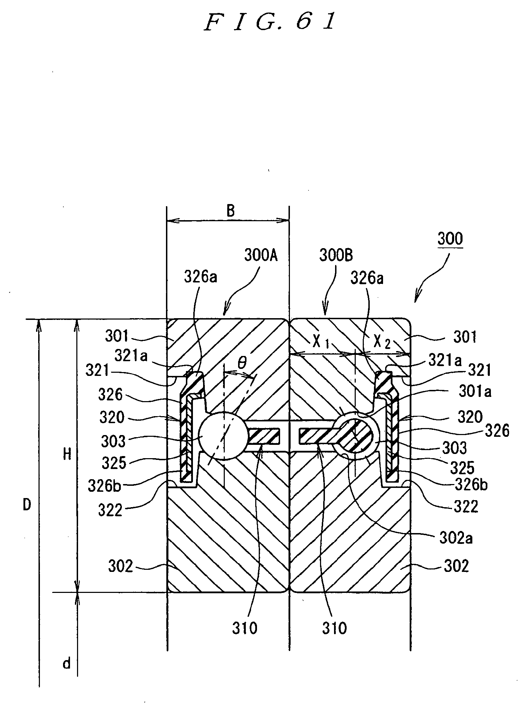

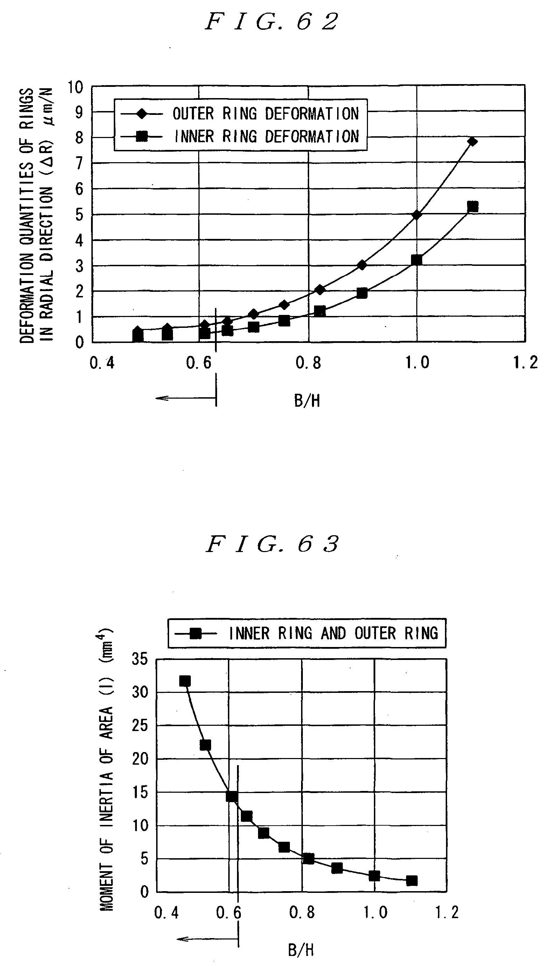

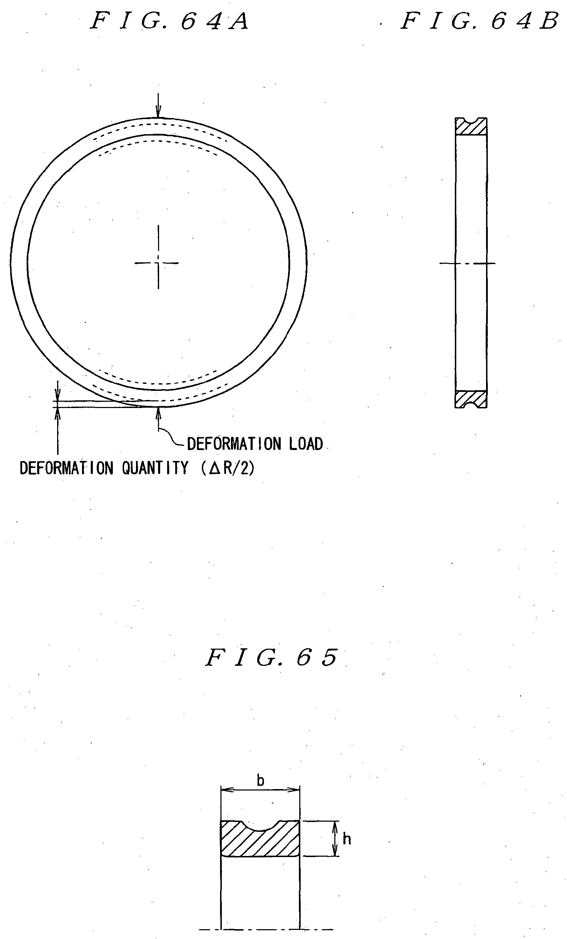

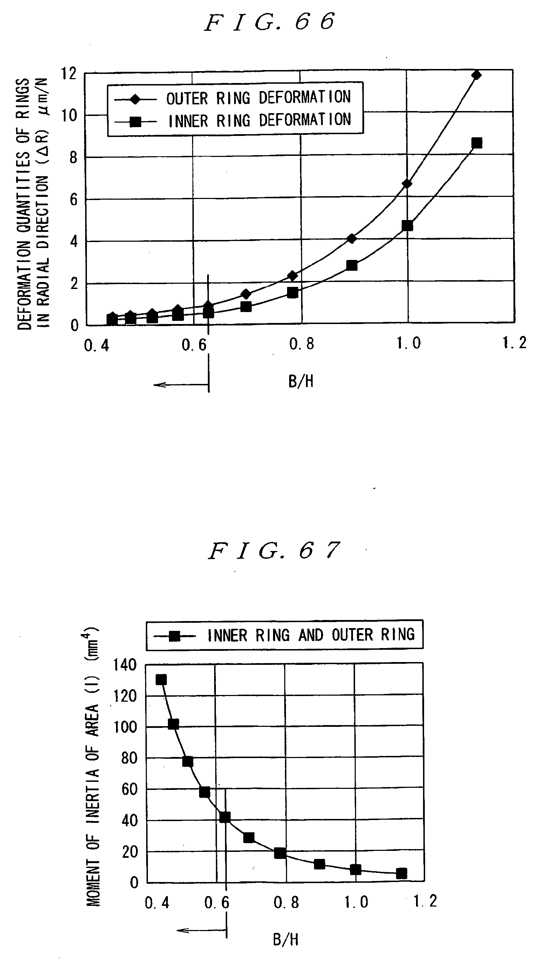

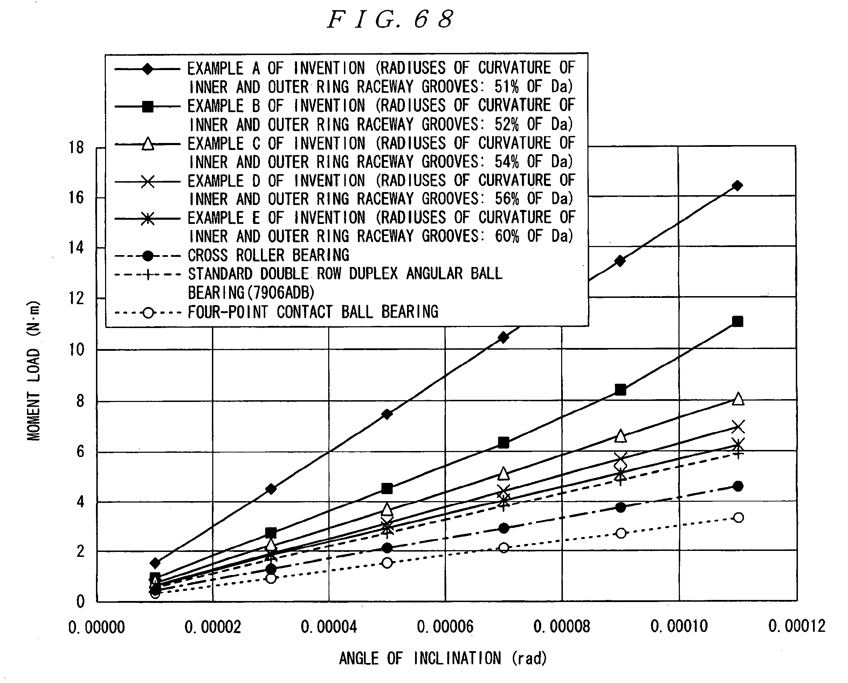

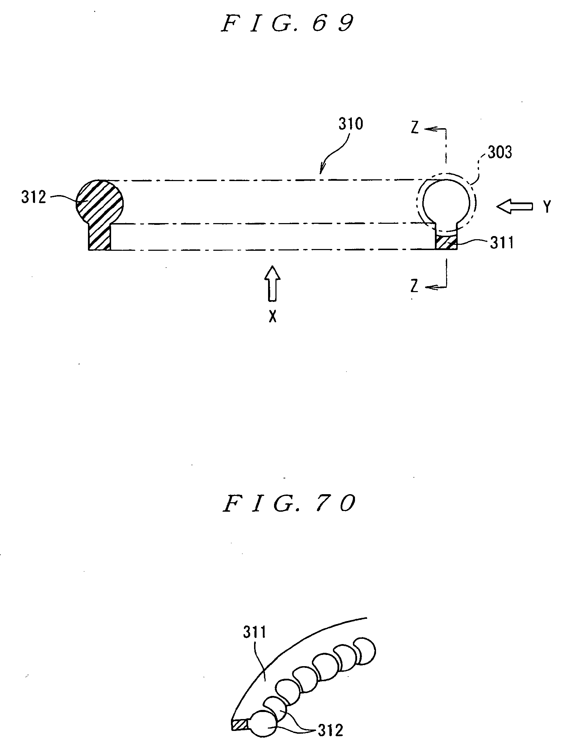

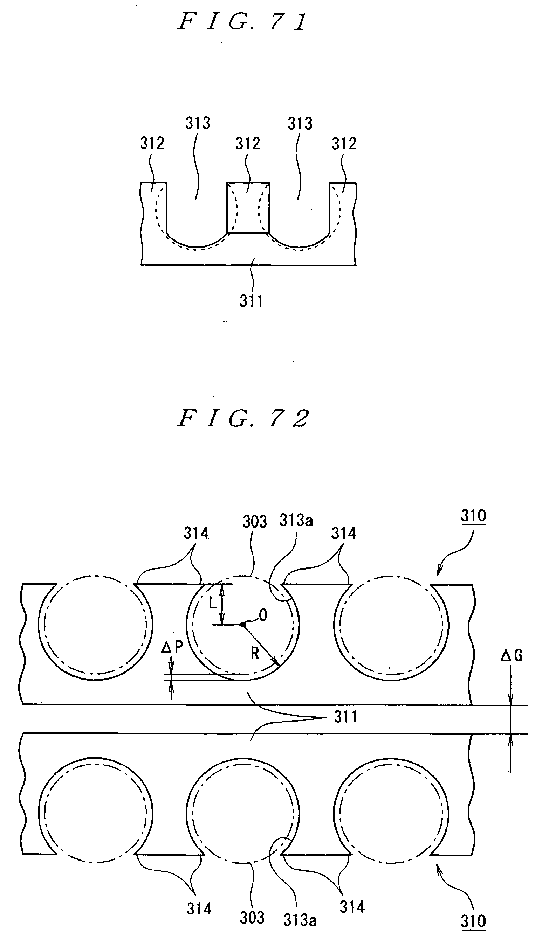

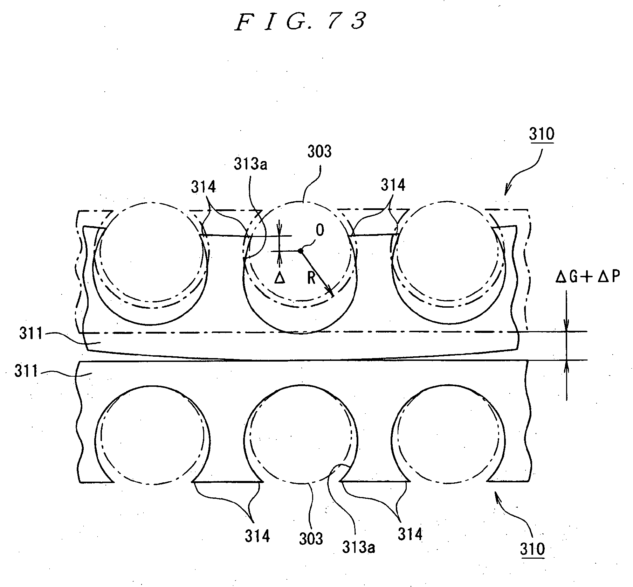

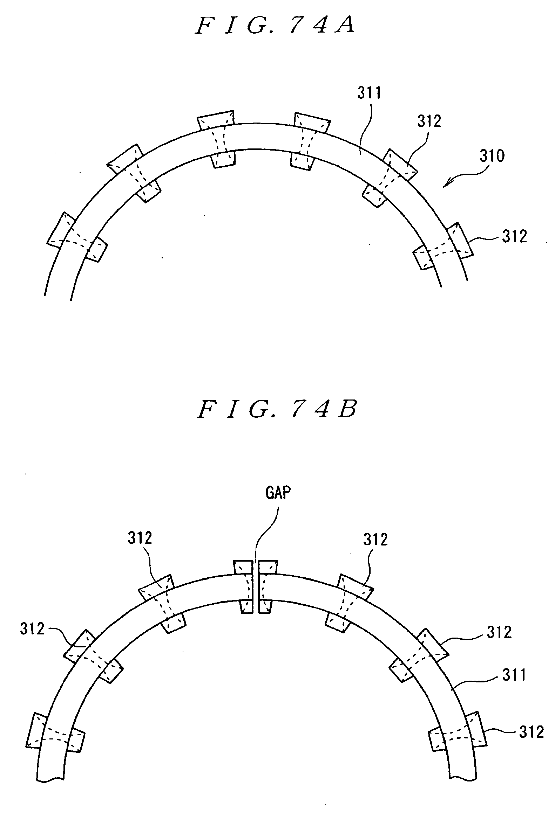

Figure 61 is a sectional view of the essential part of a state in which two rows of single row ball bearings are combined, which is the first form of the fourth embodiment of the invention; Figure 62 is a graph showing the relationship between the sectional size ratio (B/H) and the quantities of deformation of the inner and outer rings in the radial direction; Figure 63 is a graph showing the relationship between the sectional size ratio (B/H) and the moment of inertia of area I; Figures 64A and 64B illustrate the quantity of deformation of an inner ring in the radial direction; Figure 65 illustrates the method of calculating the moment of inertia of area of the inner ring; Figure 66 is a graph showing the relationship between the sectional size ratio (B/H) and the quantities of deformation of the inner and outer rings in the radial direction; Figure 67 is a graph showing the relationship between the sectional size ratio (B/H) and the moment of inertia of area I; Figure 68 is a graph comparatively showing the calculated moment stiffness values of various bearings; Figure 69 is a sectional view of a ball guiding cage; Figure 70 is a partial perspective view of the cage seen from inside in the radial direction; Figure 71 is an arrowed view seen in the direction of arrow Y in Figure 69; Figure 72 is a sectional view along line Z-Z in Figure 69; Figure 73 illustrates the action that takes place when the cage moves in the axial direction; and Figures 74A and 74B are arrowed views seen in the direction of arrow X in Figure 69.

The duplex bearing 100 according to the invention has, as shown in Figure 61, a configuration in which two single row angular contact ball bearings 300A and 300B are so combined back to back to form a contact angle opening down ward.

Each of the single row angular contact ball bearings 300A and 300B here, as shown in Figure 61, has a narrow width bearing configuration in which a large number of balls 303 are rotatably arranged between the raceway groove 301a of the outer ring 301 and the raceway groove 302a of the inner ring 302.

The material of the inner ring 302, the outer ring 301 and the balls 303 is supposed to be bearing steel (e.g. SUJ2 or SUJ3) under standard conditions of use, but an anticorrosive material, such as a stainless steel material (e.g. martensite type stainless steel such as SUS440C, austenite type stainless steel such as SUS304 or precipitation hardened stainless steel such as SUS630), a titanium alloy or a ceramic material (e.g. $S_{i3}N_4$, SiC, $Al_2O_3$ or $ZrO_2$), may as well be used depending on the environment of use.

There is no particular limitation regarding the lubricating method either, and mineral oil grease or synthetic (e.g. lithium- or urea-based) grease or oil can be used in a usual environment of use, and fluorine-based grease or fluorine-based oil, or a solid lubricant such as fluorine resin or $MoS_2$ can be used in a high temperature environment or the like.

The narrow width angular ball bearing is of a size fitting none of standard angular ball bearings prescribed by the International Organization for Standardization (ISO) (78xx, 79xx, 70xx, 72xx, 73xx series and so forth), a bearing of which the sectional size ratio (B/H) between the axially cut sectional width B and the radially cut sectional height H (= (outer ring outer diameter D-inner ring inner diameter d)/2) is (B/H) < 0.63.

The narrow width double row ball bearing is a narrow width double row angular contact ball bearing in which the sectional size ratio (B2/H2) between the axially cut sectional width B2 and the radially cut sectional height H2 (= (outer ring outer diameter D2-inner ring inner diameter d2) /2) is (B2/H2) < 1.2.

For instance, as a conventional ball bearing (an angular contact ball bearing of 30° in contact angle) 7208A measures φ40 mm in inner ring inner diameter, φ80 mm in outer ring outer diameter and 18 mm in the axially cut sectional width (width of single bearing) B, the sectional size ratio (B/H) = 0.9.

Therefore, in the angular contact ball bearings 300A and 300B in this embodiment, the sectional size ratio (B/H) = 0.45 (the inner ring inner diameter and the outer ring outer diameter being kept as they are, and the axially cut sectional width (width of single bearing) is set to be 9 mm). This makes it possible not only to bear a radial load, axial loads and moment load in both directions, but also to achieve 1/2 space saving in the axial direction size, to make possible replacement by single row 7208A, a reduction in torque and a further increase in stiffness.

Of course, it is acceptable to set, as required, the sectional size ratio (B/H) of the angular contact ball bearing 300 to less than 0.45 or above 0.45 (provided that (B/H) < 0.63).

The reason why B/H < 0.63 is set is as follows.

Figure 62 and Figure 63 show the results of comparison of the deformation characteristics in the radial direction of the inner ring and the outer ring when the inner diameter of the bearing is varied (namely when the value of (B/H) is varied) without changing the outer diameter of the bearing and the bearing width with reference to an ultra-thin wall ball bearing used as a standard item (the inner diameter of the bearing: φ38.1 mm, outer diameter of the bearing: φ47.625 mm, bearing width: 4.762 mm, aforementioned sectional size ratio (B/H) = 1) (see Figures 64A and 64B where the inner ring is shown) and the moment of inertia of area I of the section in the radial direction (see Figure 65: I = bh$^3$/12).

Figure 66 and Figure 67 also show the results of comparison of the deformation characteristics in the radial direction of the inner ring and the outer ring when the inner diameter of the bearing is varied (namely when the value of (B/H) is varied) without changing the outer diameter of the bearing and the bearing width with reference to an ultra-thin wall ball bearing used as a standard item (the inner diameter of the bearing: φ63.5 mm, outer diameter of the bearing: φ76.2 mm, bearing width: 6.35 mm, aforementioned sectional size ratio (B/H) = 1) and the moment of inertia of area I of the section in the radial direction.

Here is revealed a significant variation in the gradient of the stiffness increase rate where (B/H) is less than 0.63. Thus, the increase of the moment of inertia of area I becomes significant, and the decreases of the deformation quantities of the inner and outer rings in the radial direction become saturated.

Therefore, this embodiment enables deformation of the bearing by the machining forces of lathing or grinding at the time of inner and outer ring fabrication which poses problems with conventional ultra-thin wall bearings to be prevented, and the accuracy of bearings in such aspects as circularity and eccentric thickness to be enhanced.

Also, when assembled into a shaft or a housing (especially when assembled into a shaft or a housing by clearance fitting), the deformation of the inner and outer rings when the bearing is fixed with an inner ring keeper or an outer ring bearing cap (particularly the deterioration of its circularity) can be restrained, and increased heat generation, wear, seizure and other troubles in addition to torque defects and deterioration in rotation accuracy invited by the deformation can be prevented.

Incidentally, it is difficult for a single row ball bearing by itself to bear preloading or application of a moment load, but combination of two or more such bearings enables them to support a radial load, axial load and moment load.

Moreover, as each ball is in contact with the raceway groove of the inner or outer ring at two points all the time, this bearing can restrain the increase of torque due to large spins of balls as a four-point contact ball bearing does and, as it is less in rolling resistance than a cross roller bearing, can achieve a reduction in torque.

Furthermore, as the width is about half that of the conventional standard single row ball bearing, the ball diameter is about half that of the conventional ball bearing, and conversely the number of balls per row increases to make this bearing more rigid than the conventional ball bearing. Also, when it is used as the arm joint of a turning robot or the like, as the condition of rotation is predominantly rocking at low speed, even if the reduced ball diameter brings down the load capacity of the bearing, the rolling fatigue life time would pose no practical problem.

When used in other industrial machinery, the turning mechanisms or joints of robots, turntables or spindle turning mechanisms of machine tools, medical equipment, semiconductor/liquid crystal manufacturing equipment, and optical and optoelectronic equipment, the rolling fatigue life time would hardly pose any practical problem because these are applications in which the number of revolutions is low and only rocking is involved.

Figure 68 compares the calculated moment stiffness counts of different bearings. If the size is the same (the calculated cases have equal inner and outer diameters, corresponding to the bearing identification sign of 7906A (30° in contact angle): φ30 mm inner ring inner diameter and φ47 mm in outer ring outer diameter), in every one of examples A through E of the invention in which two row narrow width angular contact ball bearings in the first form of the fourth embodiment (30° in contact angle: a calculated case of all ball bearings) are used and the radiuses of curvature of the raceway grooves of the inner and outer rings (Da: ball diameter) are varied, the moment stiffness is greater than in cross roller bearings, standard double row duplex angular contact ball bearings and four-point contact ball bearings. For instance in example B of the invention, a moment stiffness level that is 2.4 times that in cross roller bearings, 1.9 times that in conventional standard double row duplex angular contact ball bearings and 3.3 times that in four-point contact ball bearings can be maintained.

Incidentally, the designed preload gap of each is calculated as a standard value for practical use to be - 0.010 mm for examples A through E of the invention, the standard double row duplex angular ball bearing and the four-point contact ball bearing, and -0.001 mm for the cross roller bearing.

To add, while the appropriate ball diameter for the narrow width ball bearings in this embodiment varies with the presence or absence of seals and some other items, an extreme reduction in ball diameter to increase stiffness would increase the facial pressure between the balls and the contact portions of the raceway grooves of the inner and outer rings to invite a drop in resistance to indentation; therefore, a range of approximately 30% to 90% of the bearing width (B) is desirable.

For the contact angle $\theta$, when a large moment load is applied, to suppress the riding of balls and groove contact portions of inner ring and outer ring over the groove shoulder of the inner ring and outer ring, it is generally not more than 60°, desirably not more than 50° and still more desirably not more than 40°, but less than 20° is unpreferable because it would bring down the permissible axial load and the permissible moment load.

In this embodiment, a ball guiding cage 310 for positioning the large number of balls 303 in the circumferential direction is arranged on the combining face side of the single row angular contact ball bearings 300A and 300B, and an annular seal 320 is arranged on the other side than the combining face.

The ball guiding cage 310, as shown in Figure 69 through Figure 71 for instance, has a flexible snap cage configuration provided with a ring portion 311, pillars 312 protruding in the axial direction in a plurality of positions at substantially equal intervals in the circumferential direction at one end of this ring portion 311, a large number of pocket portions 313 formed between the pillars 312 to hold balls 303 to be rotatable in the circumferential direction, and a pair of ball engaging portions 314 formed at the tips of these pocket portions 313 on the other side than the ring portion 311 to prevent the balls 303 from coming off. This cage 310 is fabricated of a synthetic resin material such as polyamide, polyacetal or polyphenylene sulfide or, as required, a material consisting of a synthetic resin to which a reinforcing material such as glass fibers or carbons fibers are added.

The ball guiding cage 310, as shown in Figure 61, is so arranged in the single row angular contact ball bearings 300A and 300B as the position the ring portion 311 on the combining face side.

Here, as shown in Figure 72, a value $\Delta G + \Delta P$ resulting from the addition of a gap $\Delta P$ in the axial direction between the pocket faces 313a of the pocket portions 313 and the balls 303 to a gap $\Delta G$ in the axial direction between the ends of the ring portions 311 in the two opposing cages 310 in a state in which the centers of curvature O of the pocket portions 313 and the centers of curvature of the balls 303 are made identical is set to be small for the distance L in the axial direction between the center of curvature O of the pocket portions 313 and the tips of the ball engaging portions 314 as represented by equation (7) below.

$$L > \Delta G + \Delta P \quad \ldots \quad (7)$$

This dimensional configuration prevents, when the cage 310 in one of the single row angular contact ball bearings, for instance 300A, is moved in the axial direction from the state shown by chain lines to the state shown by solid lines by the inclination or the like of the inner and outer rings by a moment load as shown in Figure 73, contact of its ring portion 311 with the ring portion 311 of the other one of the combined the single row angular contact ball bearings, 300B, prevents the larger diameter portions of the balls 303 from shifting beyond the tips of the ball engaging portions 314 (thus $\Delta$ in Figure 73 takes on a positive value), and the departure of the cage 310, namely the balls 303 coming off the pocket portions 313, can be securely prevented (thus an allowance equal to $\Delta$ in Figure 73 remains).

As the cages 310 of both angular contact ball bearings 300A and 300B here are revolving at substantially the same speed, the relative slip speed between the two cages 310 is extremely small and they are in contact with each other on flat planes, the contact portions are hardly susceptible to wear or rupture.

Although the foregoing configuration cannot be effective when the bearing is used in a single row, angular contact ball bearings are in most cases used in two or more rows because a single row is structurally impossible to bear an axial load in more than one direction, and therefore its frequency of application will be high when put into practice

By arranging the cages 310 in the combined bearings 300 to enable the relation of the foregoing equation (7) to hold, the balls 303 can be securely prevented from coming off the cages 310, and at the same time the scope of choice for the shape design of the ball engaging portions 314 of the cages 310 can be expanded to facilitate designing.

Further in this embodiment, with a view to increasing the load capacities and stiffness of the bearings, the pitch between adjoining balls 303 in the circumferential direction is shifted as far as practicable to the other side than the combining side end face (Figure 61: $X_1 > X_2$) to arrange the ring portions 311 of the cages 310 on the bearing combining end face side, so that an adequate distance between the moment working points for enhancing moment stiffness can be secured.

Figure 74B shows a crown-shaped cage similar in basic structure to that in Figure 74A, and in this configuration adjoining pocket portions 313 are cut in advance from each other at least one point of the ring portions 311 in the circumferential direction to leave a prescribed gap between each pair of cut faces.

The use of this structure provides, even if the differences among the cages and the inner and outer rings in thermal expansion coefficient and the fluctuations of the cages in dimensional accuracy and circularity invite a lag between the pitch diameter of the rolling bodies and the pitch diameters of the cages, the flexibility in the radial direction owing to the cantilever shape and the elastic deformation in the circumferential direction due to the gaps between the cut faces (flexibility in the circumferential direction) serve to buffer the thrusting force between the balls 303 and the pocket portions 313 to prevent the cages from being damaged and, at the same time, alleviate torque unevenness and heat generation due to slide contact resistance between the balls 303 and the inner faces of the pocket portions 313.

Also, as the all bearings according to the invention are smaller in the diameter of balls used for a structural reason, the thickness of the ring portions 311 of the cages 310 in the radial direction is limited (as can be understood from Figure 61, the cages have to be positioned with an appropriate gap left in the void part between the inner ring outer diameter and the outer ring inner diameter, and this void part between the inner ring outer diameter and the outer ring inner diameter is narrow as it is substantially proportional to the ball diameter), and moreover the narrow width structure limits the gap portion in the axial direction, obliging the thickness in the axial direction to be also compressed. For this reason, the ring portions of the cages are far smaller than those in the standard size bearings, making it difficult to ensure dimensional accuracy in circularity and other respects, and the cage structure in which the ring portions 311 are configured as illustrated in Figure 74B can be particularly effective in the aforementioned respects of preventing the cages from damage and wear and achieving reductions in torque unevenness and heat generation.

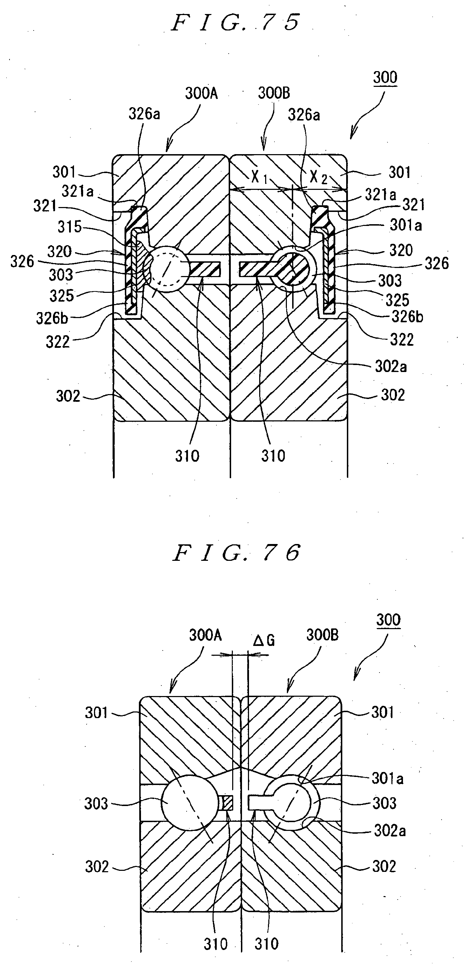

Next, as shown in Figure 75, the annular seal 320 has a configuration in contact with, or not in contact with, the inner ring 302 or the outer ring 301 matching the side into which this he annular seal 320 is inserted. This annular seal 320 is arranged via the ring portions 311 of the cages 310 of the two single row angular ball bearings 300A and 300B and the balls 303 to the end face portions of the inner and outer rings in the axial direction on the other side.

This annular seal 320 is accommodated in seal accommodating grooves 321 and 322 formed in the end face portions of the outer ring 301 and the inner ring 302 in the axial direction.

The annular seal 320 is a non-contact type seal (not in contact with the inner ring 302), which is press-inserted into a snap-in groove 321a formed in the seal accommodating groove 321 of the outer ring 301, and is composed of a reinforced type rubber seal (e.g. nitrile rubber, acryl rubber or fluorine rubber) 326 reinforced with an inverted L-shaped metal core bar 325.

The rubber seal 326 of the single row angular contact ball bearing 300A here has a snap-in portion 326a to be snapped into the snap-in groove 321a and an annular plate portion 326b extending from this snap-in portion 326a toward the inner ring 302 while curving outward in the axial direction. The rubber seal 326 of the single row angular contact ball bearing 300B forms a plane-symmetric shape with the rubber seal 326 of the single row angular contact ball bearing 300A with the combining face in-between.

. By forming the rubber seal 326 of the annular seal 320 in this way, an internal space capacity can be maintained between the annular seal 320 and the balls 303, and a considerable quantity of grease can be sealed in the vicinity of the balls 303 as shown in Figure 75. Further, as the distance between the balls 303 and the seal surface is short, the grease sticking to the seal can also be circulated to contribute to the lubrication of rolling contact portions.

On the combining face side of the single row angular contact ball bearings 300A and 300B, openings between the inner radial face of the outer ring 301 and the outer radial face of the ring portion 311 and between the outer radial face of the inner ring 302 and the inner diameter face of the ring portion 311 are narrowed by the ring portions 311 of the cages 310 to serve as a labyrinth mechanism, too. As a result, leaks of grease to the combining faces can be prevented to facilitate the handling of the bearing until the bearing is incorporated into a machine; in the configuration in the foregoing embodiment, after the incorporation of the bearing, the seal-fitted side constitutes the outer end face and the ring portion 311 sides of the cages 310 constitute the opposing faces of the two bearings, making it possible to securely prevent grease from leaking and foreign matter or dust from invading into the bearings.

Although the description of this embodiment referred to a case in which the two single row angular contact ball bearings 300A and 300B are combined back to back and the contact angle opens toward the bottom, the arrangement is not limited to this, but face-to-face combination in which the contact angle opens upward as shown in Figure 76 can also be used.

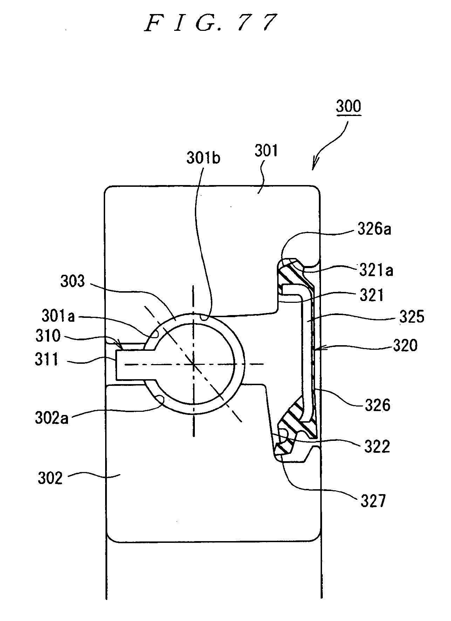

The foregoing description of this embodiment referred to a case in which the annular seal 320 is a non-contact type seal which is not in contact with the inner ring seal accommodating groove 322, but this is not the only possible configuration, and instead a contact type annular seal having a lip portion 327 which comes into contact with the inner ring seal accommodating groove 322 shown in Figure 77 or a metal seal which caulks the outer ring seal groove can be applied. Contrary to the foregoing form of implementation, it is also possible to form a structure in contact with or not in contact with the outer ring can be formed by snapping the annular seal 320 onto the inner ring 302 side.

While the pitch diameter of the balls 303 in the foregoing embodiment is supposed to be given by equation (8) below, if it is desired to further increase moment stiffness by increase the number of balls per row of bearing, the following equation (9) can be used to achieve a structure in which the pitch diameter of the balls 303 is shifted toward the outer ring or, as required the next equation (10) can be used to shift, conversely, the pitch diameter of the balls 303 toward the inner ring 302 (not shown).

$$\text{Pitch circle diameter of balls} = (\text{Inner ring inner diameter} + \text{outer ring outer diameter})/2 \qquad \ldots (8)$$

$$\text{Pitch circle diameter of balls} > (\text{Inner ring inner diameter} + \text{outer ring outer diameter})/2 \qquad \ldots (9)$$

$$\text{Pitch circle diameter of balls} < (\text{Inner ring inner diameter} + \text{outer ring outer diameter})/2 \qquad \ldots (10)$$

Also, as required, the pitch circle diameter may be differentiated between the right and left ball bearings to be combined or the diameter of the balls 303 may be differentiated between the right and left ball bearings to be combined. The sectional size ratio (B/H) of the two ball bearings to be combined need not be the same, but that of the bearing smaller in ball diameter may be (B/H) = 0.28 and that of the bearing larger in ball diameter may be (B/H) = 0.62 for instance. Further, the pitch of the balls 303 in the axial direction need not centered in the axial direction, but the pitch of the balls 103 in the axial direction may be shifted in the axial direction depending on the presence or absence of seal or cage or to secure an adequate distance between the moment working points among other purposes.

Further, though the foregoing embodiment provides for a combined angular contact ball bearing having a preload gap to increase moment stiffness, where the requirements for stiffness and accuracy are not so strict (where, conversely, an even lower torque or a low temperature rise is required), a combined angular contact ball bearing with a gap can be used as required.

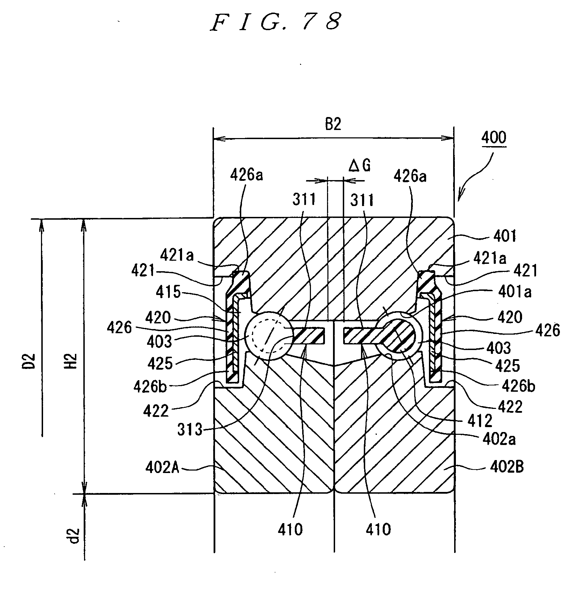

Next, a double row angular contact ball bearing which is the fifth form of the fourth embodiment will be described with reference to Figure 78.

In this double row angular contact ball bearing 400, a large number of balls 403 are rotatably held by a cage 410 between a double row raceway groove 401a of an outer ring 401 and raceway groove 402a of two inner rings 402A and 402B formed separately from each other, and the sectional size ratio (B2/H2) between the axially cut sectional width B2 and the radially cut sectional height H2 (= (outer ring outer diameter D2 - inner ring inner diameter d2)/2) is supposed to be (B2/H2) < 1.2.

The cage 410 here is supposed to be a crown-shaped cage having a similar configuration to the first embodiment described above; portions having their counter portions in the first embodiment will be designated by respectively the same reference signs, and their detailed description will be dispensed with; as shown in Figure 72 illustrated in the first embodiment described above, a value ΔG + ΔP resulting from the addition of a gap ΔP in the axial direction between the pocket faces 313a of the pocket portions 313 and the balls 403 to a gap ΔG in the axial direction between the ends of the ring portions 311 in the two opposing cages 310 in a state in which the centers of curvature O of the pocket portions 313 and the centers of curvature O of the balls 403 are made identical is set to be small for the distance L in the axial direction between the center of curvature O of the pocket portions 313 and the tips of the ball engaging portions 314 (L > ΔG + ΔP).

On the right and left sides in the axial direction of the outer ring 401 and the inner ring 402A and 402B, seal accommodating grooves 421 and 422 similar to those in the first embodiment are formed symmetrically between right and left, and an annular seal 420 is accommodated in these seal accommodating grooves 421 and 422 symmetrically between right and left.

This annular seal 420 is arranged on the end face portions of the inner and outer rings in the axial direction on the other side than the ring portions 311 of the cage 410 with the balls 403 in-between.

This annular seal 420 is a non-contact type seal (not in contact with the inner rings 402A and 402B), which is press-inserted into a snap-in groove 421a formed in the seal accommodating groove 421 of the outer ring 401, and is composed of a reinforced type rubber seal (e.g. nitrile rubber, acryl rubber or fluorine rubber) 426 reinforced with an inverted L-shaped metal core bar 425.

The rubber seal 426 has a snap-in portion 426a to be snapped into the snap-in groove 421a and an annular plate portion 426b extending from this snap-in portion 426a toward the inner rings 402A and 402B while curving outward in the axial direction.

Regarding this fifth embodiment here, a case in which the double row angular contact ball bearing 400 is replaced by a two row combined angular contact ball bearing of 7208A (30° in contact angle) will be considered by way of example.

As 7208A measures $\phi$40 mm in inner ring inner diameter, $\phi$80 mm in outer ring outer diameter and 18 mm in the axially cut sectional width (width of single bearing) B, the sectional size ratio (B/H) = 0.9. Therefore in the double row angular contact ball bearing 400 in this embodiment, the sectional size ratio (B2/H2) = 0.90 (the axially cut sectional width of the inner ring (width of single bearing) B2 is supposed to be 18 mm).

In this way, similar effects to the first form of the fourth embodiment can be achieved, making it possible not only to bear a radial load, axial loads in both directions and a moment load, but also to achieve 1/2 space saving in the axial direction size, a reduction in torque and a further increase in stiffness.

Of course, it is acceptable to set, as required, the sectional size ratio (B2/H2) less than 0.90 or above 0.90 (provided that (B2/H2) < 1.2).

As in the first form of the fourth embodiment described above, as the value resulting from the addition of a gap in the axial direction between the pocket faces of the pocket portions 313 and the balls 403 to a gap in the axial direction between the ends of ring portions 311 in two opposing cages 410 in a state in which the centers of curvature of the pocket portions 313 and the centers of curvature of the balls 403 are made identical is set to be small for the distance L in the axial direction between the center of curvature of the pocket portions 313 and the tips of the ball engaging portions 314, the balls and the cage are enabled to be securely prevented from coming off under the influence of the inclination or the like of the inner and outer rings by a moment load.

To add, in the fifth form of this fourth embodiment as well, the pitch diameter of balls may be shifted toward the outer ring outer diameter in the double row angular contact bearing or the ball diameter or the pitch diameter in each row may be varied in the double row angular contact ball bearing to enhance moment stiffness.

In every case, the structure and the presence or absence of annular seal 420, cage and the like and examples of structural application are similar to these aspects of the single row ball bearing in the first embodiment described above. Further, as in the first form of the fourth embodiment, whichever of the preloading or gaps can be used.

Industrial Applicability

By setting the sectional size ratio (B/H) between the axially cut sectional width B and the radially cut sectional height H is set to be (B/H) < 0.63 where it is a single row ball bearing or the sectional size ratio (B2/H2) between the axially cut sectional width B2 and the radially cut sectional height H2 (B2/H2) < 1.2 where it is a double row ball bearing, there can be provided a ball bearing for spindle turning device for use in the spindle turning device of a machine tool which not only can bear a radial load, a moment load and axial loads in both directions, but also can achieve higher accuracy (higher rotational accuracy), greater stiffness and reductions in torque and heat generation, and a further effect of space saving can be realized.

**Claims**

1. A ball bearing which is used in a spindle turning device (30) of a machine tool, the bearing being a single row ball bearing which is used in the spindle turning device (30) of a machine tool wherein a plurality of balls (103) are rotatably arranged between the raceway groove (101a) of an outer ring (75b, 101) and the raceway groove (102a) of an inner ring (73a, 102) wherein

   the sectional size ratio (B/H) between an axially cut sectional width B and a radially cut sectional height H is (B/H) < 0.63,

   **characterized in that** a seal accommodating groove (121, 122) is formed in at least one end face between the outer ring (73b, 101) and the inner ring (73a, 102), annular seals (120) are arranged in the seal accommodating grooves (121, 122), a cage (130) for positioning said plurality of balls (103) in the circumferential direction is arranged; in the cage a circular ring portion (132a, 132b) is formed on each side in the axial direction of a pocket (131) for holding the large number of balls; the circular ring portion (132a, 132b) has as the guide face thereof one of the outer circumferential face (102b) of the inner ring (102) and the inner circumferential face (101b) of the outer ring (101), and, in a position opposite the intersection edge (123) between the guide face and said seal accommodating grooves, a concave groove (133) for averting contact with the intersection edge (123) is formed in the circumferential direction.

2. A ball bearing according to claim 1, wherein
a concave step portion (73f) smaller in diameter than an inner ring groove shoulder (73c) is formed in at least a part in a circumferential direction of the inner ring (73a, 102) of the ball bearing (73A, 73B, 100);
a concave step portion greater in diameter than an outer ring groove shoulder (73d) is formed in at least a part in the circumferential direction of the outer ling (73b, 101) of the ball bearing (73A, 73B, 100;
the cage (130) having a pair of circular ring portions (132a, 132b) extending in an axial direction of the ball bearing (100) to interpose a pocket portion (131) for accommodating the plurality of balls (103;
the annular seal (120) made of rubber seal has a fitting portion (126a) fitted onto the outer ring (101) on an outer circumferential portion of the annular seal (120) and a lip portion (126b) in contact with the inner ring (102) on an inner circumferential portion of the annular seal (120);
the seal accommodating groove (121, 122) for accommodating the annular seal (120) has a fitting concave (121b) into which the fitting portion (126a) of the annular seal (120) is press-inserted and an accommodating concave (122b) with which the lip portion (126b) formed on the inner circumferential face of the annular seal (120) comes into contact; and
the concave groove (133) is formed in a circumferential direction of the cage (130) on an inner circumferential face, of the circular ring portion (132b), opposing an intersection edge portion (123) formed at an intersection between a cylindrical outer circumferential face (102b) of the inner ring (102) and the seal accommodating groove (122) to avoid contact between the circular ring portion (132b) and the intersection edge portion (123)

3. A ball bearing which is used in a spindle turning device of a machine tool, the bearing being a double row ball bearing wherein a plurality of balls are rotatably arranged between the raceway groove of an outer ring and the raceway groove of an inner ring, wherein
the sectional size ratio (B2/H2) between the axially cut sectional width B2 of the double row ball bearing and the radially cut sectional height H2 of the double row ball bearing is < 1.2, and wherein
a seal accommodating groove is formed in at least one end face between the outer ring and the inner ring;
annular seals are arranged in the seal accommodating grooves;
a cage for positioning said plurality of balls in the circumferential direction is arranged;
in the cage a circular ring portion is formed on each side in the axial direction of a pocket for holding the large number of balls;
the circular ring portion has as the guide face thereof one of the outer circumferential face of the inner ring and the inner circumferential face of the outer ring; and,
in a position opposite the intersection edge between the guide face and said seal accommodating grooves, a concave groove for averting contact with the intersection edge is formed in the circumferential direction.

**Patentansprüche**

1. Kugellager, welches in einer Spindelumkehreinrichtung (30) einer Werkzeugmaschine verwendet wird, wobei das Lager ein einreihiges Kugellager ist, welches in der Spindelumkehreinrichtung (30) einer Werkzeugmaschine verwendet wird, wobei mehrere Kugeln (103) drehbar zwischen der Laufbahnnut (101a) eines äußeren Rings (75b, 101) und der Laufbahnnut (102a) eines inneren Rings (73a, 102) angeordnet sind, wobei
das Querschnittsgrößenverhältnis (B/H) zwischen einer Axialschnitt-Querschnittsbreite B und einer Radialschnitt-Querschnittshöhe H (B/H) < 0,63 ist,
**dadurch gekennzeichnet, dass** eine Dichtungsunterbringungsnut (121, 122) in zumindest einer Endfläche zwischen dem äußeren Ring (73b, 101) und dem inneren Ring (73a, 102) ausgebildet ist, ringförmige Dichtungen (120) in den Dichtungsunterbringungsnuten (121, 122) angeordnet sind, ein Käfig (130) zum Positionieren der mehreren Kugeln (103) in der Umfangsrichtung angeordnet ist;
in dem Käfig ein kreisförmiger Ringabschnitt (132a, 132b) auf jeder Seite in der Axialrichtung einer Tasche (131) zum Halten der großen Anzahl von Kugeln ausgebildet ist; der kreisförmige Ringabschnitt (132a, 132b) als die Führungsfläche davon eine von der äußeren Umfangsfläche (102b) des inneren Rings (102) und der inneren Umfangsfläche (101b) des äußeren Rings (101) aufweist und, in einer Position gegenüberliegend der Schnittpunktkante (123), zwischen der Führungsfläche und den Dichtungsunterbringungsnuten eine konkave Nut (133) zur Vermeidung von Berührung mit der Schnittpunktkante (123) in der Umfangsrichtung ausgebildet ist.

2. Kugellager nach Anspruch 1, wobei

ein konkaver Stufenabschnitt (73f), der im Durchmesser kleiner als eine Innenringnutschulter (73c) ist, in zumindest einem Teil in einer Umfangsrichtung des inneren Rings (73a, 102) des Kugellagers (73A, 73B, 100) ausgebildet ist;

ein konkaver Stufenabschnitt, der im Durchmesser größer als eine Außenringnutschulter (73d) ist, in zumindest einem Teil in der Umfangsrichtung des äußeren Rings (73b, 101) des Kugellagers (73A, 73B, 100) ausgebildet ist;

der Käfig (130) ein Paar von kreisförmigen Ringabschnitten (132a, 132b) aufweist, die sich in einer axialen Richtung des Kugellagers (100) erstrecken, um einen Taschenabschnitt (131) zur Unterbringung der mehreren Kugeln (103) einzufügen;

die ringförmige Dichtung (120), die aus Gummidichtung hergestellt ist, einen Passabschnitt (126a) aufweist, der auf den äußeren Ring (101) auf einem äußeren Umfangsabschnitt der ringförmigen Dichtung (120) und einem Lippenabschnitt (126b) in Kontakt mit dem inneren Ring (102) auf einem inneren Umfangsabschnitt der ringförmigen Dichtung (120) gepasst ist;

die Dichtungsunterbringungsnut (121, 122) zur Unterbringung der ringförmigen Dichtung (120) eine Passkonkave (121b), in welche der Passabschnitt (126a) der ringförmigen Dichtung (120) unter Pressung eingesetzt ist, und eine Unterbringungskonkave (122b) aufweist, mit welcher der Lippenabschnitt (126b), der auf der inneren Umfangsfläche der ringförmigen Dichtung (120) ausgebildet ist, in Kontakt tritt; und wobei

die konkave Nut (133) in einer Umfangsrichtung des Käfigs (130) auf einer inneren Umfangsfläche des kreisförmigen Ringabschnitts (132b) gegenüberliegend eines Schnittpunktkantenabschnitts (123) ausgebildet ist, der an einem Schnittpunkt zwischen einer zylindrischen Außenumfangsfläche (102b) des inneren Rings (102) und der Dichtungsunterbringungsnut (122) ausgebildet ist, um Kontakt zwischen dem kreisförmigen Ringabschnitt (132b) und dem Schnittpunktkantenabschnitt (123) zu vermeiden.

3. Kugellager, welches in einer Spindelumkehreinrichtung einer Werkzeugmaschine verwendet wird, wobei das Lager ein doppelreihiges Kugellager ist, wobei mehrere Kugeln drehbar zwischen der Laufbahnnut eines äußeren Rings und der Laufbahnnut eines inneren Rings angeordnet sind, wobei

das Querschnittsgrößenverhältnis (B2/H2) zwischen der Axialschnitt-Querschnittsbreite B2 des doppelreihigen Kugellagers und der Radialschnitt-Querschnittshöhe H2 des doppelreihigen Kugellagers < 1,2 ist, und wobei

eine Dichtungsunterbringungsnut in zumindest einer Endfläche zwischen dem äußeren Ring und dem inneren Ring ausgebildet ist;

ringförmige Dichtungen in den Dichtungsunterbringungsnuten angeordnet sind; ein Käfig zum Positionieren der mehreren Kugeln in der Umfangsrichtung angeordnet ist;

in dem Käfig ein kreisförmiger Ringabschnitt auf jeder Seite in der Axialrichtung einer Tasche zum Halten der großen Anzahl von Kugeln ausgebildet ist;

der kreisförmige Ringabschnitt als die Führungsfläche davon eine von der äußeren Umfangsfläche des inneren Rings und der inneren Umfangsfläche des äußeren Rings aufweist; und

in einer Position gegenüberliegend der Schnittpunktkante zwischen der Führungsfläche und den Dichtungsunterbringungsnuten eine konkave Nut zum Vermeiden von Kontakt mit der Schnittpunktkante in der Umfangsrichtung ausgebildet ist.

**Revendications**

1. Roulement à billes qui est utilisé dans un dispositif de rotation d'une broche (30) d'une machine-outil, le roulement étant un roulement à billets à une rangée qui est utilisé dans le dispositif de rotation de la broche (30) d'une machine-outil, dans lequel une pluralité de billes (103) est disposée de manière mobile en rotation entre la rainure de chemin de roulement (101a) d'un anneau extérieur (75b, 101) et la rainure de chemin de roulement (102a) d'un anneau intérieur (73a, 102), dans lequel le rapport de dimension transversale (B/H) entre une largeur transversale en coupe axiale B et une hauteur transversale en coupe radiale H est (B/H) < 0,63, **caractérisé en ce qu'**une rainure abritant un joint (121, 122) est formée dans au moins une face d'extrémité entre l'anneau extérieur (73b, 101) et l'anneau intérieur (73a, 102), des joints annulaires (120) sont disposés dans les rainures abritant des joints (121, 122), une cage (130) pour positionner la pluralité de billets (103) est disposée en direction circonférentielle; dans la cage est formée une partie annulaire circulaire (132a, 132b) à chaque côté en direction axiale d'une poche (131) pour tenir le grande nombre de billes; la partie annulaire circulaire (132a, 132b) a comme face de guidage la face circonférentielle extérieure (102b) de l'anneau intérieur (102) ou la face circonférentielle intérieure (101b) de l'anneau extérieur (101), et, dans une position opposée au bord d'intersection (123) entre la face de guidage et les rainures abritant des joints, une rainure concave (133) pour éviter le contact avec le bord d'intersection (123) est formée en direction circonférentielle.

**2.** Roulement à billes selon la revendication 1, dans lequel

une partie d'étagement concave (73f), qui a un diamètre plus petit qu'un épaulement d'une rainure de l'anneau intérieur (73c), est formée dans au moins une partie en direction circonférentielle de l'anneau intérieur (73a, 102) du roulement à billes (73A, 73B, 100);

une partie d'étagement concave, qui a un diamètre plus grand qu'un épaulement d'une rainure de l'anneau extérieur (73d), est formée dans au moins une partie en direction circonférentielle de l'anneau extérieur (73b, 101) du roulement à billes (73A, 73B, 100);

la cage (130) ayant une paire de parties annulaires circulaires (132a, 132b) s'étendant en direction axiale du roulement à billes (100) pour interposer une partie de poche (131) pour abriter la pluralité de billes (103);

le joint annulaire (120), fait en joint de caoutchouc, a une partie de fixation (126a) fixée sur l'anneau extérieur (101) sur une partie circonférentielle extérieure du joint annulaire (120) et une partie de rebord (126b) en contact avec l'anneau intérieur (102) sur une partie circonférentielle intérieure du joint annulaire (120);

la rainure abritant le joint (121, 122) pour abriter le joint annulaire (120) a un évidement de fixation (121b) dans lequel la partie de fixation (126a) du joint annulaire (120) est emmanchée, et un évidement abritant (122b) avec lequel la partie de rebord (126b) formée sur la face circonférentielle intérieure du joint annulaire (120) vient en contact; et

la rainure concave (133) est formée en direction circonférentielle de la cage (130) sur une face circonférentielle intérieure, de la partie annulaire circulaire (132b), opposée à une partie bord d'intersection (123) formée à une intersection entre une face circonférentielle extérieure cylindrique (102b) de l'anneau intérieure (102) et la rainure abritant le joint (122), pour éviter le contact entre la partie annulaire circulaire (132b) et la partie bord d'intersection (123).

**3.** Roulement à billes qui est utilisé dans un dispositif de rotation d'une broche d'une machine-outil, le roulement étant un roulement à billes à double rangée dans lequel une pluralité de billes est disposée de manière mobile en rotation entre la rainure de chemin de roulement d'un anneau extérieur et la rainure de chemin de roulement d'un anneau intérieur, dans lequel

le rapport de dimension transversale (B2/H2) entre la largeur transversale en coupe axiale B2 du roulement à billes à double rangée et la hauteur transversale en coupe radiale H2 du roulement à billes à double rangée est < 1,2, et dans lequel une rainure abritant un joint est formée dans au moins une face d'extrémité entre l'anneau extérieur et l'anneau intérieur;

des joints annulaires sont disposés dans les rainures abritant des joints;

une cage pour positionner la pluralité de billes est disposée en direction circonférentielie;

dans la cage est formée une partie annulaire circulaire à chaque côté en direction axiale d'une poche pour tenir le grande nombre de billes;

la partie annulaire circulaire a comme face de guidage la face circonférentielle extérieure de l'anneau intérieur ou la face circonférentielle intérieure de l'anneau extérieur; et,

dans une position opposée au bord d'intersection entre la face de guidage et les rainures abritant des joints, une rainure concave pour éviter le contact avec le bord d'intersection est formée en direction circonférentielle.

*F I G. 1*

F I G. 2

# F I G. 3

F I G. 4

100    100

101    101

101a    101a
103    103

102a    102a
102    102

F I G. 5

101    101

101a    101a
103    103

102a    102a
102    102

## F I G. 6

## F I G. 7

*F I G. 8*

*F I G. 9*

*F I G. 1 0*

*F I G. 1 1*

# *F I G . 1 2*

# *F I G . 1 3*

*F I G. 1 4*

*F I G. 1 5*

*F I G . 1 6 A*

*F I G . 1 6 B*

EP 1 972 801 B1

# F I G . 1 7

42

# F I G . 1 8

# F I G. 1 9

# F I G. 2 0

*F I G. 2 1*

*F I G. 2 2*

FIG. 23

FIG. 24

47

## F I G. 2 5 A

## F I G. 2 5 B

DEFORMATION LOAD

DEFORMATION QUANTITY (△R/2)

## F I G. 2 6

b

h

## F I G. 2 7

## F I G. 2 8

*FIG. 29*

THIS INVENTED PRODUCT

CROSS ROLLER BEARING

MOMENT LOAD (N·m)

ANGLE OF INCLINATION (rad)

# FIG. 30

Legend:
- ◆ EXAMPLE A OF INVENTION (RADIUSES OF CURVATURE OF INNER AND OUTER RING RACEWAY GROOVES: 51% OF Da)
- ■ EXAMPLE B OF INVENTION (RADIUSES OF CURVATURE OF INNER AND OUTER RING RACEWAY GROOVES: 52% OF Da)
- △ EXAMPLE C OF INVENTION (RADIUSES OF CURVATURE OF INNER AND OUTER RING RACEWAY GROOVES: 54% OF Da)
- ✕ EXAMPLE D OF INVENTION (RADIUSES OF CURVATURE OF INNER AND OUTER RING RACEWAY GROOVES: 56% OF Da)
- ✳ EXAMPLE E OF INVENTION (RADIUSES OF CURVATURE OF INNER AND OUTER RING RACEWAY GROOVES: 60% OF Da)
- ●--- CROSS ROLLER BEARING
- +--- STANDARD DOUBLE ROW DUPLEX ANGULAR BALL BEARING(7906ADB)
- ○--- FOUR-POINT CONTACT BALL BEARING

Y-axis: MOMENT LOAD (N·m)

X-axis: ANGLE OF INCLINATION (rad)

EP 1 972 801 B1

*FIG. 31*

*FIG. 32*

FIG. 33

F I G. 3 4

FIG. 35

*F I G. 3 6*

*F I G.  3 7 A*

MOMENT LOAD

*F I G.  3 7 B*

MOMENT LOAD

*F I G. 3 8*

F I G. 3 9

*F I G. 4 0*

*F I G. 4 1*

## F I G. 4 2 A

## F I G. 4 2 B

DEFORMATION LOAD

DEFORMATION QUANTITY (△R/2)

## F I G. 4 3

b

h

## F I G. 4 4

## F I G. 4 5

# FIG. 46

*F I G. 4 7*

# F I G. 4 8

FIG. 49

F I G. 5 0

F I G. 5 1

F I G. 5 2

F I G. 5 3

F I G . 5 4

# F I G. 5 5

FIG. 56

FIG. 57

# F I G. 5 8

# F I G. 5 9

# F I G. 6 0

# F I G. 6 1

## F I G. 6 2

## F I G. 6 3

## F I G. 6 4 A

## F I G. 6 4 B

DEFORMATION LOAD

DEFORMATION QUANTITY ($\Delta R/2$)

## F I G. 6 5

b

h

*F I G.  6 6*

*F I G.  6 7*

FIG. 68

EP 1 972 801 B1

F I G. 6 9

F I G. 7 0

*FIG. 71*

*FIG. 72*

80

*F I G. 7 3*

**EP 1 972 801 B1**

*F I G . 7 4 A*

*F I G . 7 4 B*

82

# *F I G. 7 5*

# *F I G. 7 6*

F I G. 7 7

# F I G. 7 8

**EP 1 972 801 B1**

**Patent documents cited in the description**

- JP 2005239258 A
- WO 2004520944 A
- JP 10029125 A
- JP 2006105385 A
- JP 2004333588 A